# EUROPEAN PATENT SPECIFICATION

(11) **EP 2 991 041 B1**
(45) Date of publication and mention of the grant of the patent: **15.07.2020**
(21) Application number: 15182143.6
(22) Date of filing: 24.08.2015
(51) Int. Cl.: G07B 15/02, G07C 9/10

(54) **SECURE SHORT-DISTANCE-BASED COMMUNICATION AND ACCESS CONTROL SYSTEM**
SICHERE KURZDISTANZBASIERTE KOMMUNIKATION UND ZUGANGSKONTROLLSYSTEM
COMMUNICATION À BASE DE DISTANCE COURTE SÉCURISÉE ET SYSTÈME DE CONTRÔLE D'ACCÈS

(30) Priority: 25.08.2014 US 201414468188; 25.08.2014 US 201414468198; 25.08.2014 US 201414468202; 18.06.2015 US 201514743703; 18.08.2015 US 201514828825
(43) Date of publication of application: 02.03.2016
(73) Proprietor: Accenture Global Services Limited, Dublin 4 (IE)
(72) Inventor: RAINA, Sunil, Issaquah, WA 98027 (US); SOMANI, Avishek, Toronto, Ontario M5V0E9 (CA); CUDDIHEY, Alden, Kanata, Ontario K2K2N6 (CA); BUTLER, Scott Thomas, Oakville, Ontario L6M1H6 (CA); ARCHIBALD, Douglas Arthur Michael, Kanata, Ontario K2W1H1 (CA)
(74) Representative: Müller-Boré & Partner Patentanwälte PartG mbB

(56) References cited:
- US-A1- 2012 235 812
- US-A1- 2012 254 040
- US-A1- 2013 090 134

## Description

### BACKGROUND

For a variety of situations and reasons, it may be desirable to control people's access to an area of interest. For example, it is not uncommon to include a gate to block entrance to a parking lot or secured facility. In another example, mass transit systems, such as subways, often include some form of entrance control to enforce fare payment to ride the subway. Also, other places, like concert halls, stadiums, etc., still have conventional paper tickets, and people are employed to physically validate each individual ticket.

Controlling access to these areas is often automated. For example, a user has a card key, and a reader is installed at a gated entrance. To gain access to the area, the user inserts his card key into the reader or places it in very close proximity to the reader so the reader can read the card key. The information transmitted from the card key may be an ID and/or other information for the user and is processed through appropriate business rules to determine if the user is authorized to access the area. If the user is determined to be authorized, the gate is opened and the user is allowed access. In some systems, additional or different determinations are made to determine whether a user is granted access to the restricted area. For example, for mass transit systems, a determination is made as to whether the user has paid a fare or has sufficient funds in an account to pay a fare so it may be deducted after the user travels on the mass transit system.

It is a major inconvenience for the user to have to carry an additional card key and physically present the card key to the reader to gain access to the restricted area. To manufacture and disseminate the card keys for the systems is an expense. Furthermore, the security of conventional systems is not optimal. In conventional systems, security codes used to validate the card keys are often stored on readers, and encoded into the card keys. They are highly susceptible to hacking and as a result create a vulnerability of providing unauthorized access to restricted areas.

Document US2012/0254040 A1 relates to systems, methods, and devices for enabling wireless mobile devices to be automatically detected and used as fare media on vehicles in a transit and/or transportation system. This document includes detecting a wireless mobile device and utilizing a unique identifier of the wireless mobile device to track a transit user's entry to and exit from a transit vehicle. The document further includes causing the wireless mobile device to display a fare payment indicator, allowing the transit user to use the wireless mobile device to show proof of payment if so solicited by a fare inspector. A corresponding fare can be calculated and paid for in a variety of ways.

Document US2013/0090134 A1 relates to systems and methods for reducing power consumption of a mobile device in determining locations by determining if the mobile device is stationary; and if the mobile device is stationary, determining if the mobile device is in a zone with a known location and assign the known location as the location of the mobile device without involving a position determination system in the mobile device to reduce power consumption arising therefrom.

The present invention is defined by the subject-matter of the independent claims 1 and 7.

### BRIEF DESCRIPTION OF DRAWINGS

Features of the present disclosure are illustrated by way of examples shown in the following figures. In the following figures, like numerals indicate like elements, in which:
Figure 1 illustrates a secure short-distance-based communication and access control system, according to an example of the present disclosure;
Figure 2 shows an example of lanes that may be sub-locations of an entry point for a restricted area;
Figure 3 illustrates an example of an area of validation for a zone computer;
Figure 4 shows a high-level flow chart of a method performed by the secure short-distance-based communication and access control system, according to an example of the present disclosure;
Figure 5 shows additional details of the steps of figure 4, according to an example of the present disclosure;
Figure 6 illustrates a block diagram of the secure short-distance-based communication and access control system, according to an example of the present disclosure;
Figures 7 and 8 illustrate flowcharts of methods performed by a mobile device and zone computer in the secure short-distance-based communication and access control system, according to examples of the present disclosure;
Figure 9 illustrates a method for fare-based validation, according to an example of the present disclosure;
Figure 10 illustrates a secure short-distance-based communication and validation system, according to an example of the present disclosure;
Figures 11 and 12 show examples of zones in a validation area;
Figure 13 shows a high-level flow chart of a validation method that may be performed by the a secure short-distance-based communication and validation system, according to an example of the present disclosure;
Figure 14 shows additional details of the steps of figure 13, according to an example of the present disclosure;
Figure 15 illustrates a block diagram of the a secure short-distance-based communication and validation system, according to an example of the present disclosure;
Figures 16 and 17 illustrate flowcharts of methods performed by a mobile device and zone computer in the a secure short-distance-based communication and validation system, according to examples of the present disclosure; and
Figure 18 illustrates a method for fare-based validation, according to an example of the present disclosure;
Figure 19 illustrates a secure short-distance-based communication and enforcement system, according to examples of the present disclosure;
Figures 20 shows details of the steps for validation checks, according to an example of the present disclosure;
Figure 21 illustrates a block diagram of the a secure short-distance-based communication and validation system, according to an example of the present disclosure;
Figures 22 and 23 illustrate flowcharts of methods performed for validation and enforcement, according to examples of the present disclosure;
Figure 24 illustrates a method for enforcement, according to an example of the present disclosure;
Figure 25 illustrates a method for enforcement, according to an example of the present disclosure;
Figure 26 illustrates a method for validation, according to an example of the present disclosure; and
Figure 27 illustrates a block diagram of a system, according to an example of the present disclosure.

### DETAILED DESCRIPTION

For simplicity and illustrative purposes, the present disclosure is described by referring mainly to examples thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

A secure short-distance-based communication and access control system controls access to a geographic area. The system may be employed in an entry to a restricted area to control physical access to the area. The system employs low-powered beacons, such as Bluetooth beacons, IBEACON, Bluetooth enabled computers running an application in peripheral mode, a Bluetooth tag acting as a peripheral or the like, and zone computers at multiple sub-locations associated with accessing the restricted area. Individuals communicate through their mobile devices, which can execute an application for validation, such as fare payment, with the beacons and the zone computers to gain access to the restricted area. The system includes mechanical barriers that are actuated in response to electronic authentication and validation of an individual to allow access to the restricted area. In one example, the sub-locations are fare gate lanes. For example, as an individual walks into the restricted area, their mobile device will determine its location, for example, from beacons signals in its current vicinity and engage in validation with a local zone computer if the mobile device determines it is in an area of validation for the local zone computer. For example, the user's mobile device may use the beacons to verify the position of user, and once the position is verified, enable interaction with the correct zone computer to validate the user and open the gate. In another example, the zone computer may use the beacons to verify the position of the user, and once the position is verified, enable the local zone computer to initiate interaction with the mobile device to validate the user and open the gate.

The system facilitates secure communication through short-distance-based communication between the mobile devices and the zone computers and through on-the-spot unique identifiers generated by the mobile devices. The unique identifiers enable the secure communication between the mobile devices and the zone computers. Each unique identifier may be generated for a specific mobile device at its current location proximal to a zone computer. Unique identifiers may be determined or derived or calculated or computed from signals or broadcast packets received from the beacons for the current location of the mobile device. For example, the unique identifiers are unique to the current location and time of the mobile device when it transmits the unique identifiers to the zone computer associated with the sub-location where the mobile device is located. Also, a user's existing mobile device may be employed to gain access to the restricted area. For example, an access control application is loaded on the user's mobile device to enable access to the restricted area. Short-distance-based communication for message exchange between the mobile device and a zone computer is employed by the system so the user does not need to physically place a card key on a reader to access the restricted area. Instead, the mobile device may remain in the user's pocket or bag and engage in activation and validation processes with the zone computer and other external computers if needed to gain access to an area. Additionally, the system may include multiple lanes of access to the restricted area that are in close proximity but the system employs techniques to minimize or prevent cross-talk between mobile devices and zone computers in the multiple lanes to facilitate secure message exchange and validation of multiple users simultaneously in different lanes of entrance to the restricted area. The messages exchanged between the mobile device and the zone computer may be encrypted or enciphered or MACed using one or more encryption keys valid only for the current sub-location, mobile device and time. Also, an application running on the mobile device that facilitates security and other functions can easily be remotely updated over a network. However, smartcards do not support this feature. The secure communication, cross talk minimization, and application updating of the secure short-distance-based communication and access control system represent significant technical advantages over existing area access control systems.

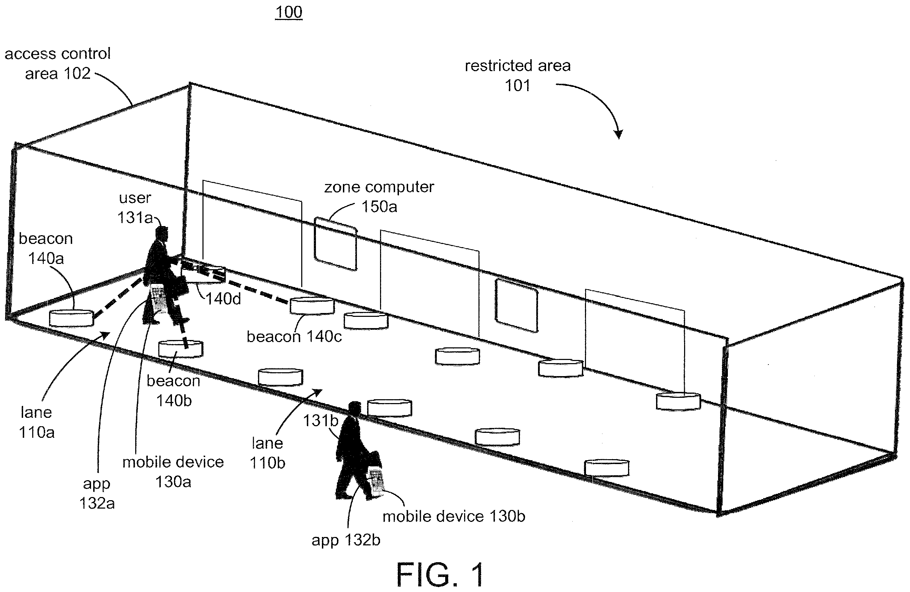

Figure 1 illustrates a secure short-distance-based communication and access control system 100, referred to as the system 100. The system 100 is employed at an access control area 102 for a restricted area 101. The restricted area 101 may be a geographic area or location. The geographic area may be a building, a room in a building, an area in an outdoor environment, or any geographic area that may be physically located in a physical structure, which may be stationary or mobile. The area 101 is referred to as "restricted" because access to the area is controlled by the system 100. The access control area 102 is the geographic area where access to the restricted area 101 is controlled by the system 100. For example, the access control area 102 is located at an entrance or exit to the restricted area 101. Controlling access to the restricted area 101 may include controlling entry to the restricted area 101 and/or exiting from the restricted area 101. Furthermore, the access control area 102 may be divided into a plurality of sub-locations, such as lanes 110, where validation occurs to allow or deny access to the restricted area 101. The plurality of sub-locations allows multiple users to be validated simultaneously.

The system 100 controls access to the restricted area 101 by authenticating and validating users trying to gain access to the restricted area 101. User refers to anyone or anything trying to gain access to the restricted area 101. Also, the system 100 may include or control physical barriers that are actuated or not actuated to allow or deny access to the restricted area depending on whether a user is authenticated and validated. Also, the system 100 is generally described as used at an entrance to the restricted area 101, but the system may be used at an exit to the restricted area or other locations.

The system 100 may include end user mobile devices 130 that can each run an access control application 132 to exchange information with beacons 140 and zone computers 150 to facilitate access control for the restricted area 101. The mobile devices 130 may include mobile devices 130a and 130b shown for users 131a and 131b respectively to illustrate that users can use mobile devices to gain entry to the restricted area 101. Of course, any number of individuals using mobile devices may be validated by the system 100 to gain access to the restricted area 101. Also, multiple beacons (like Bluetooth beacons, IBEACONS, Wi-Fi access points, etc.) 140, including beacons labeled 140a-d, and multiple zone computers 150, including zone computers labeled 150a-b, are shown, however, any number of beacons and zone computers may be included in the system 100 depending on various factors, such as how many users need to be processed simultaneously to control access to the restricted area 101. Each zone computer may be associated with a different sub-location in the access control area 102.

The beacons 140 are hardware that can broadcast beacon signals. The beacons 140 may be standalone devices or incorporated into another system. A zone computer may have a beacon. The beacons 140 broadcast beacon signals at a short distance, such as up to 10 meters or a much shorter distance, such as up to 4 centimeters. For example, the beacons 140 may be Bluetooth, Bluetooth Low Energy, or near-field communication beacons, or Wi-Fi and the range of each of these types of communication protocols is described below. The beacons 140 may be part of a local positioning system, such as IBEACONS, that are used to wirelessly determine the position of the mobile devices 130 inside the restricted area 101.

The mobile devices 130 may be any computer that a user may carry and that can run applications including the access control applications 132. Examples of the mobile devices 130 include mobile phones, tablets, wearable computers, such as GOOGLE glass or smart devices embedded into clothing, a smart watch, fitness tracker, or wireless enabled shoes, or some other type of mobile computer. The mobile devices 130 may include short-distance wireless communication interfaces that can wirelessly communicate with beacons 140 and zone computers 150 when in proximity to the beacons 140 and the zone computers 150. Also, in addition to receiving signals from the beacons 140, the mobile devices 130 themselves may operate as a beacon and broadcast a beacon signal or act as a peripheral, enabling services and/or characteristics, or act as a central and start searching for peripherals with certain services and/or characteristics and/or name and/or other unique identifiers. The mobile devices 130 may include a beacon. In one example, a short-distance communication interface in a mobile device can broadcast a beacon signal to initiate communication with a local zone computer as is further described below, and the beacon signal is dynamically generated. In one example, the short-distance wireless communication interfaces may include near-field communication (NFC) interfaces. NFC is a set of standards for smartphones and other mobile devices to establish radio communication with each other and other computers by touching them together or bringing them into close proximity. The close proximity may be a few inches or few centimeters (e.g., 4 centimeters). Other wireless interfaces may be used. For example, Bluetooth may be used and has a longer range, but may consume more battery power and is more susceptible to cross talk. In another example, Bluetooth Low Energy (BLE) or Bluetooth 4.0 or future versions of Bluetooth wireless interfaces may be used. BLE is a wireless technology that is intended to provide reduced power consumption when compared to Bluetooth but has a similar range to Bluetooth. The components of the system 100 may have one or multiple types of short-distance wireless interfaces, which may have ranges from a few centimeters to a few meters. In another example, the range is up to 100 feet. The zone computers 150 and beacons 140 include wireless interfaces to communicate with the mobile devices 130 and other computers as needed. As described above, examples of the wireless interfaces may include near field communication interfaces, Bluetooth communication interfaces and/or BLE communication interfaces but other short-distance wireless interfaces may be used. The zone computers 150 and mobile devices 130 may utilize other communication interfaces as well, which are wired or wireless and may be network interfaces, but communication between the beacons 140 and the mobile devices 130 and communication between the zone computers 150 and the mobile devices 130 for the system 100 may rely on short-distance wireless interfaces for communication with each other. The mobile devices 130 include a short-distance interface that matches the beacons signals broadcast from the beacons 140. So if the beacons 140 broadcast Bluetooth signals, the mobile device 130 at least include a Bluetooth interface to receive the signals, and so on.

The zone computers 150 validate the users 131 through their mobile devices 130. The zone computers 150 may include beacons but are not required to include the beacons. The zone computers 150 for example are validators. For example, a zone computer may be a fare payment device that can interact with a mobile device to deduct money or otherwise accept payment for a fare.

The beacons 140 may be embedded in a physical infrastructure, such as a housing for a lane-based entry system or a barrier-type infrastructure. The beacons 140 may broadcast a message every x milliseconds (ms), where x>1ms and may be less than 200ms but other intervals may be used and the intervals may depend on the environment and use case. The message may be a unique identifier (ID) or a set of unique IDs or a combination of generic IDs and unique IDs. In one example, at least one part of the ID is generic and the other part is unique. In one example, the ID may include a universally unique identifier (UUID) a major ID and/or a minor ID. For example, one of the identifiers is generic (e.g., UUID and/or the major ID) and may be the same for all beacons that belong to or are for a particular entity, such as for the same company or the same mass transit system, or may vary between different entities or restriction level within the same company or mass transit system, like different unique ID between rail, subway and bus, or different unique IDs between different floors within a secured facility. The other unique ID (e.g., minor ID) may help identify a particular location or sub-location. For example, the major ID may be the same for all beacons that belong to a particular location within the system, such as a specific rail station or a bus stop, or vary within the same location, such as different major ID for different entrances in a rail station. The minor ID may be different and unique to the beacon and can be associated with a particular sub-location within a location. For example, a minor ID may be for a particular lane at an entry point.) For example, figure 1 shows entrances for lanes 110a and 110b. one of the unique identifiers (e.g. minor ID) may be different but consecutive for the beacons 140a-d because they are for the same lane 110a or are for adjacent lanes, but, each beacon has one or more of the unique identifiers that are same (e.g. major ID) because they are for the same entry point, the same rail station and/or belong to the same entity, such as the same mass transit system. In another implementation, the unique identifiers may be assigned using a mathematical function, such that the mobile device or the zone computer can calculate the location and sub-location information from the unique identifiers broadcasted by the nearby beacons.

The mobile devices 130 listen for the broadcasts from the beacons 140, which may contain the unique identifiers for each beacon, or inputs from which the unique identifiers may be calculated or computed or derived or looked up in an internal data store. When a mobile device is in range of one or more of the beacons 140, unique identifiers received from the beacons at the mobile device may invoke a detection mode in the mobile device to determine whether the mobile device is at an entry point controlled by the system 100. For example, the mobile device determines whether it is in an entrance lane, such as the lane 110a or the lane 110b, for entering the restricted area 101. The unique identifiers, signal strength (such as received signal strength indicator (RSSI), transmission power, and/or received Power) of the beacon's broadcasts, broadcast zone, broadcast accuracy, azimuth and angle of the beacon (e.g., calculated from the received wireless broadcast) help identify the location of the mobile device. If the mobile device detects that it is in an area of validation, such as an entry point controlled by the system, it enables validation mode. This may involve the mobile device getting into a peripheral mode, wherein the mobile device may start sending message broadcasts over the wireless interface (e.g. Bluetooth 4.0), like a beacon. For example, the mobile device acts as a Bluetooth peripheral and advertises, broadcasts, transmits, and/or enables its services and/or characteristics using one or more of the unique IDs calculated above. The zone computer may use the unique IDs to identify the mobile device or the services/characteristics advertised, broadcasted, transmitted, and/or supported by the mobile device or the fare payment application on the mobile device. In another example, the zone computer broadcasts a services message indicating that it is available for validation and the mobile device ID calculated by the zone computer is included in the services message. The mobile device receives the services message, determines whether the mobile device ID in the services message matches the mobile device ID calculated by the mobile device, and if it does match, initiating a message exchange for authentication and validation.

In another example, the establishing of communication between a mobile device and a zone computer may include the zone computer scanning for a mobile device in range. The zone computer checks signal strength, etc. to determine if a mobile device falls within its sub-location. If so, the zone computer connects to the mobile device and then runs a service discovery to check for available services/characteristics of the mobile device. If the zone computer finds the services it is interested in, it continues or else disconnects with the peripheral (i.e., the mobile device). In yet another example, the mobile device determines a name (e.g., a local name) from information in a beacon signal and includes it in information broadcasted from the mobile device. The zone computer receives the broadcast and determines whether it includes the local name. If so, the zone computer determines that the mobile device is to be validated.

The zone computers 150 include computers that may be provided for each entry point or each sub-location at an entry point (e.g., each lane) for authentication and validation of users to access the restricted area 101. A zone computer may support one lane or may support multiple lanes. In one implementation, the zone computers 150 are looking for mobile devices which are broadcasting, advertising, and/or transmitting a specific unique ID or IDs and/or supporting services and/or characteristics with a specific unique ID or IDs, signal strength, location or a combination of them or all. Once a zone computer detects a mobile device that matches the criteria, the zone computer may connect to the mobile device via the wireless interface (e.g. Bluetooth 4.0 or BLE or future versions of Bluetooth, Wi-Fi, etc.) and may begin the authentication process, which may then be followed by the message exchange for validation. The zone computers 150 engage in message exchange and processes with the mobile devices 130 for validation for example after the mobile devices detect that they are at an entry point. For example, after the mobile device detects it is at an entry point or sub-location at an entry point, it may activate payment mode, which then results in a process to be executed to establish a secure communication channel between a mobile device and a zone computer through run-time key generation, which may be based on the unique user credentials, unique IDs of beacons and other information. Validation may include determining whether the user is allowed to enter the restricted area 101. In one example, validation may include fare-based validation, such as when payment of a fare is required to enter or exit the restricted area 101. Detection, secure message exchange and validation are described in detail below. The zone computers 150 may be provided locally at the sub-locations of an entry point. The zone computers 150 may be connected to a back-end server via the Internet or another wide area network to provide updates and perform other functions.

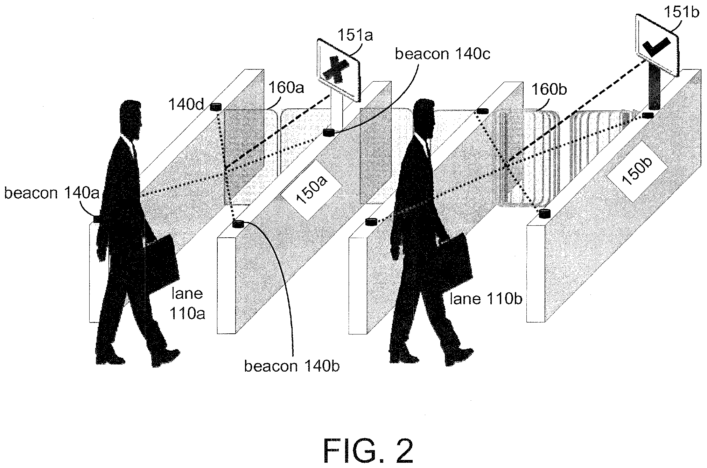

Figure 2 shows an example of the lanes 110 that may be sub-locations of an entry point for the restricted area 101. As shown in figure 2, the beacons 140 and/or the zone computers may be embedded in the physical structures of the lanes 110. The zone computers 150 may electronically control movable physical barriers 160. Each electronically-controlled movable physical barrier may be located in a different sub-location of a plurality of sub-locations of an access control area associated with the restricted area, such as gates 160a-b, to allow or deny access to the restricted area 101. Also, the zone computers 150 may be connected to displays 151, such as displays 151a-b, to provide indication to the user of whether they are approved to enter the restricted area or not. Other information may also be displayed. For example, an arrow indicates a lane is open. The check mark shown on the display 151b indicates a person is validated and the gate opens. If the person is not validated, the display may show an X, such as on display 151a, and may provide additional information, such as "See Attendant" or "Insufficient Funds" if the user's account does not have sufficient funds to pay a fare. Also, external systems may be invoked, such as to alert attendants or to automatically replenish funds in a user's account or change user's access privileges.

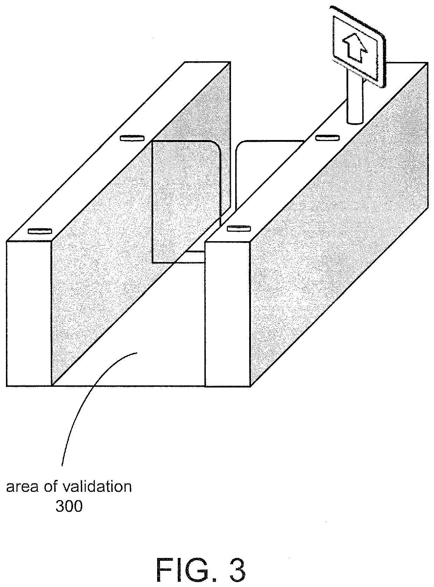

Figure 3 shows an area of validation 300 for a zone computer. For example, the area of validation is a sub-location, such as one of the lanes 110. A zone computer for the lane may determine whether a mobile device has entered the area of validation, which may be based on triangulation or other techniques. If the zone computer determines the mobile device is in the area of validation, the mobile device is validated to allow entry into the restricted area through the lane and gate. A secure communication channel is established for message exchange between the mobile device and the zone computer to facilitate validation, as is further described below.

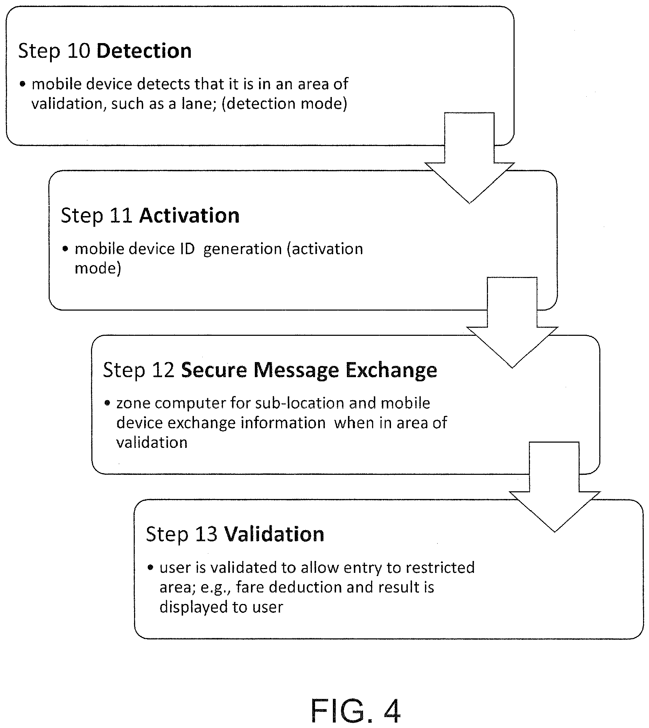

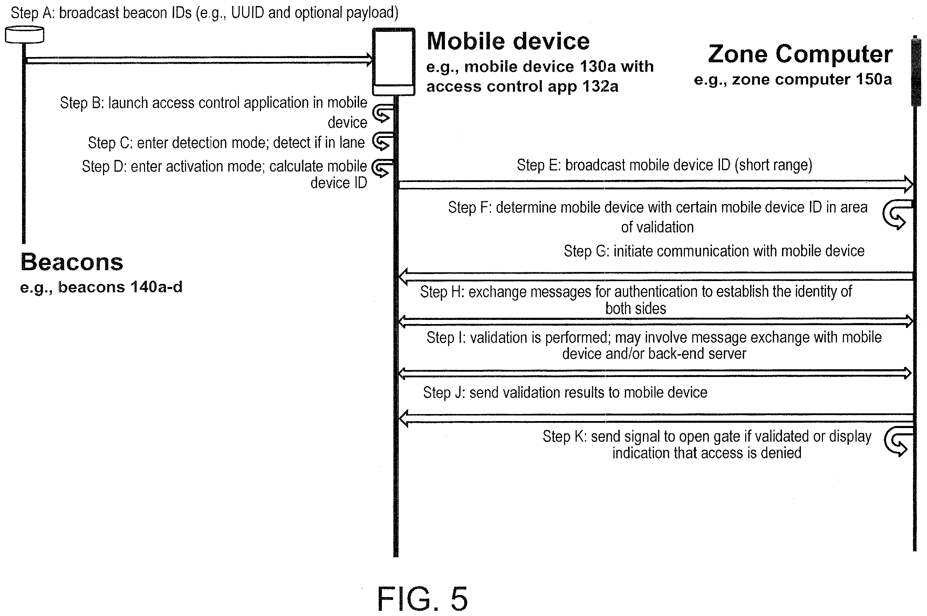

Figure 4 shows a high-level flow chart of steps performed by the system 100, and figure 5 shows additional details of the steps and the interaction between the various sub-systems of the system 100, including the mobile devices 130, beacons 140, and zone computers 150 that perform the steps according to an embodiment. Referring to figure 4, steps are shown for detection at step 10, activation at step 11, exchange at step 12 and validation at step 13.

At step 10, for detection, a mobile device determines whether it is in an area of validation (e.g. proximity to a zone computer for fare payment in a transit system) based on information received from beacons. Determining proximity to a zone computer (e.g., determining whether the mobile device is in the area of validation) may include determining whether the mobile device is within a valid distance to a beacon or a plurality of beacons associated with a zone computer, or determining whether the mobile device is in a sub-location in the entrance area, such as a lane, or an area of validation associated with a zone computer. For example, mobile device 130a shown in figure 2 receives a unique ID, e.g., including UUID, major ID and minor ID, from at least one of the beacons 140a-d when in range of the beacons 140a-d. The unique IDs of each beacons may be determined so that it can be used to identify its location, such as station, entrance location and/or lane number. The beacons may also transmit a small payload containing the location information or any other information that can help to calculate the location information.

In one example, triangulation-based detection is performed to determine whether the mobile device 130a is in a lane. For example, the access control application 132a running on the mobile device 130a registers for beacon notifications with a specific unique ID or IDs or part of the IDs, e.g. UUID and/or major ID and/or minor ID or a list of UUIDs and / or major IDs and/or minor IDs. For example, the UUIDs or the major IDs may be the same for all beacons provided by the same entity, such as all beacons for the same mass transit company or all beacons for the same rail station. So, for example, the major IDs in unique IDs broadcasted by the beacons 140 may be the same because they are for the same entity, rail station and/or entrance. The access control application 132a stores a list of UUIDs, major IDs and minor IDs that it may respond to. The mobile device 130a listens for broadcasted unique IDs from beacons. If the unique IDs of the beacon signals that are received are registered, such as stored in the list, the access control application 132a determines whether the mobile device is in an area of validation for a local computer, such as lane 110a. For example, in response to recognizing broadcasts from beacons 140a-d or at least two of the beacons, using algorithms like triangulation, the access control application 132a determines that it is within a predetermined distance (e.g., within 1 meter) to at least 2 of the beacons 140a-d. Thus, the access control application 132a determines that it is in a lane, such as lane 110a, and then proceeds to activation at step 111.

In another example, tap-based detection is performed. For example, the user lightly taps the mobile device 130a on or near beacons140a or at zone computer 150a if it also acts as a beacon. The range of the beacon may be tuned so that the mobile device 130a needs to be in close proximity to detect the beacon, such as within 3-4 centimeters, or the mobile device might take into consideration the signal strength, zone, accuracy and other factors of the beacon broadcast to determine the proximity with the beacons, and decide accordingly. If a beacon unique ID or IDs are received that are registered at the mobile device 130a, in response to the tapping or placement in close proximity to the beacon, the access control application 132a performs activation at step 11. In another example, an intent of the user to enter validation is determined for example based on measurable user actions performed on the mobile device, such as shaking the mobile device twice, audible command spoken into the mobile device, etc.

At step 11 shown in figure 4, during activation, a unique run-time ID or a set of unique run-time IDs are calculated for the mobile device 132a for future secure message exchange with the zone computer 150a, and a peripheral mode is activated on the mobile device. The mobile device advertises certain service or characteristics or both using the unique ID or IDs calculated above. The peripheral mode is entered to communicate with the zone computer associated with the current location of the mobile device 132a, which is zone computer 150a. Unique ID determination may vary depending on how detection was performed. For example, if triangulation-based detection was performed, the unique IDs (like major ID, minor ID and optional payload) from the beacons used for triangulation may be used to calculate the unique ID or IDs for the mobile device. If tap-based detection was performed, the unique ID or IDs may be calculated using the unique ID or IDs from the beacon that was tapped (e.g. major ID, minor ID and optional payload from the beacon that was tapped). The peripheral mode is enabled in the mobile device to communicate with the zone computer for the lane using the unique IDs for the services and/or characteristics. Examples of unique ID calculation functions are described below.

In one example, the unique ID or IDs for the mobile device (which may be used to determine the services, such as fare payment, and/or characteristics of the access control application and the mobile device) are calculated using the information received from the beacons and/or zone computer as the input. Thus, the unique ID or IDs are specific to the current location of the mobile device. The unique ID or IDs are not valid (or may not be valid) at a different location.

A unique ID calculation function may be used to calculate the unique ID or IDs for the mobile device from the information received from one or more beacons. An example of a unique ID calculation function is described below. Assume the following: Row= Minor ID/1000; Sequence = Minor ID %1000, whereby % represents the modulo operator; Location = Major ID/1000; and Sub-Location = Major ID%1000.

If triangulation-based detection was used at step 10, the following steps may be performed to calculate the unique ID or IDs for the mobile device. The detected beacons are sorted based on the signal strength (like RSSI, transmission power, received power, etc.) in descending order. Beacons may be filtered, e.g., removed from the list, if their received signal strength indicator does not fall within a predetermined value, or if they proximity is unknown or if the azimuth and angle doesn't meet predetermined requirements or a combination of these. For example, if the signal strength is too weak, such as determined by comparing the signal strength to a predetermined threshold, the corresponding beacon may be removed from the list. Then, the top "x" beacons from the list are identified where x >1. In one example, x is greater than or equal to 3. If a plurality of beacons from the top "x" beacons have the required signal strength, then, the major ID and minor ID are used to calculate the Row, Sequence, Location and Sub-location information from the beacon signals, which is in turn is used to generate the unique ID or IDs. Beacons in the same lane may have the same location, sub location and row value.

If tap-based detection was used at step 10, then the following is performed with all the beacons that are found in range. At step 1, the beacons are sorted based on signal strength, accuracy, etc. in descending order and the first beacon in the list is identified or they are sorted in ascending order and the last beacon in the list is identified. Checks on the azimuth, angle, distance, accuracy are performed to ensure the mobile device is in the desired proximity of the beacon. At step 2, the signal strength value for this beacon should be greater than or equal to a predetermined value, e.g., <= -30dB. At step 3, the row, location and sub-location information of the beacon is used to generate the unique ID or IDs.

One example of a unique ID calculation function for either tap-based detection or triangulation-based detection is: Unique ID = [Pre-defined Unique ID Part] + [Location] + [Sub location] + [Row]. In other examples, mathematical functions, such as a conventional hash function, RSA, etc., are employed that use these three values along with other values, to derive the unique ID or IDs. In other examples, mathematical functions can be used to determine these three values, which in turn become input to other mathematical functions to derive the unique ID or IDs. The input values may include current time, location, sub-location, row, sequence, etc.

At step 12 shown in figure 4, for message exchange, the mobile device and the zone computer at the sub-location, such as the zone computer for the lane, exchange information for validation. Regardless of the way detection and activation were performed, message exchange occurs in the same way. The zone computer determines whether the mobile device is within its area of validation if the mobile device is within range. Figure 3 shows an example of an area of validation for a zone computer. To determine whether the mobile device is within the zone computer's area of validation, the zone computer may use the distance, signal strength, the azimuth and angle of the mobile device relative to the zone computer or plurality of these options to determine the mobile device's location.

The zone computer initiates a connection with the access control application on the mobile device if the mobile device is in the area of validation and the mobile device is broadcasting or advertising or transmitting one or more unique IDs and/or has predetermined services and/or characteristics. Then message exchange may occur for validation. For example, the zone computer and the access control application on the mobile device may perform a mutual authentication to establish the identity of both sides. After authentication, data is exchanged between the access control application and the zone computer for validation. The zone computer and the access control application may request additional data resulting in multiple exchanges. In another example, the mobile device may initiate the connection with the zone computer and then engage in authentication and then validation. Authentication in either case may include determination of keys for secure communication.

At step 13 shown in figure 4, validation is performed. Validation may be performed the same way regardless of how detection was performed. For example, the zone computer makes a decision on whether the user is validated based on data exchanged with the mobile device, equipment operational data, and/or real-time services hosted on a backend. The equipment operational data may include fare rules (different fare types, concession types, fare validity window, etc.), transfer rules, location information (e.g., zone computer location), user ID information which may be compared to a user list to determine whether the user should be blocked from entry, etc. The real-time services may include fare payment to enter or exit the restricted area 101. In another example, the backend may store authorization information for individuals to determine whether the user is cleared to enter the restricted area 101. The decision of whether the user is validated is communicated to the user, such as through a display, such as display 151a shown in figure 2, or through the mobile device, or through an audio notification from the zone computer and/or mobile device, or a haptic feedback (vibration) on the mobile device. For example, the zone computer may send information to the access control application related to the validation decision and/or the user's account (e.g., new balance, transaction summary, etc.). The access control application may communicate the decision to the user using inbuilt features like haptic feedback, audio notification, visual notification, etc., based on user's preferences. Also, the gate is opened if the user is validated to allow entry or exit. Or in a case of an always open gate, the gate is closed if the user is denied entry or exit.

Figure 5 shows details of the steps of figure 4 and illustrates the interaction between the devices in the system 100 performing the steps. For example, assume user 131a is entering lane 110a and has mobile device 130a running access control application 132a, such as shown in figures 1 and 2. The mobile device 130a interacts with beacons 140a-d and zone computer 150a when performing the steps.

The beacons 140a-d periodically broadcast their unique IDs and optional payload indicating location. At step A, the mobile device 130a receives the broadcasts when in range. At step B, if the access control application 132a isn't already running, the access control application 132a is launched for example if the operating system of the mobile device 130a recognizes the unique IDs of the beacons as registered unique IDs. For example, beacon IDs that have a predetermined UUID, major ID and/or minor ID invoke launching of the access control application 132a. If tap based detection is used for the beacons, the access control application 132a may be launched if the user taps on or near a beacon and the unique IDs of the beacon is registered. At step C, the access control application 132a enters detection mode to determine whether it is in a lane, such as lane 110a. Detection may include tap-based detection or triangulation-based detection. After detecting the mobile device 130a is in lane 110a, the access control application 132a enters activation mode to calculate the unique ID or IDs based on information from the beacons and a message with the unique ID or IDs may be broadcasted or sent to a local zone computer, e.g., zone computer 150a, at step E. For example, a mobile device unique ID, which includes the calculated unique ID or IDs, is broadcasted by the mobile device 130a.The broadcast may be a short range broadcast, such as using BLE, Bluetooth 4.0.

At step F, the zone computer 150a receives the broadcasted message with the mobile device unique ID from the mobile device 130a assuming it is within range, the zone computer 150a validates that the broadcasted message contains the unique ID or IDs related to the sub-location and determines whether the mobile device 130a is within the area of validation of the zone computer 150a. An example of the area of validation is shown in figure 3, such as the lane 110a. The zone computer 150a uses the distance, signal strength and optionally the azimuth and angle of the mobile device 130a, which may be determined from the received message, to determine whether the mobile device 130a is in its area of validation. For example, in addition to receiving the message from the mobile device 130a, the zone computer 150a may receive a message from a mobile device around the lane 110b. However, the zone computer 150a determines that only the mobile device 130a is currently in its area of validation, i.e., lane 110a or has the correct unique ID or IDs. Accordingly, the zone computer 150a will only communicate with the mobile device 130a for validation at this instant.

At step G, if the mobile device 130a is determined to be in lane 110a, the zone computer 150a initiates communication with the mobile device 130a using the unique ID or IDs as a reference. For example, the zone computer 150a sends an acknowledgment message to the mobile device 130a that includes the mobile device unique ID so the mobile device 130a knows that the zone computer is ready to proceed to validation. In another example, the zone computer 150a may broadcast or transmit an acknowledgment message that is encrypted with a key to the mobile device 130a. Only the mobile device 130a can decrypt the acknowledgment message sent from the zone computer 150a because no other mobile device knows the key. In yet another example, the zone computer 150a and the mobile device 130a calculate the mobile device unique ID independently using the same inputs and the same function. For example, the inputs for the unique ID calculation function described above may be determined by the mobile device 130a and broadcasted or sent to the zone computer 150a with the mobile device unique ID. Both the zone computer 150a and the mobile device 130a store the same function for calculating the mobile device unique ID. The zone computer 150a also calculates the mobile device unique ID. The zone computer 150a determines if the received mobile device ID matches the calculated mobile device ID to determine whether to continue with the process, e.g., initiate communication, authentication and validation.

Mutual authentication is performed at step H. The mobile device 130a and the zone computer 150a may exchange messages for authentication to establish identities of both sides. The mutual authentication might result in a generation of a key or set of keys that are then used for further encryption, decryption, enciphering, deciphering, etc. A conventional key encryption algorithm may be used.

At step I, the zone computer 150a determines whether the mobile device 130a or its user 131a is validated. Validation may include exchanging messages with a backend server not shown and/or the mobile device 130a to get the information needed to perform validation. In one example, validation may include a fare payment determination and the zone computer 150a may determine whether the fare can be paid from a user account for the user 131a. At step J, validation results are returned to the mobile device 130a. At step K, the zone computer 150a sends a signal to open gate 160a for the lane 110a if the user 131a is validated. The signal may be an internal signal if the gate 160a is part of the system 100 or it may be transmitted to an external system if the gate 160a is part of an external system. If the validation is denied, the zone computer 150a can display an indication on the display 151a that access to the restricted area is denied. If the user 131a is validated, the zone computer 150a can display an indication on the display 151a that the they are approved to access (or exit) the restricted area.

After steps E and F are performed, keys may be used for secure communication. As described above, the keys may be used to encrypt or encipher the messages between the mobile device 130a and the zone computer 150a. Accordingly, the key may be used for secure communication between the mobile device 130a and the zone computer 150a. Also, the mobile device unique ID and/or the key are run-time. For example, they may be generated in real-time for the validation process and are only valid for the current time and location and for the particular mobile device. This provides additional security by improving the robustness of the key. In another example, MACing might be used to secure the communication between the mobile device 130a and the zone computer 150a. In another example, both encryption and MACing might be used to secure the communication between the mobile device 130a and the zone computer 150a.

At step I, validation may vary depending on whether information for validation is stored locally or stored in a backend server. For example, for a "stored value" system, information for validation is stored locally on the mobile device in a secure manner. For example, information, such as user profile, balance amount, passes and concession information are stored securely on the mobile device. In a "credential" systems, the information is stored on a backend server (e.g., the cloud), and the mobile device only stores credentials, such as user account number, and the information is retrieved from the backend server in real time for completing validation or enforcement of transactions.

The information for validation, whether a "stored value" or a "credential" system is being used, can be encrypted and stored within a local data storage in the mobile device. In one example, the mobile device may not have the encryption key to decrypt the information and only the zone computer or computers may have access to the encryption key (or keys) to decrypt the data. Additionally, the encryption key may be derived by the zone computer or a secure storage (like a secure access module (SAM) or hardware security module (HSM) or a secure element running applets, connected to the zone computer) using the user's information as one of the inputs. Also, the encryption keys with which the data is encrypted and passed encrypted to the mobile device may be changed every time the user tries to access a restricted area to prevent tampering with the data. The mobile device does not have access to the key which protects the data.

The information related to user's account may be stored inside a secure storage area inside the mobile device (like a secure element, a secure element micro secure digital card, a universal integrated circuit card, a secure area within the application processor, etc.). This may involve an additional authentication performed between the zone computer and the secure storage, establishing the identity of both sides, resulting which the information is shared by the secure storage with the zone computer via the validator mobile application.

Also, one or more keys may be used to encrypt the communication between the secure storage and the zone computer. Additional keys may be generated during mutual authentication, which are then be used for encryption for the current session only.

In another example, the information related to user's account is stored in the backend server and can be securely accessed and updated by either the mobile device or by the zone computers or both. The mobile device only stores the user's credentials which may be a user ID, account number, or a similar unique identifier which can be used to access the user's information from the backend server in real time.

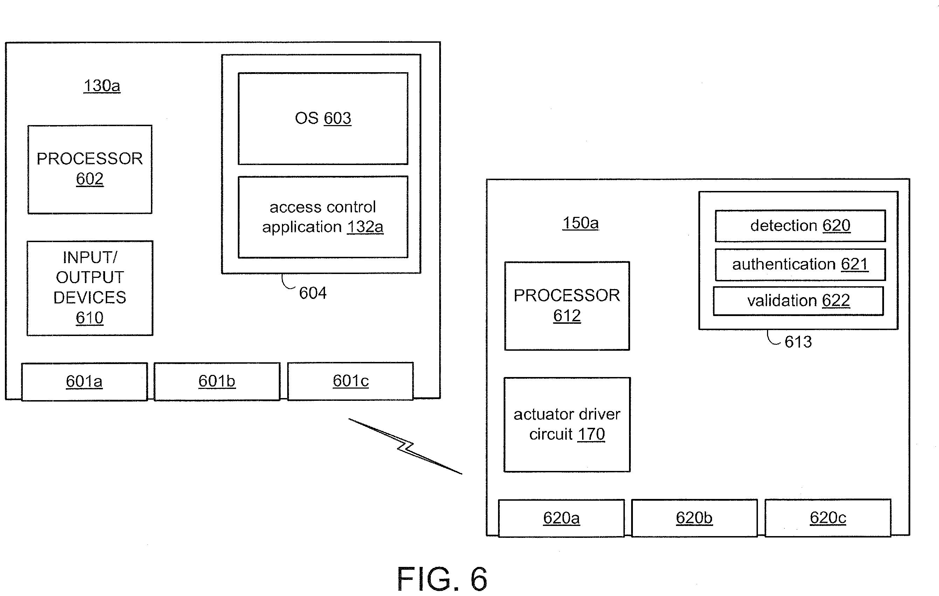

Figure 6 shows a block diagram of the mobile device 130a and the zone computer 150a in the system 100 but is representative of any of the mobile devices and the zone computers that may be used in the system 100.

The mobile device 130a may include multiple interfaces 601, wired or wireless, for communicating with other devices. For example, interface 601a may be a Wi-Fi interface or a cellular interface or may include both interfaces. 601b may include a Bluetooth interface. In one example, message exchanges between the mobile device 130a and the zone computer 150a are done through Bluetooth or Bluetooth 4.0 or BLE or future versions of Bluetooth but other interfaces may be used. Interface 601c may be a NFC interface, but the mobile device 130a may have both Bluetooth and NFC interfaces and multiple other interfaces. Interface 601b may be for communicating with the beacons140, for example, for triangulation-based or tap-based detection.

The mobile device 130a includes a processor 602 and data storage 604. The processor 602 for example is an integrated circuit. The processor 602 may be a chipset with central processing unit and/or custom processing circuits, such as an application-specific integrated circuit (ASIC) or field-programmable gate array (FPGA). The processor 602 may run an operating system (OS) 603 and applications, including access control application 132a, for the mobile device 130a. The OS 603 and the applications are stored in data storage 604. The mobile device 130a includes input/output (I/O) devices 610, such as keyboard, touch screen display, speaker, etc. The I/O devices 610 may provide audio, visual and/or tactile output to indicate whether a user has been validated and allowed access to the restricted area 101 or whether the user is denied access.

The zone computer 150a includes a processor 612 and a data storage 613. The processor 612 is an integrated circuit. The processor 612 may execute software or firmware or comprise custom processing circuits, such as an application-specific integrated circuit (ASIC) or field-programmable gate array (FPGA). The data storage includes software or firmware including machine readable instructions. The software or firmware may include subroutines or applications for detection 620, authentication 621 and validation 622. The detection 620 includes determining when a mobile device is in the area of validation for the zone computer 150. Authentication 621 and validation 622 are described above and are for authenticating the mobile device 130a before communicating with it and validating the mobile device 130a to allow or deny access to the restricted area 101. The zone computer 150a may include I/O devices or be connected to an I/O device, such as display 151a, to provide indication to the user of whether they are validated.

The zone computer 150a also includes multiple interfaces 620, wired or wireless, for communicating with other devices. For example, interface 620a may be a Wi-Fi interface or a cellular interface or may include both interfaces. 620b may include a Bluetooth or Bluetooth 4.0 or BLE interface. In one example, message exchanges between the mobile device 130a and the zone computer 150a are done through a Bluetooth but other interfaces may be used. 620c may be a NFC interface, but the mobile device 130a may have both BLE and NFC interfaces. The interfaces 620b and 620c are short-distance communication interfaces. A short-distance communication interface may have a communication range of few meters (e.g., Bluetooth or BLE) or centimeters (e.g., NFC). The range is generally much shorter than Wi-Fi or cellular. The short-distance communication interface may cover a sub-location or a sub-location and its adjacent sub-location. The zone computer 150a may connect via a network interface of interfaces 620 to a server backend via the Internet or another wide area network or a local area network for validation, which may include fare payment.

The zone computer 150a may include an actuator driver circuit 170 to control actuation of the physical barrier for the sub-location of the zone computer. In response to determining the user is validated, the zone computer 150a sends a signal to the actuator driver circuit 170 to invoke opening of the physical barrier, such as gate 160a, for the sub-location, such as lane 110a, of the zone computer 150a. For example, the processor 612 validates a user associated with the mobile device 130a and sends a signal to the actuator driver circuit 170. The actuator driver circuit 170 drives an actuator of the gate 160a to open the gate 160a. The processor 612 may also drive the circuit 170 to close the gate 160a. In one example, the global positioning system (GPS) sensor on the mobile device may be used to determine when the user enters and exits the mass transit system in order to determine the fare amount and open the gate 160a if the fare is paid when the user is exiting.

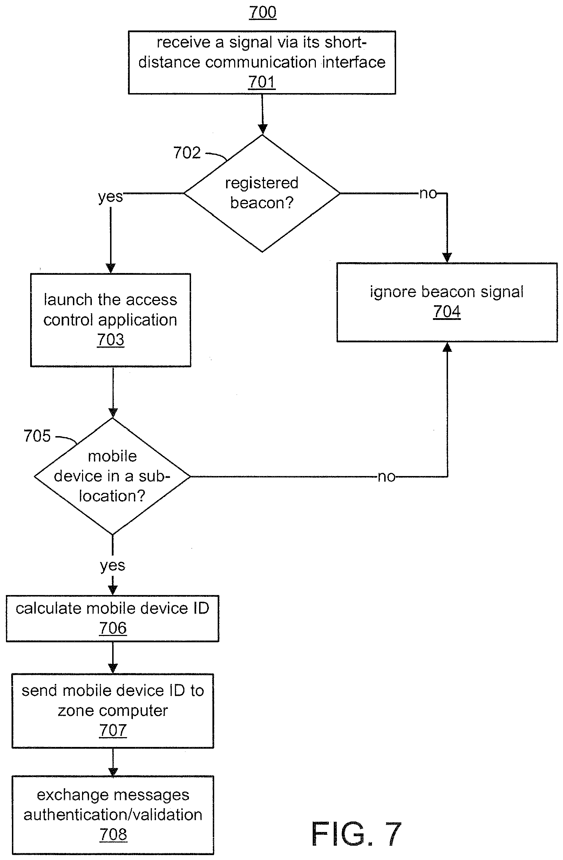

Figure 7 shows a flowchart of a method 700 that may be performed by a mobile device, such as the mobile device 130a, in the system 100. At 701, the mobile device 130a receives a signal via its short-distance communication interface, such as a Bluetooth, BLE or Bluetooth 4.0, interface. At 702, the mobile device 130a determines whether it is from at least one registered beacon. For example, the OS 603 running on the mobile device 130a determines whether the unique IDs, like UUID, major ID and/or minor ID received from a beacon or a plurality of beacons matches one or more registered unique IDs. At 703, if the beacon or beacons are registered beacons, the OS 603 launches the access control application 132a. If not, the received signals are ignored at 704.

At 705, the access control application 132a determines whether the mobile device 130a is in a sub-location, e.g., lane 110a, of the access control area 102. This may be determined by triangulation-based detection or tap-based detection as described above. If the mobile device 130a is determined to be in a sub-location, a mobile device ID is calculated based on information received from the one or more beacons at 706. The mobile device ID may be unique to the current location of the mobile device 130a when the mobile device ID is calculated and subsequently broadcasted in a message, which may be received by the zone computer 150a at 707 assuming it is within range. If the mobile device 130a is not determined to be in a sub-location, the signals from the beacons are ignored at 704. At 708, messages are exchanged with the zone computer 150a for the sub-location in a secure manner using one or more encryption keys via a short-distance communication interface (e.g., Bluetooth) to mutually authenticate each other and validate a user associated with the mobile device and to allow access to the restricted area through the sub-location if the user is validated.

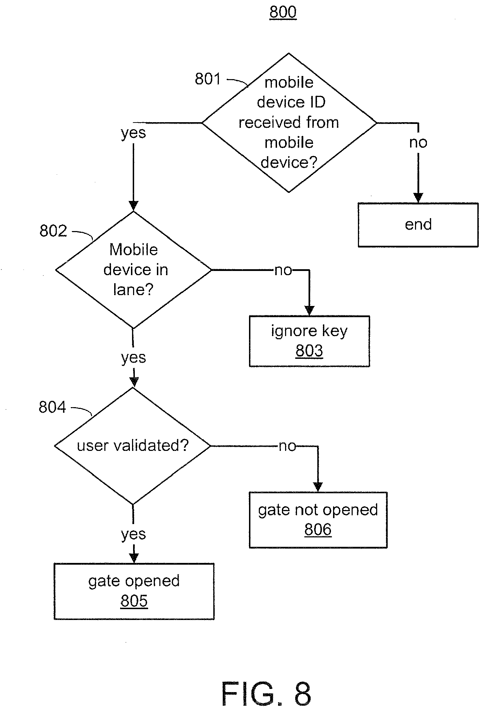

Figure 8 shows a flowchart of a method 800 that may be performed by a zone computer, such as the zone computer 150a, in the system 100. At 801, the zone computer 150a determines whether a mobile device ID is received in a message from the mobile device 130a via a short-distance communication interface of the zone computer 150a. If the mobile device ID is received, the zone computer 150a determines whether the mobile device 130a is in lane 110a at 802. If tap-based detection was used, the zone computer 150a can determine the proximity of the user to the lane 110a. Alternatively, the zone computer 150a may scan for all Bluetooth mobile devices in range looking for devices which expose certain services/characteristics, and determines a mobile device is in the lane 110a based on the signal strength, dwell time, accuracy, distance, azimuth, angle, etc.

At 803, if the mobile device 130a is not determined to be in lane 110a, the message is ignored. If the mobile device 130a is determined to be in lane 110a, the zone computer 150a determines whether a user associated with the mobile device 130a is validated to access the restricted area at 804. At 805, the zone computer 150a for example opens the gate 160a for lane 110a, and sends a message to the mobile device 130a that the user is validated if the user is determined to be validated. Otherwise, at 806, the gate 160a is not open and a message is sent indicating validation failure. Validation results may also be displayed on display 151a.

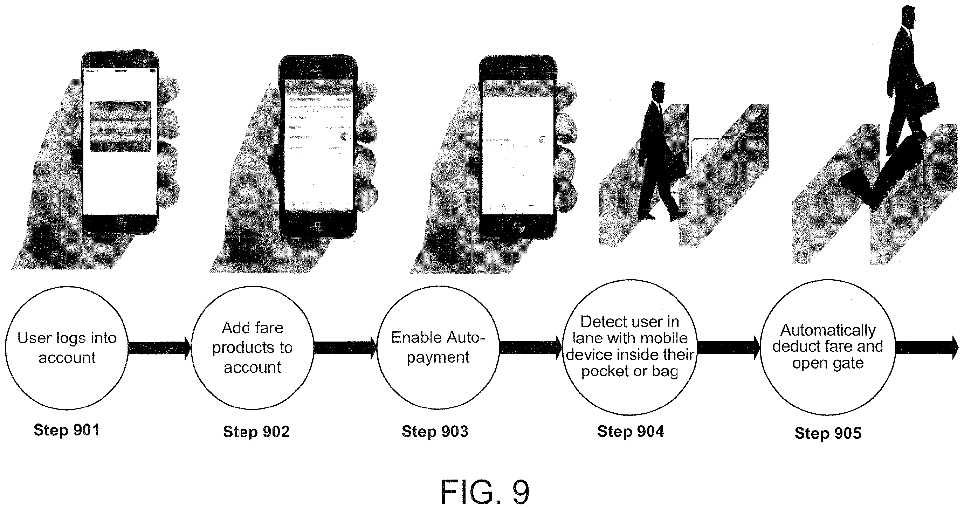

Figure 9 illustrates a method 900 for fare-based access control using the system 100. For example, validation and approval or denying entry or exit to a restricted area is based fare payment. The restricted area 101 for example provides a fare-based service, such as a subway or rail station that charges a fare to passengers that ride the train. Also, the access control application 132a includes modules to enable fare payment.

At 901, a user logs into their account. The user may have to create an account if they don't have one. The access control application 132a provides a graphical user interface on the mobile device 130a to receive a login ID and password and send the information to a backend server to log the user into their account. At 902, the access control application 132a adds fare products to the account based on user selections. Fare products includes any goods or services for which the user is authorizing payment. At 903, the access control application 132a enables auto-payment of the selected fare products in response to user input. At 904, the mobile device is detected in a fare-gate lane, such as lane 110a. Detection of the mobile device 130a in lane 110a to invoke validation is described in detail above. Validation is the payment of the fare in this example. The mobile device 130a may remain in the user's pocket or bag to invoke validation, which is more convenient for the user. At 905, the user's account is automatically deducted and the fare gate opens. The amount deducted is based on the fare scheme used by the transit entity, which may be based on distance, day pass, etc.

The systems described above may be modified and used in transit scenarios involving buses, trains, non-gated stations, or other non-gated environments where the individual does not pass through a turnstile or fare gate, according to an embodiment. Signals from the beacons may be used to determine the position of a user's mobile device before interacting with a zone computer to validate the user. For example, the validation area may be inside the vehicle or on a train station platform. The system determines whether the individual is in the validation area and settled inside the validation area, such as settled inside the bus or settled on the train station platform, before conducting validation, which may include fare payment. For example, an application running on a mobile device of the individual detects all available beacons and determines whether the individual is in a settled state before conducting validation, so that a passenger who accidently enters the vehicle, and immediately leaves is not improperly charged. Thus, the system includes mechanisms for preventing accidental fare deduction influenced by the beacons and zone computers.

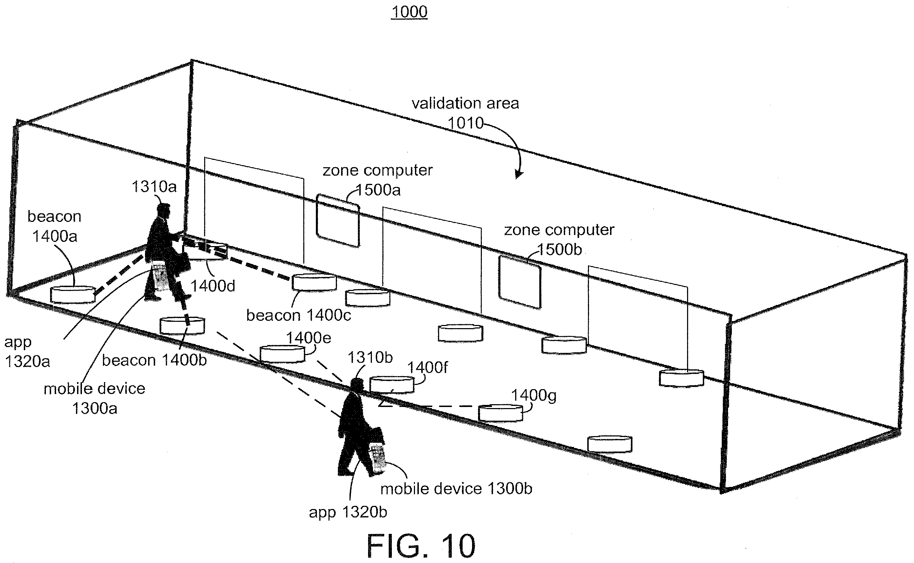

Figure 10 illustrates a secure short-distance-based communication and validation system 1000, referred to as the system 1000. The system 1000 is employed at validation area 1010. The validation area 1010 may be a geographic area or location and/or a physical structure that individuals can enter and exit. The physical structure may be a mobile structure, such as a vehicle (e.g., bus, train, car, airplane, etc.), or a stationary structure such as a building or some other type of stationary structure. Also, the validation area 1010 may or may not have physical structures to control entry or exit into validation area 1010. For example, a validation area 1010 may be an open area.

The system 1000 may be used for a non-gated environment or any area where individuals may be free to enter or exit and validation is performed if the individual is detected in the validation area 1010. For example, a mass transit system may not have a gate or physical barrier that is controlled depending on whether a fare is paid. For example, a user may enter a bus without restriction, i.e., all individuals at a bus stop can enter the bus. The system 1000 may be used to validate an individual after entering the bus without requiring the bus driver to interact with the individual. In another example, an individual may be allowed to enter a train station or train platform through a non-gated entry and allowed to enter the train. However, this individual is expected to purchase a ticket to ride the train. The system 1000 may be used to execute fare payment or to confirm that the ticket has been purchased without restricting access to the train or a train station through a gate or through another physical barrier.

Furthermore, the validation area 1010 may be divided into a plurality of sub-locations, also referred to as zones. Validation occurs in any of the zones in the validation area 1010. Multiple individuals can be validated simultaneously in each zone.

The area 1010 is referred to as validation area 1010 because individuals in the area are validated, for example, to determine whether they are approved to be in the validation area 1010 and/or to grant or deny approval of them being in the validation area. Accordingly, validation may include determining whether individuals in the validation area 1010 are approved to be in the validation area 1010 and/or granting or denying approval of being in the validation area 1010. Validation may be based on validation rules stored in the zone computers or a backend server or the mobile devices. In one example, validation may include paying a fare associated with the validation area, such as paying a fare for riding a bus, train or taxi. The validation rules may include rules to determine the amount of fare, such as whether the fare is based on distance or number of stops or whether a single fare is charged for any distance traveled, or based on other fare payment rules.

The system 1000 is for validating users or individuals in the validation area 1010. "Users" and "individuals" are generally used interchangeably in the present disclosure and refer to anyone or anything that is to be validated in a validation area.

The system 1000 may include end user mobile devices 1300 that can each run a validation application, shown as validation applications 132 for the mobile devices 1300, to receive information from beacons 1400 and exchange information with zone computers 1500 to facilitate validation in the validation area 1010. Mobile devices 1300a and 1300b are shown for users 1310a and 1310b respectively to illustrate that users can use mobile devices for validation in the validation area 1010. Of course, any number of individuals using mobile devices may be validated by the system 1000. Also, multiple beacons (like Bluetooth beacons, IBEACONS, Wi-Fi access points, etc.) 1400, including beacons labeled 1400a-d, and multiple zone computers 1500, including zone computers labeled 1500a-b, are shown, however, any number of beacons and zone computers may be included in the system 1000 depending on various factors, such as how many users need to be processed simultaneously in the validation area 1010. The beacons 1400 may be positioned at strategic locations inside the validation area 1010 to facilitate accurate detection of a user within the validation area 1010. The broadcast range, power and frequency of the beacons can be tuned per the environment. For example, the broadcast range of the beacons is tuned to cover the boundaries of their respective zones. For example, the beacons 1400 can broadcast towards the inside of their respective zone and may have a range to cover their zone but not much farther to prevent accidentally validating a mobile device that may be adjacent the validation area 1010 but not in it. Also, the validation applications 1320 running on the mobile devices 1300 can filter out the beacons below a specific power range or signal strength or angle or distance. Also, each of the zone computers 1500 may be associated with a different zone in the validation area 1010, and a mobile device in a zone can identify the zone computer for the current zone based on location information determined from signals received from the beacons in the zone.

The beacons 1400 are hardware that can broadcast beacon signals. The beacons 1400 may be standalone devices or incorporated into another system. A zone computer may have a beacon. The beacons 1400 broadcast beacon signals at a short distance, such as up to 10 meters or a much shorter distance, such as up to 4 centimeters. For example, the beacons 1400 may be Bluetooth, Bluetooth Low Energy, or near-field communication beacons, or Wi-Fi and the range of each of these types of communication protocols is described below. The beacons 1400 may be part of a local positioning system, such as IBEACONS, that are used to wirelessly determine the position of the mobile devices 1300 inside the restricted area 1010.

The mobile devices 1300 may be any computer that a user may carry and that can run applications including the access control applications 1320. Examples of the mobile devices 1300 include mobile phones, tablets, wearable computers, such as GOOGLE glass or smart devices embedded into clothing, a smart watch, fitness tracker, or wireless enabled shoes, or some other type of mobile computer. The mobile devices 1300 may include short-distance wireless communication interfaces that can wirelessly communicate with beacons 1400 and zone computers 1500 when in proximity to the beacons 1400 and the zone computers 1500. Also, in addition to receiving signals from the beacons 1400, the mobile devices 1300 themselves may operate as a beacon and broadcast a beacon signal or act as a peripheral, enabling services and/or characteristics, or act as a central and start searching for peripherals with certain services and/or characteristics and/or name and/or other unique identifiers. The mobile devices 1300 may include a beacon. In one example, a short-distance communication interface in a mobile device can broadcast a beacon signal to initiate communication with a local zone computer as is further described below, and the beacon signal is dynamically generated. In one example, the short-distance wireless communication interfaces may include near-field communication (NFC) interfaces. NFC is a set of standards for smartphones and other mobile devices to establish radio communication with each other and other computers by touching them together or bringing them into close proximity. The close proximity may be a few inches or few centimeters (e.g., 4 centimeters). Other wireless interfaces may be used. For example, Bluetooth may be used and has a longer range, but may consume more battery power and is more susceptible to cross talk. In another example, Bluetooth Low Energy (BLE) or Bluetooth 4.0 or future versions of Bluetooth wireless interfaces may be used. BLE is a wireless technology that is intended to provide reduced power consumption when compared to Bluetooth but has a similar range to Bluetooth. The components of the system 1000 may have one or multiple types of short-distance wireless interfaces, which may have ranges from a few centimeters to a few meters. In another example, the range is up to 1000 feet. The zone computers 1500 and beacons 1400 include wireless interfaces to communicate with the mobile devices 1300 and other computers as needed. As described above, examples of the wireless interfaces may include NFC interfaces, Bluetooth communication interfaces and/or BLE communication interfaces but other short-distance wireless interfaces may be used. The zone computers 1500 and mobile devices 1300 may utilize other communication interfaces as well, which are wired or wireless and may be network interfaces, but communication between the beacons 1400 and the mobile devices 1300 and communication between the zone computers 1500 and the mobile devices 1300 for the system 1000 may rely on short-distance wireless interfaces for communication with each other. The mobile devices 1300 include a short-distance interface that matches the beacons signals broadcast from the beacons 1400. So if the beacons 1400 broadcast Bluetooth signals, the mobile device 1300 at least include a Bluetooth interface to receive the signals, and so on.

The zone computers 1500 validate the users 1310 through their mobile devices 1300. The zone computers 1500 may include beacons but are not required to include the beacons. The zone computers 1500 for example are validators. For example, a zone computer may be a fare payment device that can interact with a mobile device to deduct money or otherwise accept payment for a fare.

The beacons 1400 may include small computers that may be attached to or embedded in a physical infrastructure. The beacons 1400 may broadcast a message every x milliseconds (ms), where x>1ms and may be less than 200 ms but other intervals may be used and the intervals may depend on the environment and use case. The message may be a unique identifier (ID) or a set of unique IDs or a combination of generic IDs and unique IDs. In one example, at least one part of the ID is generic and the other part is unique. In one example, the ID may include a universally unique identifier (UUID) a major ID and/or a minor ID. For example, one of the identifiers is generic (e.g., UUID and/or the major ID) and may be the same for all beacons that belong to or are for a particular entity, such as for the same company or the same mass transit system, or may vary between different entities or restriction level within the same company or mass transit system, like different unique ID between rail, subway and bus. The other unique ID (e.g., minor ID) may help identify a particular location or sub-location. For example, the major ID may be the same for all beacons that belong to a particular location within the system, such as a specific rail station or a bus stop or vehicle, or vary within the same location, such as different major ID for different subway cars in the same train. The minor ID may be different and unique to the beacon and can be associated with a particular sub-location within a location. For example, a minor ID may be for a particular subway car or location within a particular subway car. In another implementation, the unique identifiers may be assigned using a mathematical function, such that the mobile device or the zone computer can calculate the location and sub-location information from the unique identifiers broadcasted by the nearby beacons.

The mobile devices 1300 listen for the broadcasts from the beacons 1400, which may contain the unique identifiers for each beacon, or inputs from which the unique identifiers may be calculated or computed or derived or looked up in an internal data store. When a mobile device is in range of one or more of the beacons 1400, unique identifiers received from the beacons at the mobile device may invoke a detection mode in the mobile device to determine whether the mobile device is in proximity to a zone computer in the validation area 1010. This is referred to as detection or detection mode. After detection, the mobile devices 1300 engage in activation and a peripheral mode to communicate with the local zone computer as is further described below.

The unique identifiers, signal strength (such as received signal strength indicator (RSSI), transmission power, and/or received Power) of the beacon's broadcasts, broadcast zone, broadcast accuracy, azimuth and angle of the beacon (e.g., calculated from the received wireless broadcast) help identify the location of the mobile device. If the mobile device detects that it is in a validation area, it enables validation mode. This may involve the mobile device getting into a peripheral mode, wherein the mobile device may start sending message broadcasts over the wireless interface (e.g. Bluetooth 4.0), like a beacon. For example, the mobile device acts as a Bluetooth peripheral and advertises, broadcasts, transmits, and/or enables its services and/or characteristics using one or more of the unique IDs calculated above. The zone computer may use the unique IDs to identify the mobile device or the services/characteristics advertised, broadcasted, transmitted, and/or supported by the mobile device or the fare payment application on the mobile device. In another example, the zone computer broadcasts a services message indicating that it is available for validation and the mobile device ID calculated by the zone computer is included in the services message. The mobile device receives the services message, determines whether the mobile device ID in the services message matches the mobile device ID calculated by the mobile device, and if it does match, initiating a message exchange for authentication and validation.

In another example, the establishing of communication between a mobile device and a zone computer may include the zone computer scanning for a mobile device in range. The zone computer checks signal strength, etc. to determine if a mobile device falls within its sub-location. If so, the zone computer connects to the mobile device and then runs a service discovery to check for available services/characteristics of the mobile device. If the zone computer finds the services it is interested in, it continues or else disconnects with the peripheral (i.e., the mobile device). In yet another example, the mobile device determines a name (e.g., a local name) from information in a beacon signal and includes it in information broadcasted from the mobile device. The zone computer receives the broadcast and determines whether it includes the local name. If so, the zone computer determines that the mobile device is to be validated.

The zone computers 1500 include computers that may be provided in the validation area 1010 for authentication and validation of users in the validation area 1010. A zone computer may support an entire validation area or a zone in the validation area.. In one implementation, the zone computers 1500 are looking for mobile devices which are broadcasting, advertising, and/or transmitting a specific unique ID or IDs and/or supporting services and/or characteristics with a specific unique ID or IDs, signal strength, location or a combination of them or all. Once a zone computer detects a mobile device that matches the criteria, the zone computer may connect to the mobile device via the wireless interface (e.g. Bluetooth 4.0 or BLE or future versions of Bluetooth, Wi-Fi, etc.) and may begin the authentication process, which may then be followed by the message exchange for validation. The zone computers 1500 engage in message exchange and validation processes with the mobile devices 1300 for authentication and validation after the mobile devices enter peripheral mode, which may be invoked after the mobile devices 1300 detect that they are in the validation area 1010 and that the mobile devices 1300 are settled. For example, a process is executed to establish a secure communication channel between a mobile device and a zone computer through run-time key generation, which may be based on unique user credentials, unique IDs of beacons and other information. Messages may be exchanged via the secure communication channel to perform validation. In one example, validation may include fare-based validation, such as when payment of a fare is required. The zone computers 1500 may be connected to a back-end server via the Internet or another wide area network to provide updates and perform other functions which may include validation-related functions.

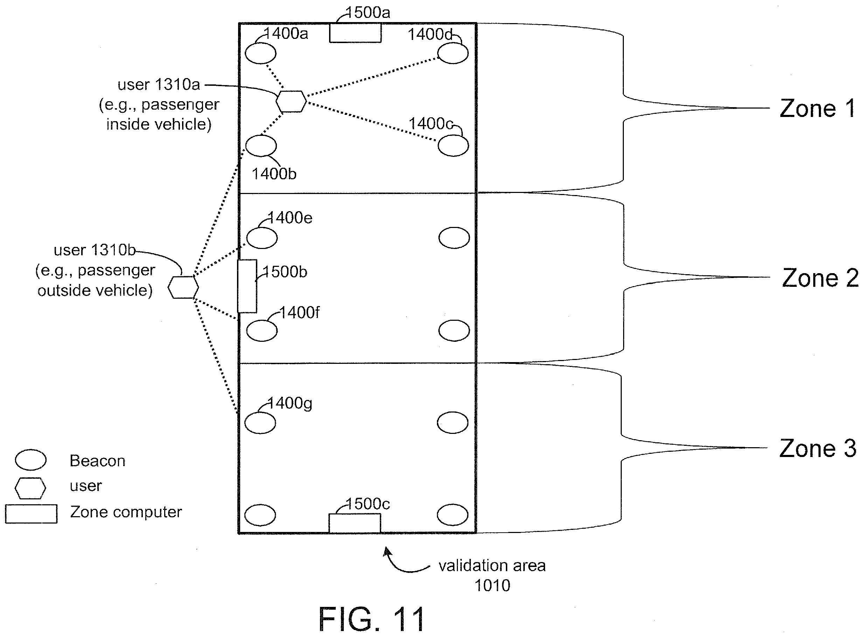

Figure 11 shows an example of a configuration of beacon placement in multiple zones 1-3 in the validation area 1010. The validation area 1010 may be inside a vehicle, such as a subway car. The subway car may have multiple zones 1-3, which may be adjacent doors to get in and out of the subway car. In this example, user 1310a is in zone 1, and user 1310b is outside zone 2 and outside the subway car (i.e., outside validation area 1010). When the user 1310a enters zone 1, the mobile device 1300a for the user 1310a receives the signals from beacons 1400a-d. The validation application 1320a running on the mobile device 1300a enters detection mode and detects that it is in a zone in the validation area 1010 and is in proximity to the zone computer 1500a. For example, the validation application 1320a uses the beacon information from signals received from the beacons 1400a-d to determine its location and calculate the passenger's position in zone 1. The beacon signals relative strength, angle, azimuth, etc. and the location information derived from the major ID or minor ID or carried in the payload of the signals are used to determine the precise location of the user 1310a. The precise location may indicate that the mobile device 1300a or the user 1310a is in zone 1 and may further identify an area within zone 1, such as a seat.

At the current location of user 1310b, the mobile device 1300b of user 1310b receives beacon signals from beacons 1400b and 1400e-g. The beacon signals relative strength, angle, azimuth, etc. and the location information derived from the major ID or minor ID or carried in the payload of the signals from beacons 1400b and 1400e-g are used to determine the precise location of the user 1310b. Based on this information, the validation application 1320b may determine that the user 1310b is outside the validation area 1010 and not enter peripheral mode. For example, the validation application 1320b may determine that the signals are from beacons assigned to different zone computers, such as zone computers 1500a-c. Also, from the signal strength, angle, and azimuth, the validation application 1320b may determine that the signals from beacons 1400b and 1400g have a signal strength below a threshold, and an angle and azimuth that are indicative of beacons associated with different zones and different zone computers. Thus, the validation application 1320b may ascertain that the closest beacons are beacons 1400e-f. The validation application 1320b may further determine that since it is not receiving signals, or receiving signals that are too weak, from for example at least three or all four beacons for the same zone, that it is outside the validation area 1010. Therefore, the validation application 1320b does not enter peripheral mode and does not engage in validation.

Also, the zone computers 1500 may be connected to displays (not shown) to provide indication to the user of whether they are validated or not. For example, zone computer 1500a may display a message indicating user 1310a is validated. If multiple users are in the zone, a user ID may be displayed along with an indication of whether the user is validated. For example, a check mark indicates a person is validated. If the person is not validated, the display may show an X, and may provide additional information, such as "See Attendant" or "Insufficient Funds" if the user's account does not have sufficient funds to pay a fare. Also, external systems may be invoked, such as to alert attendants or to automatically replenish funds in a user's account.

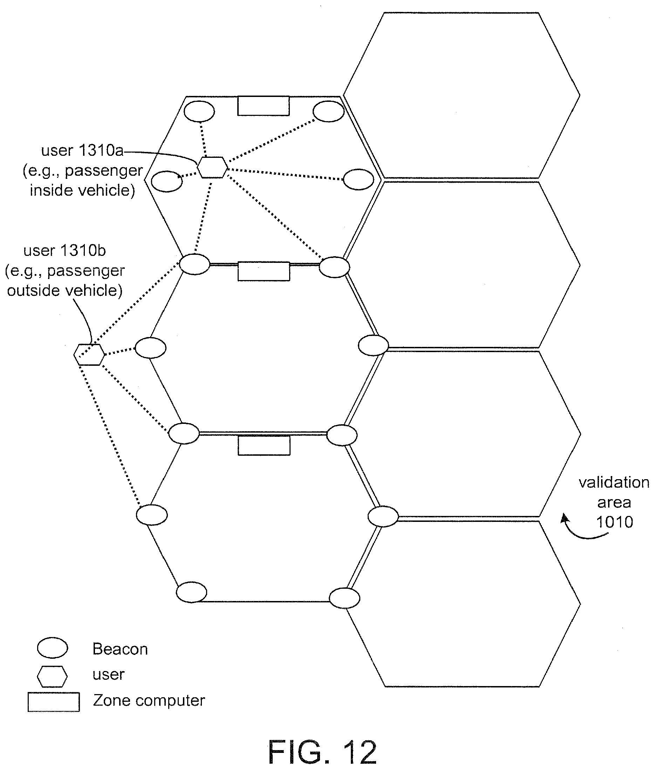

Figure 12 shows an example of a different configuration of beacons in a zone, and a different configuration of a zone. In this example, the zone shape is different than the zones shown in figure 11. Also, the number of beacons and the location of the beacons for each zone are different than shown in figure 11. With more beacons per zone, a more precise location of a mobile device within a zone may be determined, for example, based on signal strength, accuracy, signal angle and azimuth. The determination of whether a mobile device is inside a zone or outside the validation area 1010 may be similar to as described with respect to figure 11.

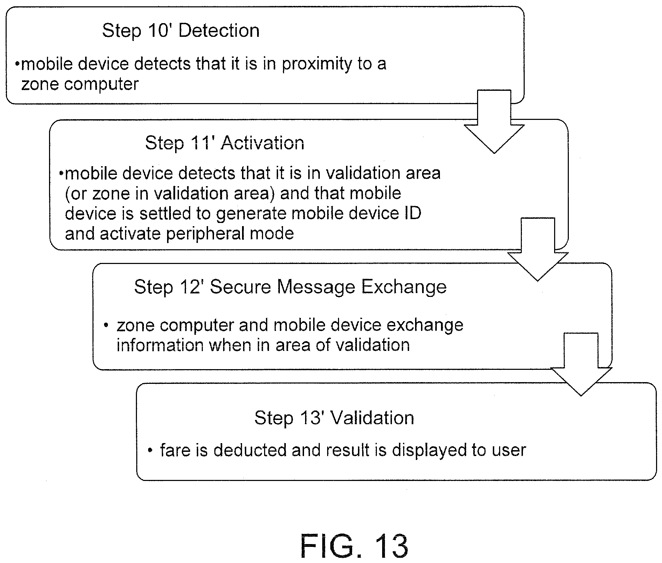

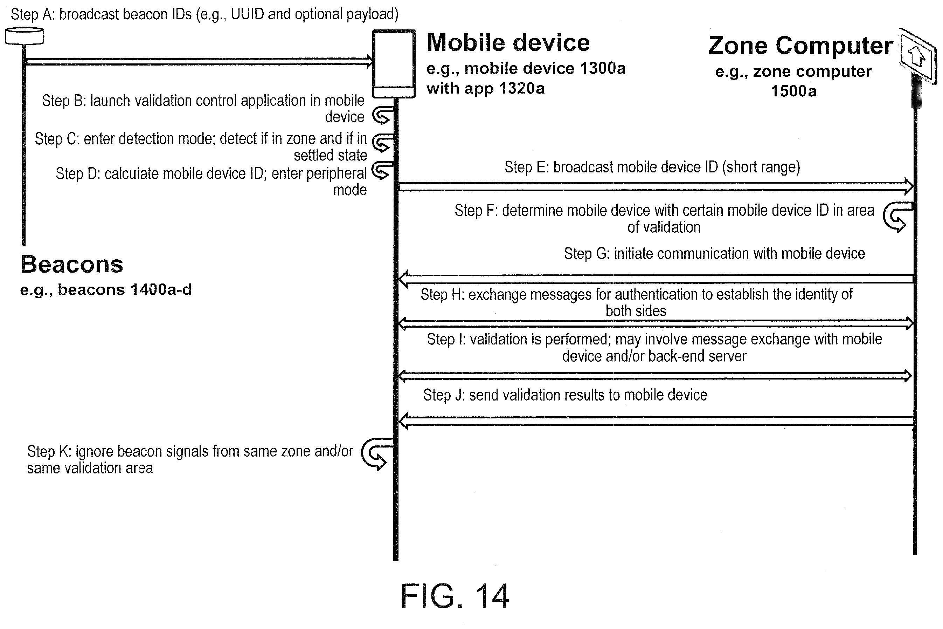

Figure 13 shows a high-level flow chart of steps performed by the system 1000, and figure 14 shows additional details of the steps and the interaction between the various sub-systems of the system 1000, including the mobile devices 1300, beacons 1400, and zone computers 1500 that perform the steps, according to an embodiment. Referring to figure 13, steps are shown for detection at step 10', activation at step 11', exchange at step 12' and validation at step 13'.

At step 10', for detection, a mobile device determines whether it is in an area of validation (e.g., proximity to a zone computer) based on information received from beacons. Determining proximity to a zone computer (e.g., determining whether it is in an area of validation) may include determining whether the mobile device is within a predetermined distance to a beacon or a plurality of beacons associated with a zone computer. Determining the distance to a beacon may be estimated based on signal strength, signal angle and azimuth, etc. According to an example, mobile device 1300a shown in figure 13 receives signals from the beacons 1400a-d. Each signal includes a beacon ID, e.g., including major ID and minor ID. Each beacon ID may be determined so that it can be used to identify its location, such as station, zone, etc. The beacons 1400a-d may also transmit a small payload containing the location information or any other information that can help to calculate the location information.

In one example, triangulation-based detection is performed to determine whether the mobile device 1300a is in a zone. For example, the validation application 1320a running on the mobile device 1300a registers for beacon notifications with a specific unique ID or IDs or part of the IDs, e.g. UUID and/or major ID and/or minor ID or a list of UUIDs and/or major IDs and/or minor IDs. For example, the UUIDs or the major IDs may be the same for all beacons provided by the same entity, such as all beacons for the same mass transit company or all beacons for the same train station. So, for example, the major IDs in unique IDs broadcasted by the beacons 1400 may be the same because they are for the same entity or same train station. The validation application 1320a stores a list of UUIDs, major IDs and minor IDs that it may respond to. The mobile device 1300a listens for broadcasted unique IDs from beacons. If the unique IDs of the beacon signals that are received are registered, such as stored in the list, the validation application 1320a determines whether it is in a zone in a validation area. For example, in response to recognizing broadcasts from beacons 1400a-d or at least two of the beacons, using algorithms like triangulation, the validation application 1320a determines that it is within a predetermined distance (e.g., within 1 meter) to at least two of the beacons 1400a-d. Thus, the validation application 1320a determines that it is in a zone, such as zone 1, and then proceeds to activation at step 111.

In another example, tap-based detection is performed. For example, the user lightly taps the mobile device 1300a on or near beacons1400a or at zone computer 1500a if it also acts as a beacon. The range of the beacon may be tuned so that the mobile device 1300a needs to be in close proximity to detect the beacon, such as within 3-4 centimeters, or the mobile device might take into consideration the signal strength, zone, accuracy and other factors of the beacon broadcast to determine the proximity with the beacons, and decide accordingly. If a beacon unique ID or IDs are received that are registered at the mobile device 1300a, in response to the tapping or placement in close proximity to the beacon, the access control application 1320a performs activation at step 11'. In another example, an intent of the user to enter validation is determined for example based on measurable user actions performed on the mobile device, such as shaking the mobile device twice, audible command spoken into the mobile device, etc.

At step 11' shown in figure 13, after detecting proximity to a zone computer at step 10, activation is performed. For example, activation may include determining whether the mobile device 1300a of the user 1310a is in a zone in the validation area 1010, and determining whether the mobile device 1300a is in a settled state or not. If the mobile device is in a zone, such as described with respect to user 1310a, and is in a settled state, a run-time mobile device ID and/or a run-time key are calculated for the mobile device 1300a for future secure message exchange with the zone computer 1500a, and a peripheral mode is activated. The peripheral mode is entered to communicate with the zone computer associated with the current location of the mobile device 1320a, which is zone computer 1500a.

Determining whether the mobile device 1300a is in a settled state may be performed to prevent accidentally entering into validation for fare payment. For example, the settled state indicates whether a mobile device is in a predetermined location for a predetermined amount of time. For example, if a user enters a bus with a validation area and then exits the bus immediately, the mobile device of the user may receive a signal from a beacon in the bus. However, because the user does not settle in the bus, validation is not performed and the user is not charged.

The settled state may be determined from motion sensors and based on time. Measurements from different sensors inside the mobile device 1300a (e.g., accelerometer, gyroscope, and/or motion co-processor) may be used to determine whether the mobile device 1300a is stationary or is moving, and whether the mobile device 1300a is moving in a direction outside the zone or outside the validation area and a rate of the movement. Also, the motion of the vehicle is determined in order to determine whether the mobile device is stationary or in motion while the vehicle is mobile or while the vehicle is stationary. If the mobile device 1300a is moving while the vehicle is in motion, then the mobile device 1300a may still be considered to be in a settled state but other factors may be considered. Also, the length of time the mobile device 1300a is stationary may be ascertained from the sensor measurements to determine whether it is in a settled state. In one example, the validation application 1320a activates the peripheral mode if the mobile device 1300a is determined to be in a settled state, or the vehicle is in motion for a predetermined period of time, and/or the mobile device 1300a has been inside the vehicle for a certain amount of time.

Unique ID determination may vary depending on how detection was performed. For example, if triangulation-based detection was performed, the unique IDs (like major ID, minor ID and optional payload) from the beacons used for triangulation may be used to calculate the unique ID or IDs for the mobile device. If tap-based detection was performed, the unique ID or IDs may be calculated using the unique ID or IDs from the beacon that was tapped (e.g. major ID, minor ID and optional payload from the beacon that was tapped). The peripheral mode is enabled in the mobile device to communicate with the zone computer for the lane using the unique IDs for the services and/or characteristics. Examples of unique ID calculation functions are described below.

In one example, the unique ID or IDs for the mobile device are calculated using the information received from the beacons and/or zone computer as the input. Thus, the unique ID is specific to the current location of the mobile device. The unique ID is not valid (or may not be valid) at a different location The current location may be a particular zone in the validation area 1010 or a specific seat in the zone.

A unique ID calculation function may be used to calculate the unique ID or IDs for the mobile device from the information received from one or more beacons. An example of a unique ID calculation function is described below. Assume the following: Row= Minor ID/10000; Sequence = Minor ID %10000, whereby % represents the modulo operator; Location = Major ID/10000; and Sub-Location = Major ID%10000.

If triangulation-based detection was used at step 10, the following steps may be performed to calculate the unique ID or IDs for the mobile device. The detected beacons are sorted based on the signal strength (like RSSI, transmission power, received power, etc.) in descending order. Beacons may be filtered, e.g., removed from the list, if their received signal strength indicator does not fall within a predetermined value, or if they proximity is unknown or if the azimuth and angle doesn't meet predetermined requirements or a combination of these. For example, if the signal strength is too weak, such as determined by comparing the signal strength to a predetermined threshold, the corresponding beacon may be removed from the list. Then, the top "x" beacons from the list are identified where x >1. In one example, x is greater than or equal to 3. If a plurality of beacons from the top "x" beacons have the required signal strength, then, the major ID and minor ID are used to calculate the Row, Sequence, Location and Sub-location information from the beacon signals, which is in turn is used to generate the unique ID or IDs. Beacons in the same lane may have the same location, sub location and row value.

If tap-based detection was used at step 10', then the following is performed with all the beacons that are found in range. At step 10', the beacons are sorted based on signal strength, accuracy, etc. in descending order and the first beacon in the list is identified or they are sorted in ascending order and the last beacon in the list is identified. Checks on the azimuth, angle, distance, accuracy are performed to ensure the mobile device is in the desired proximity of the beacon. At step 2, the signal strength value for this beacon should be greater than or equal to a predetermined value, e.g., <= -30dB. At step 3, the row, location and sub-location information of the beacon is used to generate the unique ID or IDs.

One example of a unique ID calculation function for either tap-based detection or triangulation-based detection is: Unique ID = [Pre-defined Unique ID Part] + [Location] + [Sub location] + [Row]. In other examples, mathematical functions, such as a conventional hash function, RSA, etc., are employed that use these three values along with other values, to derive the unique ID or IDs. In other examples, mathematical functions can be used to determine these three values, which in turn become input to other mathematical functions to derive the unique ID or IDs. The input values may include current time, location, sub-location, row, sequence, etc.

At step 12' shown in figure 13, for message exchange, the mobile device and the zone computer for the zone exchange information for validation. Regardless of the way detection and activation were performed, message exchange occurs in the same way. The zone computer determines whether the mobile device is within its area of validation if the mobile device is within range. The area of validation may be a zone. For example, the area of validation for zone computer 1500a is zone 1 shown in figure 11. To determine whether the mobile device is within the zone computer's area of validation, the zone computer may use the distance, signal strength, the azimuth and angle of the mobile device relative to the zone computer or a plurality of these values to determine the mobile device's location. The zone computer initiates a connection with the validation application on the mobile device if the mobile device is in the area of validation and the mobile device is broadcasting or advertising or transmitting one or more unique IDs and/or has predetermined services and/or characteristics. Then message exchange may occur for validation. For example, the zone computer 1500a and the validation application 1320a on the mobile device 1300a may enter into authentication to establish the identity of both sides. After authentication, data is exchanged between the zone computer 1500a and the validation application 1320a for validation. The zone computer 1500a and the validation application 1320a may request additional data resulting in multiple exchanges. In another example, the mobile device may initiate the connection with the zone computer and then engage in authentication and then validation. Authentication in either case may include determination of keys for secure communication.

At step 13' shown in figure 13, validation is performed. Validation may be performed the same way regardless of how detection was performed. For example, the zone computer makes a decision on whether the user is validated based on data exchanged with the mobile device, equipment operational data, and/or real-time services hosted on a backend. The equipment operational data may include fare rules (different fare types, concession types, fare validity window, etc.), transfer rules, location information (e.g., zone computer location), etc. The real-time services may include fare payment. In another example, the backend may store authorization information for individuals to determine whether the user is cleared to be in the validation area 1010. The decision of whether the user is validated is communicated to the user, such as through a display connected to the zone computer or through the mobile device. For example, the zone computer may send information to the validation application related to the validation decision and/or the user's account (e.g., new balance, transaction summary, etc.). The validation application may communicate the decision to the user using inbuilt features like haptic feedback, audio notification, visual notification, etc., based on user's preferences.

Figure 14 shows details of the steps of figure 13 and illustrates the interaction between the devices in the system 1000 performing the steps. For example, assume user 1310a is entering zone 1 and has mobile device 1300a running validation application 1320a, such as shown in figures 10 and 11. The mobile device 1300a interacts with beacons 1400a-d and zone computer 1500a when performing the steps.

The beacons 1400a-d periodically broadcast their unique IDs and optional payload indicating location. At step A, the mobile device 1300a receives the broadcasts when in range. At step B, assuming the validation application 1320a is not already running, the validation application 1320a is launched for example if the operating system of the mobile device 1300a recognizes the beacon IDs as registered beacon IDs. For example, beacon IDs that have a predetermined UUID, major ID and/or minor ID invoke launching of the validation application 1320a. If tap-based detection is used, the validation application 1320a may be launched if the user taps on or near a beacon and the unique ID of the beacon is registered. At step C, the validation application 1320a enters detection mode to determine whether it is in a zone, such as zone 1 and whether the mobile device is in a settled state. Detection may include tap-based detection or triangulation-based detection. After detecting the mobile device 1300a is in zone 1 and in a settled state, the validation application 1320a enters activation mode to calculate the unique ID of the mobile device 1300 based on information derived from the signals of the beacons 1400a-d. The validation application 1320a enters peripheral mode and a message with the unique ID of the mobile device is broadcasted or sent to a local zone computer, e.g., zone computer 1500a, at step E. The broadcast may be a short range broadcast, such as using BLE or Bluetooth.

At step F, the zone computer 1500a receives the message with the mobile device unique ID from the mobile device 1300a assuming it is within range, and determines whether the mobile device 1300a is within the area of validation of the zone computer 1500a. An example of the area of validation may be a zone, such as zone 1. The zone computer 1500a uses the distance, signal strength and optionally the azimuth and angle of the mobile device 1300a, which may be determined from the received message, to determine whether the mobile device 1300a is in its area of validation. For example, in addition to receiving the message from the mobile device 1300a, the zone computer 1500a may receive a message from a mobile device in zone 2. However, the zone computer 1500a determines that only the mobile device 1300a is currently in its area of validation, i.e., zone 1. Accordingly, the zone computer 1500a communicates with the mobile device 1300a for validation but not the mobile device in zone 2 at this instant.

At step G, if the mobile device 1300a is determined to be in zone 1, the zone computer 1500a initiates communication with the mobile device 1300a. For example, the zone computer 1500a sends an acknowledgment message to the mobile device 1300a that includes the mobile device unique ID so the mobile device 1300a knows that the zone computer 1500a is ready to proceed to validation. In another example, the zone computer 1500a may broadcast or transmit an acknowledgment message that is encrypted with the mobile device unique ID to the mobile device 1300a. Only the mobile device 1300a can decrypt the acknowledgment message sent from the zone computer 1500a because no other mobile device knows the key. In yet another example, the zone computer 1500a and the mobile device 1300a calculate the mobile device unique ID independently using the same inputs and the same function. For example, the inputs for the unique ID calculation function described above may be determined by the mobile device 1300a and broadcasted or sent to the zone computer 1500a with the mobile device unique ID. Both the zone computer 1500a and the mobile device 1300a store the same function for calculating the mobile device unique ID. The zone computer 1500a also calculates the mobile device unique ID. The zone computer 1500a determines if the received mobile device ID matches the calculated mobile device ID to determine whether to continue with the process, e.g., initiate communication, authentication and validation.

Mutual authentication is performed at step H. The mobile device 1300a and the zone computer 1500a may exchange messages for authentication to establish identities of both sides. The mutual authentication might result in a generation of a key or set of keys that are then used for further encryption, decryption, enciphering, deciphering, etc. A conventional key encryption algorithm may be used.

At step I, the zone computer 1500a determines whether the mobile device 1300a or its user 1310a is validated. Validation may include exchanging messages with a backend server not shown and/or the mobile device 1300a to get the information needed to perform validation. In one example, validation may include a fare payment determination and the zone computer 1500a may determine whether the fare can be paid from a user account for the user 1310a. At step J, validation results are returned to the mobile device 1300a. The zone computer 1500a may also send information to the related to the user's account (e.g., new balance, transaction summary, etc.). At step K, if the user 1310a is validated, e.g., a fare is paid, the validation application 1320a can mute itself from the beacons in the same fare paid zone to prevent from being double-charged for the duration of the fare validity. If the validation is denied, the zone computer 1500a can display an indication on a display that validation failed. If the user 1310a is validated, the zone computer 1500a can display an indication that the user 1310a is validated.

After steps E and F are performed, keys may be used for secure communication. As described above, keys may be used to encrypt messages between the mobile device 1300a and the zone computer 1500a. Accordingly, the key may be used for secure communication between the mobile device 1300a and the zone computer 1500a. Also, the mobile device unique ID and/or the key are run-time. For example, they may be generated in real-time for the validation process and are only valid for the current time and location and for the particular mobile device. This provides additional security by improving the robustness of the key. In another example, MACing might be used to secure the communication between the mobile device 1300a and the zone computer 1500a. In another example, both encryption and MACing might be used to secure the communication between the mobile device 1300a and the zone computer 1500a.

At step I, validation may vary depending on whether information for validation is stored locally or stored in a backend server. For example, for a "stored value" system, information for validation is stored locally on the mobile device in a secure manner. For example, information, such as user profile, balance amount, passes and concession information are stored securely on the mobile device. In a "credential" systems, the information is stored on a backend server (e.g., the cloud), and the mobile device only stores credentials, such as user account number, and the information is retrieved from the backend server in real time for completing validation or enforcement of transactions.

The information for validation, whether a "stored value" or a "credential" system is being used, can be encrypted and stored within a local data storage in the mobile device. In one example, the mobile device may not have the encryption key to decrypt the information and only the zone computer or computers may have access to the encryption key (or keys) to decrypt the data. Additionally, the encryption key may be derived by the zone computer or a secure storage (like a secure access module (SAM) or hardware security module (HSM) or a secure element running applets, connected to the zone computer) using the user's information as one of the inputs. Also, the encryption keys with which the data is encrypted and passed encrypted to the mobile device may be changed every time the user tries to access a restricted area to prevent tampering with the data. The mobile device does not have access to the key which protects the data.

The information related to user's account may be stored inside a secure storage area inside the mobile device (like a secure element, a secure element micro secure digital card, a universal integrated circuit card, a secure area within the application processor, etc.). This may involve an additional authentication performed between the zone computer and the secure storage, establishing the identity of both sides, resulting which the information is shared by the secure storage with the zone computer via the validator mobile application.

Also, one or more keys may be used to encrypt the communication between the secure storage and the zone computer. Additional keys may be generated during mutual authentication, which are then be used for encryption for the current session only.

In another example, the information related to user's account is stored in the backend server and can be securely accessed and updated by either the mobile device or by the zone computers or both. The mobile device only stores the user's credentials which may be a user ID, account number, or a similar unique identifier which can be used to access the user's information from the backend server in real time.

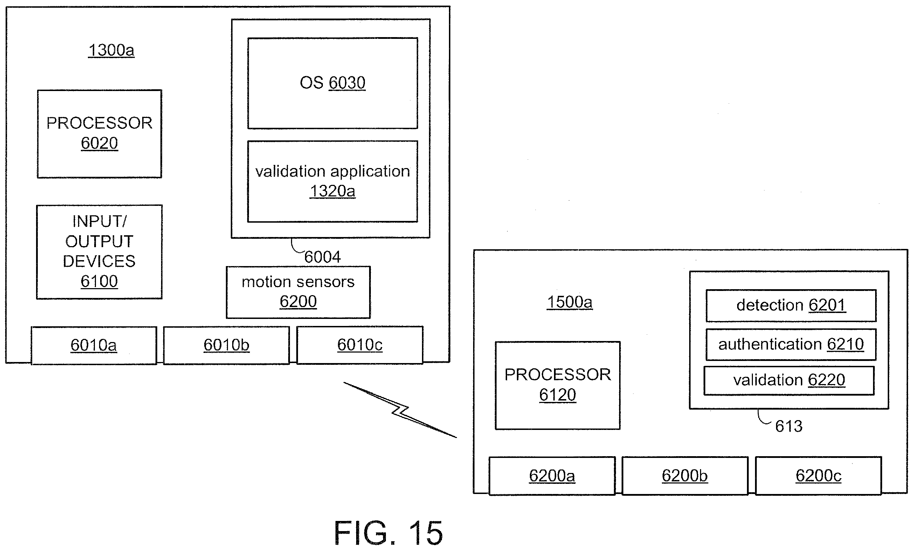

Figure 15 shows a block diagram of the mobile device 1300a and the zone computer 1500a in the system 1000 but is representative of any of the mobile devices and the zone computers that may be used in the system 1000.

The mobile device 1300a may include multiple interfaces 6010, wired or wireless, for communicating with other devices. For example, interface 6010a may be a Wi-Fi interface or a cellular interface or may include both interfaces. 6010b may include a Bluetooth interface. In one example, message exchanges between the mobile device 1300a and the zone computer 1500a are done through Bluetooth or Bluetooth 4.0 or BLE or future versions of Bluetooth but other interfaces may be used. Interface 6010c may be a NFC interface, but the mobile device 1300a may have both Bluetooth and NFC interfaces and multiple other interfaces. Interface 6010b may be for communicating with the beacons1400, for example, for triangulation-based or tap-based detection.

The mobile device 1300a includes a processor 6020 and data storage 6040. The processor 6020 for example is an integrated circuit. The processor 6020 may be a chipset with central processing unit and/or custom processing circuits, such as an application-specific integrated circuit (ASIC) or field-programmable gate array (FPGA). The processor 6020 may run an operating system (OS) 6030 and applications, including validation application 1320a, for the mobile device 1300a. The OS 6030 and the applications are stored in data storage 6040. The mobile device 1300a includes input/output (I/O) devices 6100, such as keyboard, touch screen display, speaker, etc. The I/O devices 6100 may provide audio, visual and/or tactile output to indicate whether a user has been validated and allowed access to the validation area 1010 or whether the user is denied access. The mobile device 1300a also includes motion sensors 6200. Examples of motion sensors 6200 may include accelerometer, gyroscope, and/or a motion co-processor. Information from the motion sensors 6200 may indicate information or measurements of the motion of the mobile device 1300a. This information may be used to determine whether the mobile device 1300a is in a settled state.

The zone computer 1500a includes a processor 6120 and a data storage 6130. The processor 6120 is an integrated circuit. The processor may execute software or firmware or comprise custom processing circuits, such as an application-specific integrated circuit (ASIC) or field-programmable gate array (FPGA). The data storage includes software or firmware including machine readable instructions. The software or firmware may include subroutines or applications for detection 6201, authentication 6210 and validation 6220. The detection 6200 includes determining when a mobile device is in the area of validation for the zone computer 1500. Authentication 6210 and validation 6220 are described above and are for authenticating the mobile device 1300a before communicating with it and validating the mobile device 1300a. The zone computer 1500a may include I/O devices or be connected to an I/O device, such as a display, to provide indication to the user of whether they are validated.

The zone computer 1500a also includes multiple interfaces 6200, wired or wireless, for communicating with other devices. For example, interface 6200a may be a Wi-Fi interface or a cellular interface or may include both interfaces. 6200b may include a Bluetooth or Bluetooth 4.0 or BLE interface. In one example, message exchanges between the mobile device 1300a and the zone computer 1500a are done through a Bluetooth but other interfaces may be used. 6200c may be a NFC interface, but the mobile device 1300a may have both BLE and NFC interfaces. The interfaces 6200b and 6200c are short-distance communication interfaces. A short-distance communication interface may have a communication range of a few meters (e.g., Bluetooth or BLE) or a few centimeters (e.g., NFC). The range is generally much shorter than Wi-Fi or cellular. The short-distance communication interface may cover a sub-location or a sub-location and its adjacent sub-location. The zone computer 1500a may connect via a network interface of interfaces 6200 to a server backend via the Internet or another wide area network or a local area network for validation, which may include fare payment.

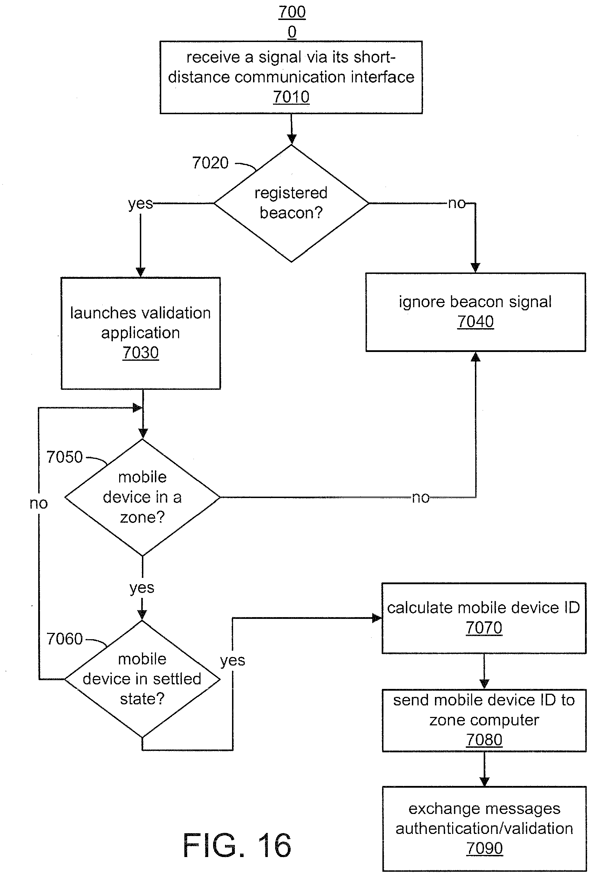

Figure 16 shows a flowchart of a method 7000 that may be performed by a mobile device , such as the mobile device 1300a, in the system 1000. At 7010, the mobile device 1300a receives a signal via its short-distance communication interface, such as a Bluetooth, BLE or Bluetooth 4.0, interface. At 7020, the mobile device 1300a determines whether it is from at least one registered beacon. For example, the OS 6030 running on the mobile device 1300a determines whether the unique IDs, like UUID, major ID and/or minor ID received from a beacon or a plurality of beacons matches one or more registered unique IDs. At 7030, if the beacon or beacons are registered beacons, the OS 6030 launches the validation application 1320a. If not, the received signals are ignored at 7040.

At 7050, the validation application 1320a determines whether the mobile device 1300a is in the validation area or in a particular zone of the validation area 1010. This may be determined by triangulation-based detection or tap-based detection as described above. If the mobile device 1300a is determined to be in the validation area 1010 or in a particular zone, a determination is made as to whether the mobile device 1300a is in a settled state at 706. The settled state may be identified if the mobile device 1300a is stationary for a predetermined amount of time while in the zone. Determining whether the mobile device 1300a is stationary may be determined from the motion sensors 6200 shown in figure 15. In another example, the settled state is identified if the mobile device 1300a is stationary for a predetermined amount of time while in the zone and while the zone is moving, such as if the zone is in a vehicle. In another example, the settled state is identified if the mobile device 1300a is in movement while in the zone and while the zone is moving, such as if the zone is in a vehicle. If the mobile device 1300a is not in a settled state, 7050 is repeated. If the mobile device 1300a is in a settled state, a unique mobile device ID is calculated based on information received from the one or more beacons at 7070. The mobile device ID may be unique to the mobile device 1300a and the current location of the mobile device 1300a when the mobile device ID is calculated and subsequently transmitted to the zone computer 1500a at 7080. At 7090, messages are exchanged with the zone computer 1500a for the zone in a secure manner using one or more encryption keys via a short-distance communication interface (e.g., Bluetooth) to authenticate and validate a user associated with the mobile device and to allow access to the restricted area through the sub-location if the user is validated. At 7020, if the mobile device 1300a is not determined to be in the validation area 1010, then at 7040, the signals from the beacons are ignored.

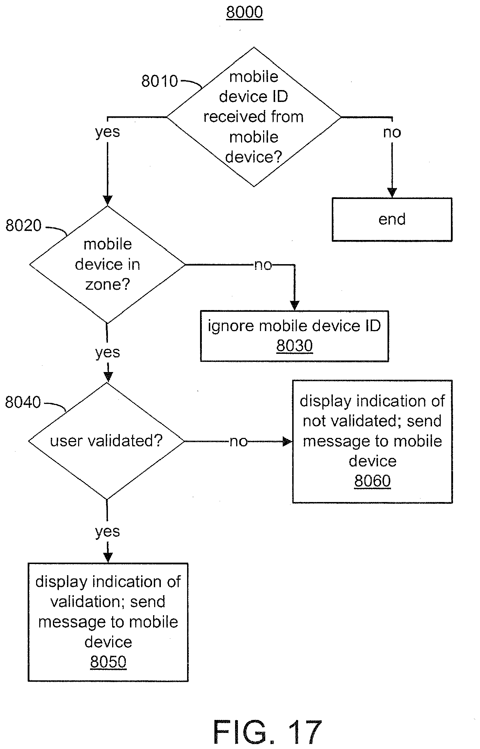

Figure 17 shows a flowchart of a method 8000 that may be performed by a zone computer, such as the zone computer 1500a, in the system 1000. At 8010, the zone computer 1500a determines whether a mobile device ID is received in a message from the mobile device 1300a via a short-distance communication interface of the zone computer 1500a. If the mobile device ID is received, the zone computer 1500a determines whether the mobile device 1300a is in zone 1 for the zone computer 1500a at 8020. If tap-based detection was used, the zone computer 1500a can assume the mobile device is in zone 1. Alternatively, the zone computer 1500a may scan for all Bluetooth mobile devices in range looking for devices which expose certain services/characteristics, and determines a mobile device is in zone 1 based on the signal strength, dwell time, accuracy, distance, azimuth, angle, etc.

At 8030, if the mobile device 1300a is not determined to be in zone 1, the message is ignored. If the mobile device 1300a is determined to be in zone 1, the zone computer 1500a determines whether a user associated with the mobile device 1300a is validated to access the restricted area at 8040. At 8050, the zone computer 1500a sends a message to the mobile device 1300a that the user is validated if the user is determined to be validated. Otherwise, at 8060, a message is sent indicating validation failure. Validation results may also be displayed on display.

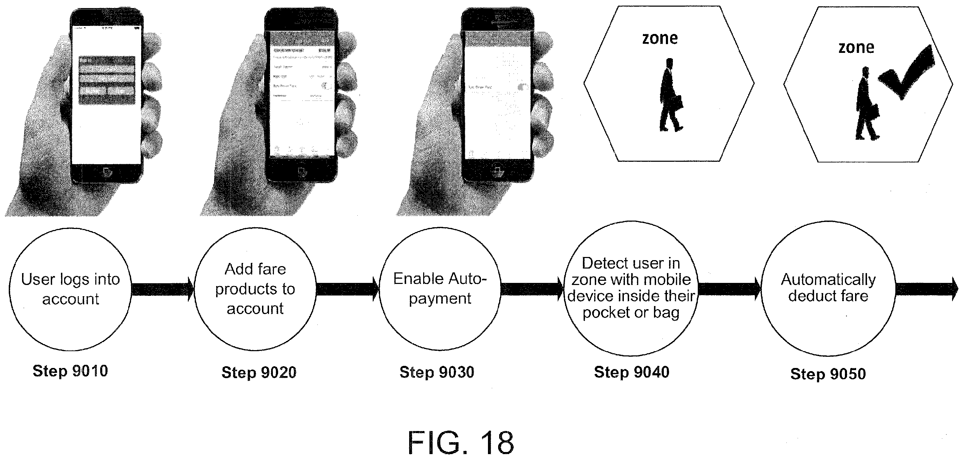

Figure 18 illustrates a method 9000 for fare-based access control using the system 1000. For example, validation and approval or denying entry or exit to a restricted area is based fare payment. The validation area 1010 for example provides a fare-based service, such as a subway or train station that charges a fare to passengers that ride the train. Also, the validation application 1320a includes modules to enable fare payment.

At 9010, a user logs into their account. The user may have to create an account if they don't have one. The validation application 1320a provides a graphical user interface on the mobile device 1300a to receive a login ID and password and send the information to a backend server to log the user into their account. At 9020, the validation application 1320a adds fare products to the account based on user selections. Fare products includes any goods or services for which the user is authorizing payment. At 9030, the validation application 1320a enables auto-payment of the selected fare products in response to user input. At 9040, the mobile device is detected in a zone or sub-location. Detection of the mobile device 1300a to invoke validation is described in detail above. Validation is the payment of the fare in this example. The mobile device 1300a may remain in the user's pocket or bag to invoke validation, which is more convenient for the user. At 9050, the user's account is automatically deducted and the fare gate opens. The amount deducted is based on the fare scheme used by the transit entity, which may be based on distance, day pass, etc. In one example, a single fare is charged regardless of distance traveled. In another example, distance traveled or number of stops is determined to calculate the fare and the fare is deducted. To determine the distance traveled or number of stops traveled (e.g., when the user is a passenger on the train) the validation application on the mobile device determines when the user leaves the train or leaves a train station. For example, the mobile device of the user may receive a signal via the short-distance communication interface of the mobile device from a beacon at an exit to the train station or near the exit of the vehicle that indicates the user has left the train or train station. The signal may identify the train station, so the validation application can determine the train station where the user got on the train and the train station where the user got off the train in order to calculate the fare.

According to another example of the present disclosure, regardless of whether validation is performed for example at a gated entrance or inside the vehicle, an enforcement computer inside the validation and enforcement area, which may be inside the vehicle, performs on-the-spot verification to determine whether the individual is validated. The enforcement computer may be a mobile device that may be carried by an inspector or some other individual to verify that the passengers are validated and have paid their fares. When an inspector demands a proof of payment, the individual lightly taps their mobile device on the inspector's enforcement computer. Both the devices interact over Bluetooth or some other short-distance wireless communication interface and the inspection result is displayed for the inspector on the enforcement computer. The enforcement computer can be a mobile device carried by the inspector or a stationary computer that is mounted on a physical structure inside the validation and enforcement area. The enforcement device or the user's mobile device may be a wearable device, such as GOOGLE glass, a smart watch, etc., and may be a combination of a mobile device and a separate Bluetooth sensor that is connected to the mobile device whereby communication is enabled via the Bluetooth sensor. The validation and enforcement area may be a fare paid zone where an individual is required to pay a fare to be in the area. A proof of payment can be demanded inside the validation and enforcement area. By way of example, the validation and enforcement area can be inside a bus, train, subway, subway platform, train station, street car platform, etc. Tickets for the fare can vary based on passenger profile (e.g., adult, child, student, senior, etc.), transit type (e.g., bus, subway, train, etc.), reusability (e.g., one time ticket, one day pass, weekly pass, etc.), time of travel (e.g., weekday, weekend, peak hours, off-peak hour, etc.).

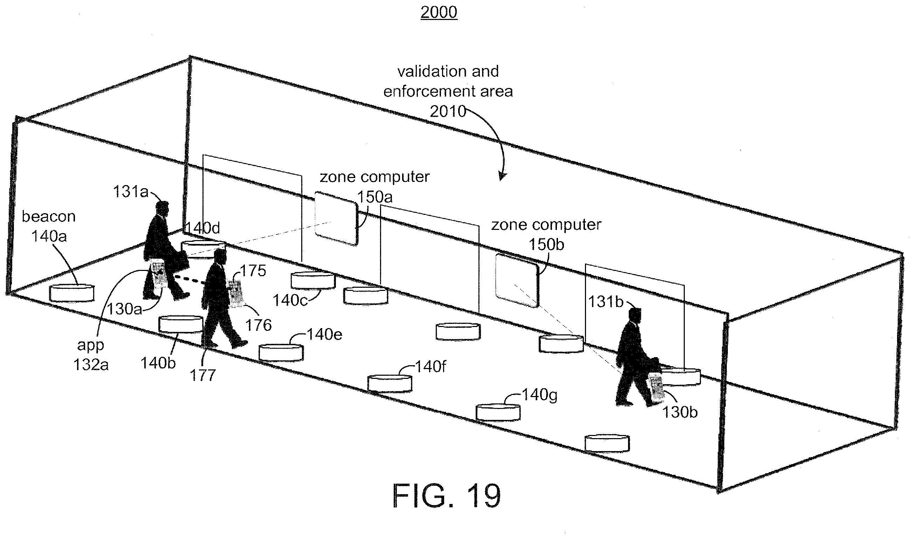

Figure 19 illustrates another example of a secure short-distance-based communication and enforcement system, referred to as the system 2000. The system 2000 is similar to the systems 100 and 1000 shown in figures 1 and 10 respectively, with the addition of enforcement computer 175, which may be a mobile device carried by a person, shown as enforcement person 177. The components of the systems 100 and 1000 may also be used in the system 2000 and may not be described again in detail. Operations of one or more of the components of the system 2000 may differ from components of the systems 100 and 1000 and are described in detail below. The validation and enforcement area 2010 may be a geographic area or location and/or a physical structure that individuals can enter and exit. The physical structure may be a mobile structure, such as a vehicle (e.g., bus, train, car, airplane, etc.), or a stationary structure such as a building or some other type of stationary structure. Also, the validation and enforcement area 2010 may or may not have physical structures to control entry or exit into validation and enforcement area 2010. For example, a validation and enforcement area 2010 may be an open area.

The system 2000 may be used for a non-gated environment, such as inside a vehicle, train station platform, etc., or for a gated environment, such as a subway entrance through a gate, or for any area where individuals may enter or exit and validation and enforcement of validation can be performed if the individual is detected in the validation and enforcement area 2010. The system 2000 may be used to execute fare payment for validation or to confirm that the ticket has been purchased and the fare has been paid for enforcement. Furthermore, the validation and enforcement area 2010 may be divided into a plurality of sub-locations, also referred to as zones. Validation and enforcement may occur in any of the zones in the validation and enforcement area 2010. Multiple individuals can be simultaneously validated by the system 2000 in a validation mode, and multiple individuals can be simultaneously checked for validation in an inspection mode for enforcement by the system 2000.

Individuals in the validation and enforcement area 2010 are checked, for example, to determine whether they are approved to be in the validation and enforcement area 2010 and/or to grant or deny approval of them being in the validation area. For example, individuals in the validation and enforcement area 2010 are supposed to be validated. For validation, the individuals may have engaged in the validation process to be allowed entry into the validation and enforcement area 2010 or may have engaged in the validation process after they entered the validation and enforcement area 2010. Through an inspection process, the system 2000 can determine whether an individual in the validation and enforcement area 2010 has gone through validation and is approved to be in the validation and enforcement area 2010. Accordingly, enforcement of validation may include determining whether individuals in the validation and enforcement area 2010 are approved to be in the validation and enforcement area 2010.

Validation may be based on validation rules stored in the zone computers or a backend server or the mobile devices. In one example, validation may include paying a fare associated with the validation and enforcement area 2010, such as paying a fare for riding a bus, train or taxi. The validation rules may include rules to determine the amount of fare, such as whether the fare is based on distance or number of stops or whether a single fare is charged for any distance traveled, or based on other fare payment rules. Enforcement may include executing an inspection process to determine whether an individual has been approved to be in the validation and enforcement area 2010. In one example, the enforcement includes determining whether an individual paid the fare. "Users" and "individuals" are generally used interchangeably in the present disclosure and refer to anyone or anything that is to be validated and/or inspected in the validation and enforcement area 2010.

The system 2000 may include end user mobile devices 130 that can each run a validation and enforcement application, shown as validation and enforcement applications 132 for the mobile devices 130, to receive information from beacons 140 and exchange information with zone computers 150 to facilitate validation in the validation and enforcement area 2010. Mobile devices 130a and 130b are shown for users 131a and 131b respectively but of course, any number of individuals using mobile devices may be validated by the system 2000. Also, multiple beacons 140, including beacons labeled 140a-d, and multiple zone computers 150, including zone computers labeled 150a-b, are shown, however, any number of beacons and zone computers may be included in the system 2000 depending on various factors, such as how many users need to be processed simultaneously in the validation and enforcement area 2010.

The beacons 140 are hardware that can broadcast beacon signals. The beacons 140 may be standalone devices or incorporated into another system. A zone computer and/or an enforcement computer may have a beacon. The beacons 140 broadcast beacon signals at a short distance, such as up to 10 meters or a much shorter distance, such as up to 4 centimeters. For example, the beacons 140 may be Bluetooth, Bluetooth Low Energy (BLE), or near-field communication (NFC) beacons. The beacons 140 may be part of a local positioning system, such as IBEACONS, that are used to wirelessly determine the position of the mobile devices 130 inside the restricted area 2010. The beacons 140 may be positioned at strategic locations inside the validation and enforcement area 2010 to facilitate accurate detection of a user within the validation and enforcement area 2010. The broadcast range and power of the beacons can be tuned per the environment. For example, the broadcast range of the beacons is tuned to cover the boundaries of their respective zones. For example, the beacons 140 can broadcast towards the inside of their respective zone and may have a range to cover their zone but not much farther to prevent accidentally validating a mobile device that may be adjacent the validation and enforcement area 2010 but not in it. Also, the validation and enforcement applications 132 running on the mobile devices 130 can filter out the beacons below a specific power range or accuracy or angle or azimuth or distance. Also, each of the zone computers 150 may be associated with a different zone in the validation and enforcement area 2010, and a mobile device in a zone can identify the zone computer for the current zone based on location information determined from signals received from the beacons in the zone. The beacons 140 broadcast a signal that invokes a validation process between the mobile devices 130 and the zone computers 150. For example, after receiving signals from the beacons 140a-d, the mobile device 130a communicates with the zone computer 150a to validate the user 131a, and similarly, the mobile device 130b communicates with the zone computer 150b to validate the user 131a.

In one example, the beacons 140 and the zone computers 150 may be provided at the entrance and/or exit of the validation and enforcement area 2010. For example, the beacons 140 and the zone computers 150 may be provided at a gated entrance to control access to the validation and enforcement area 2010. If a user is validated at the gate, the gate is opened to allow the user to enter. Validation at the gated environment is further described with respect to figure 2.

As shown in figure 19, the system 2000 also includes an enforcement computer 175. Although a single enforcement computer 175 is shown, there may be multiple enforcement computers in the validation and enforcement area 2010. The enforcement computer 175 may be a mobile device carried by a person, shown as the enforcement person 177, checking the validation of the users 130. For example, the enforcement computer 175 is in close proximity to the mobile device 130a as shown in figure 1 and communicates with the mobile device 130a to check the validation of the user 131a. Although the enforcement computer 175 is shown as a mobile device, the enforcement computer 175 may be a stationary computer mounted on a physical structure, such as on a wall or another structure that generally does not move within the validation and enforcement area 2010. The enforcement computer 175 for example runs an inspection application 172 to check the validation of the users 130.

The enforcement computer 175 may include an inspection beacon 176 that broadcasts an inspection signal through a short-distance communication interface in the enforcement computer 175. If the mobile devices 130 receive the inspection signal, the validation and enforcement applications 132 for the mobile devices 130 are placed in inspection mode to disable validation, such as disabling buying fare products, and disabling fare payment, through the validation and enforcement applications 132 and to facilitate checking the validation of the users 132. By disabling fare payment or other validation actions that can be performed by the user, it prevents the user from being able to only pay the fare when they are being inspected or when they see an enforcement officer inspecting passengers or are informed by other means of an enforcement officer inspecting passengers. Instead, the user has to pay the fare prior to entering inspection mode on the mobile device and thus encourages users to pay the fare righteously when entering the validation and enforcement area 2010. Upon checking validation, if the user is indicated as not being validated, the user may be removed from the validation and enforcement area 2010, or charged an additional penalty fee in addition to the fare, or some other action may be performed in response to determining the user has failed to validate.

In one example, instead of, or in addition to the enforcement computer 175 including the inspection beacon 176, the enforcement computer 175 can place the beacons 140, which may have previously been used for validation, into inspection mode. In the inspection mode, the beacons 140 broadcast the inspection signal to facilitate the checking of the validation of the users 130. Assuming the beacons 140 can operate in different modes, when the beacons are not in inspection mode, the beacons 140 operate in validation mode and broadcast a validation signal to facilitate validation. The inspection signal and the validation signal may include a beacon ID. The beacon ID may identify the signal as an inspection signal or a validation signal. The signal may carry additional information that can identify it as inspection signal or a validation signal. For example, a unique ID in a beacon signal can identify the beacon signal as an inspection signal or a validation signal.

If the enforcement computer 175 is a stationary computer, it can inspect all the passengers that are in the validation and enforcement area 2010, and may identify a particular seat or other location where the passenger is located based on triangulation and beacon information. Either the mobile device or the enforcement computer may determine the location. The stationary enforcement computer 175 can update a backend server on enforcement status, and the enforcement officer can come on an as-need basis.

The mobile devices 130 and the enforcement computer 175 (assuming it is a mobile device) may be any computer that a user may carry and that can run an application. Examples of the computers may include mobile phones, tablets, wearable computers, such as GOOGLE glass or smart devices embedded into clothing, a smart watch, fitness tracker, or wireless enabled shoes, or some other type of mobile computer. The mobile devices 130 and the enforcement computer 175 may include short-distance wireless communication interfaces that can wirelessly communicate with beacons 140 and zone computers 150 and the enforcement computer 175 when in proximity to the beacons 140 and the zone computers 150 and the enforcement computer 175. Also, in addition to receiving signals from the beacons 140, the mobile devices 130 and the enforcement computer 175 themselves may operate as a beacon and broadcast a beacon signal or act as a peripheral, enabling services and/or characteristics, or act as a central computer and start searching for peripherals with certain services and/or characteristics and/or name and/or other unique identifiers. The mobile devices 130 and the enforcement computer 175 may include a beacon. In one example, a short-distance communication interface in a mobile device or the enforcement computer 175 can broadcast a beacon signal to initiate communication.

In one example, the short-distance wireless communication interfaces may include NFC interfaces. NFC is a set of standards for smartphones and other mobile devices to establish radio communication with each other and other computers by touching them together or bringing them into close proximity. The close proximity may be a few inches or few centimeters (e.g., 4 centimeters). Other wireless interfaces may be used. For example, Bluetooth may be used and has a longer range, but may consume more battery power and is more susceptible to cross talk. In another example, BLE or Bluetooth 4.0 or future versions of Bluetooth wireless interfaces may be used. BLE is a wireless technology that is intended to provide reduced power consumption when compared to Bluetooth but has a similar range to Bluetooth. The components of the system 2000 may have one or multiple types of short-distance wireless interfaces, which may have ranges from a few centimeters to a few meters. In another example, the range is up to 100 feet. The zone computers 150, mobile devices 130 and the enforcement computer 175 may include other communication interfaces as well, which are wired or wireless and may be network interfaces for communicating packets over a local area network and/or a wide area network. However, communication between the beacons 140/inspection beacon 176 and the mobile devices 130 and communication between the zone computers 150 and the mobile devices 130 and communication between the enforcement computer 175 and the mobile devices 130 may rely on short-distance wireless interfaces for communication with each other. Communication via a network interface may be for exchanging messages with a backend server via a network, which may be done for validation and inspection.

The beacons 140 and beacon 176 may include small computers that may be attached to or embedded in a physical infrastructure. The beacons 140 and beacon 176 may broadcast a message every x milliseconds (ms), where x>1ms and may be less than 200ms but other intervals may be used and may be based on the environment and use cases. The message may include a unique ID or a set of unique IDs or a combination of generic IDs and unique IDs. In one example, at least one part of the ID is generic and the other part is unique. In one example, the ID may include a universally unique identifier (UUID) a major ID and/or a minor ID. For example, one of the identifiers is generic (e.g., UUID and/or the major ID) and may be the same for all beacons that belong to or are for a particular entity, such as for the same company or the same mass transit system, or may vary between different entities or restriction level within the same company or mass transit system. The other unique ID (e.g., minor ID) may help identify a particular location or sub-location. For example, the major ID may be the same for all beacons that belong to a particular location within the system, such as a specific rail station or a bus stop or train, and the minor ID may be different for each subway car or can be unique to the beacon and can be associated with a particular sub-location within a location. Also, the major ID or the minor ID may identify the beacon as an inspection beacon or a beacon for validation.

The mobile devices 130 listen for the broadcasts from the beacons 140, which may contain the unique identifiers for each beacon, or inputs from which the unique identifiers may be calculated or computed or derived or looked up in an internal data store. When a mobile device is in range of one or more of the beacons 140, unique identifiers received from the beacons at the mobile device may invoke a detection mode in the mobile device to determine whether the mobile device is in proximity to at least one of the zone computers 150 or the enforcement computer 175 in the validation and enforcement area 2010. This is referred to as detection or detection mode. In detection mode, to determine whether the mobile device is in proximity to a zone computer or the enforcement computer 175, the unique beacon identifiers, signal strength (such as received signal strength indicator (RSSI), transmission power, and/or received Power) of the beacon's broadcasts, broadcast zone, broadcast accuracy, azimuth and/or angle of the beacon signal (e.g., calculated from the received wireless broadcast) are used to identify the location of the mobile device. If the mobile device detects that it is in the validation and enforcement area 2010, it may engage in communication with the zone computer or the enforcement computer 175 for validation or enforcement. This may involve the mobile device getting into a peripheral mode, wherein the mobile device may start sending message broadcasts over the wireless interface (e.g. Bluetooth 4.0), like a beacon. For example, the mobile device acts as a Bluetooth peripheral and advertises, broadcasts, transmits, and/or enables its services and/or characteristics using one or more of unique mobile IDs. The zone computer or the enforcement computer 175 may use the unique mobile device ID to identify the mobile device or the services/characteristics advertised, broadcasted, transmitted, and/or supported by the mobile device or the fare payment application on the mobile device. In another example, the zone computer or the enforcement computer 175 broadcasts a message indicating that it is available for validation or enforcement and the mobile device ID which is calculated by the computer is included in the message. The mobile device receives the message, determines whether the mobile device ID in the message matches the mobile device ID calculated by the mobile device, and if it does match, initiating a message exchange for authentication and validation.

The zone computers 150 include computers that may be provided in the validation and enforcement area 2010 for authentication and validation of users in the validation and enforcement area 2010. A zone computer may support an entire validation area or a zone in the validation area. The zone computers 150 engage in message exchange and validation processes with the mobile devices 130 for authentication and validation after the mobile devices enter peripheral mode, which may be invoked after the mobile devices 130 detect that they are in the validation and enforcement area 2010 and that the mobile devices 130 are settled. For example, a process is executed to establish a secure communication channel between a mobile device and a zone computer through run-time key generation, which may be based on the ID of beacons and other information. Messages may be exchanged via the secure communication channel to perform validation. In one example, validation may include fare-based validation, such as when payment of a fare is required.

Similarly, the enforcement computer 175 engages in secure message exchange and processes with the mobile devices 130 for authentication and to check validation, which is further described below. Both the zone computers 150 and the enforcement computer 175 may be connected to a back-end server via the Internet or another wide area network to provide updates and perform other functions which may include validation-related functions.

The system 2000 may be used for validating in gated or non-gated validation and enforcement areas, such as shown in figures 2 and 11. For example, regardless of whether the validation and enforcement area 101 is a gated environment or a non-gated environment, when the users 130 are inside the validation and enforcement area 101, the enforcement computer 175 may be used to validate users 130. Detection, activation, message exchange, and validation may be performed for example similar to as described with respect to figures 13 and 14 and other figures discussed above.

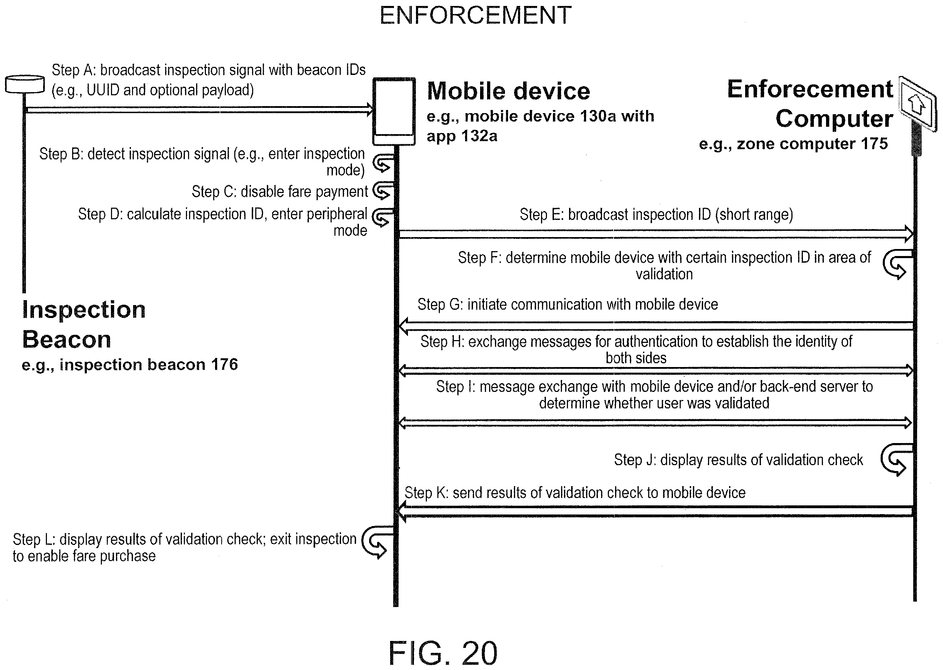

Figure 20 shows detailed steps for enforcement. The steps described above for example with respect to figure 13 for validation are also applicable for enforcement. For enforcement, at detection step 10, the mobile devices 130 determine whether they are in proximity to the enforcement computer 175 based on an inspection signal received from the inspection beacon 176 shown in figure 19. A unique mobile device ID is calculated for each mobile device at activation step 11 based on the inspection signal. At exchange step 12, messages are exchanged between the mobile devices 130 and the enforcement computer 175 using the mobile device ID and via short distance communication interfaces to determine whether the mobile devices have been validated, e.g., whether fares have been paid. The enforcement computer 175 may communicate with a backend server to determine whether a user is currently validated. For example, the backend server may store a list of users that have paid the fare and when they paid fare and details describing what the fare payment was for. At step 13, a determination is made as to whether the user was previously validated and an indication of whether the user was validated is displayed on the enforcement computer 175, and a message may be sent from the enforcement computer 175 to the mobile device with the indication. Figure 20 shows details of these steps 10-13.

The steps of figure 20 are described with respect to figure 19 and show the interaction between the mobile device 130a, the inspection beacon 176, and the enforcement computer 175. At step A, the inspection beacon 176 broadcasts an inspection signal. The inspection signal for example includes a UUID, a major ID and/or a minor ID, such as described above with respect to the signals broadcasted from the beacons 140. An inspection beacon for example announces that the enforcement individual 176 (e.g., an inspection officer that checks if fares have been paid) is in the vicinity by broadcasting the inspection signal. The inspection signal is distinguished from signals broadcasted from the beacons 140 for example based on information in the UUID, major ID and/or minor ID that identifies the signal as an inspection signal to the mobile devices 130.

In one example, the enforcement computer 175 may be a mobile device that includes the inspection beacon 176. In another example, the enforcement computer 175 sends a signal to the beacons 140 to place them in inspection mode, and the beacons 140 broadcast the inspection signals.

At step B, the validation and enforcement application 132a on the mobile device 130a detects the inspection signal and disables any features for buying fare products or making fare payment at step C. This prevents the "mischievous" user from only paying the fare if they are being inspected or if they sense they will be inspected. For example, the validation and enforcement application 132a allows the user 131a to create and login to an account for fare payment which may be stored and managed by a backend system (not shown). The user may enable and disable auto payment, pay a fare on demand, link a credit card or bank account to the account, etc. The fare payment feature of the validation and enforcement application 132a is disabled so a user cannot buy fare products or pay a fare through the validation and enforcement application 132a when the inspection signal is received by the mobile device 130a and detected by the validation and enforcement application 132a. When, the inspection signal is received, the validation and enforcement application 132a operates in inspection mode and disables fare payment features and fare products buying features. The inspection signal may include a UUID or a major ID that are registered to invoke launching the validation and enforcement application 132a if it is not already running. The validation and enforcement application 132a may already be running because validation may have recently occurred. Also, the inspection signal is recognized by the validation and enforcement application 132a as an inspection signal for example based on a code in the major ID or in the minor ID.

In one example, the inspection signal broadcasted from the inspection beacon 176 is a Bluetooth or BLE signal. In another example, tap-based detection is performed and the inspection signal may be a Bluetooth or BLE signal tuned for a shorter distance, such as 3-4 centimeters. For tap-based detection, the user 131a may tap the mobile device 130a on the enforcement computer 175 carried by the enforcement person 177 to receive the inspection signal. The inspection signal in both examples includes the UUID, major ID and/or the minor ID and may include other information, such as signal strength, location information, etc.

At step D, the validation and enforcement application 132a calculates a unique inspection ID based on information derived from the inspection signal. The validation and enforcement application 132a enters peripheral mode and a message with the inspection ID is broadcasted or sent to the enforcement computer 175 at step E. The broadcast may be a short range broadcast, such as using BLE, Bluetooth, or NFC.

Similar to the unique mobile device ID derived for validation, such as described with respect to step D in figures 5 and 6, the inspection ID may be calculated using the major ID, minor ID and optional payload from the inspection signal. Location information may be used to calculate the inspection ID. Location information may be derived from information in the UUID or the payload of the inspection signal if it is provided. Location information may be determined by the mobile device 130a for example from internal location sensors, such as GPS, or from triangulation determined from signals received from local beacons, such as the beacons 140a-d. Thus, the inspection ID may be unique to the mobile device 130a at its current location. Examples of ID calculation functions are described above.

At step F, the enforcement computer 175 receives the inspection ID from the mobile device 130a assuming it is within range, and determines whether the mobile device 130a is within an area of inspection of the enforcement computer 175. An example of an area of inspection may be an area within a one meter radius of the current location of the enforcement computer 175. The area of inspection may be smaller if tap-based detection was used at step B, such as 5-10 centimeter radius. The enforcement computer 175 may use the distance, signal strength and optionally the azimuth and angle of the broadcasted signal from the mobile device 130a to determine the location of the mobile device 130a and whether it is in the area of inspection.

At step G, if the mobile device 130a is determined to be in the area of inspection, the enforcement computer 175 initiates communication with the mobile device 130a using the inspection ID. For example, the enforcement computer 175 sends an acknowledgment message to the mobile device 130a that includes the inspection ID so the validation and enforcement application 132a in the mobile device 130a knows that the enforcement computer 175 is ready to proceed to checking the validation of the user 131a. In another example, the enforcement computer 175 may broadcast or transmit an acknowledgment message that is encrypted with a key to the mobile device 130a. Only the mobile device 130a can decrypt the acknowledgment message sent from the enforcement computer 175 because no other mobile device knows the key. In yet another example, the enforcement computer 175 and the mobile device 130a calculate the inspection ID independently using the same inputs and the same function. For example, the inputs for the inspection ID calculation function described above may be determined by the mobile device 130a and broadcasted or sent to the enforcement computer 175 along with the inspection ID calculated by the mobile device 130a. Both the enforcement computer 175 and the mobile device 130a store the same function for calculating the unique inspection ID. The enforcement computer 175 also calculates the inspection ID. The enforcement computer 175 determines if the received inspection device ID that is calculated matches the received inspection ID to determine whether to continue with the process, e.g., initiate communication, authentication and validation determination.

Mutual authentication is performed at step H. The mobile device 130a and the enforcement computer 175 may exchange messages for authentication to establish identities of both sides. The mutual authentication may include generation of a key or set of keys that are then used for further encryption, decryption, enciphering, deciphering, etc. A conventional key encryption algorithm may be used.

At step I, the enforcement computer 175 and the mobile device 130a exchange messages to determine whether the user 131a was validated. Validation checking may include exchanging messages with a backend server not shown and/or the mobile device 130a to get the information needed to check validation. In one example, checking validation may include a determination of whether a fare was paid. Messages exchanged for validation checking are referred to as inspection messages.

For example, the validation and enforcement application 132a on the mobile device 130a may receive a transaction summary from a back end server if a fare was paid. The enforcement computer 175 may request the transaction summary from the validation and enforcement application 132a, and receive it in response to the request. The enforcement computer 175 may determine from the details of the transaction summary whether the fare was paid for the current area or ride. For example, the transaction summary may include time of the transaction, location where transaction occurred, and type of ticket that was purchased. From the details of the transaction summary, the enforcement computer 175 determines whether the fare was paid. For example, if the fare was for a single ride ticket valid for the current day to any destination, then the enforcement computer 175 determines the user 131a was validated. In another example, the validation and enforcement application 132a sends a message that automatic payment is enabled, and the fare will be deducted from the user account when the destination is reached.

The enforcement computer 175 may get transaction information from a backend server to check validation. For example, the validation and enforcement application 132a may send an ID for the user account of the user 131a to the enforcement computer 175. Using the account ID, the enforcement computer 175 may request fare payment information or an indication of whether the user 131a paid the fare from the backend server that stores user account information.

At step J, the results of the validation check are displayed for example on the enforcement computer 175 so the enforcement person 177 can view the results and take appropriate action if needed. Appropriate action if the fare was not paid may include having the user 131a make payment, pay a penalty fee, issue a ticket indicating notice of failed validation to the user, and/or remove the user 131a from the validation and enforcement area 101. If the results indicate that the fare was paid, the enforcement computer 175 may mark the ticket as consumed and inspected if it is a single ride ticket, and send information of the marked ticket to the backend server.

At step K, the results of the validation check are sent to the mobile device 130a, and the validation and enforcement application 132a may display or notify the user 131a of the results of the validation check through another type of input/output device at step L. After the results of the validation check are received or an acknowledgement is received from the enforcement computer 175 or the backend server that a validation check has been performed, the validation and enforcement application 132a may exit the inspection mode, thus enabling the fare purchase feature of the validation and enforcement application 132a. The user 131a may pay the fare if the validation check indicates the fare was not paid.

After steps E and F are performed, encryption keys may be used for secure communication. As described above, the encryption keys may be used to encrypt messages between the mobile device 130a and the enforcement computer 175 or the inspection ID may be included in the messages and the information in the messages is only accepted if it includes the correct inspection ID. Accordingly, the inspection ID and/or encryption keys may be used for secure communication between the mobile device 130a and the enforcement computer 175. Also, the inspection ID and/or the encryption keys may be run-time, i.e., generated in real-time and are only valid for the current time and location and mobile device. This provides additional security.

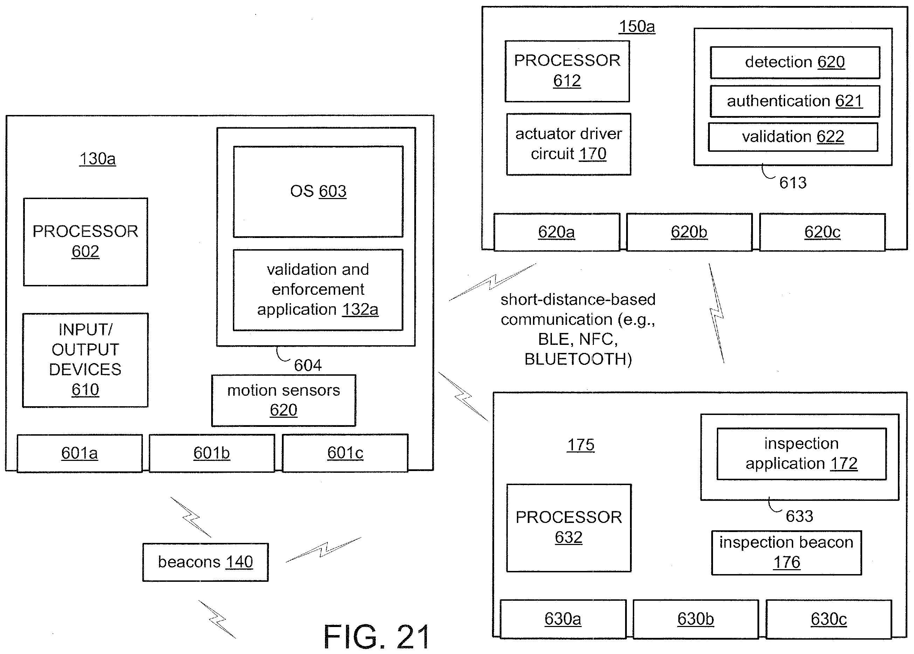

Figure 21 shows block diagrams of the mobile device 130a, the zone computer 150a, and the enforcement computer 175 of the system 2000 but is representative of any of the mobile devices, zone computers and enforcement computers that may be used in the system 2000. Also, some of the components of the mobile device 130a, the zone computer 150a, and the enforcement computer 175 are shown, and it will be apparent to one of ordinary skill in the art that the devices and computers may include other components not shown. Also, components of 130a and 150a are similar to the components shown in figures 6 and 15.

The mobile device 130a may include multiple interfaces 601, wired or wireless, for communicating with other devices. For example, interface 601a may be a Wi-Fi interface or a cellular interface or may include both interfaces. The interface 601a for example is a network interface that can communicate with a backend server via a network. 601b may include a Bluetooth interface. In one example, message exchanges between the mobile device 130a and the zone computer 150a are done through Bluetooth and the interface 601b but other interfaces may be used, such as BLE, Bluetooth 4.0 or other future versions of Bluetooth or NFC. Similarly, message exchanges between the mobile device 130a and the enforcement computer 175 are done through Bluetooth and the interface 601b but other short-distance interfaces may be used, such as Bluetooth 4.0 or other future versions of Bluetooth or NFC. Interface 601c may be a NFC interface, but the mobile device 130a may have both Bluetooth and NFC interfaces and multiple other interfaces. Interface 601b may be for communicating with the beacons140, for example, for triangulation-based or tap-based detection.

The mobile device 130a includes a processor 602 and data storage 604. The processor 602 for example is an integrated circuit. The processor 602 may be a chipset with central processing unit and/or custom processing circuits, such as an application-specific integrated circuit (ASIC) or field-programmable gate array (FPGA). The processor 602 may run an operating system (OS) 603 and applications, including validation and enforcement application 132a, for the mobile device 130a. The OS 603 and the applications are stored in data storage 604. Any information used by the validation and enforcement application 132a and the OS 603 may be stored in the data storage 604. For example, the data storage 604 may store registered UUIDs for determining whether to launch the validation and enforcement application 132a in response to receiving a beacon signal with a registered UUID. The data storage 604 may store transaction summaries for purchased fare tickets that can be used for checking validation. Also, the data storage 604 may store keys, location information, movement information determined from motion sensors 620, etc. The data storage 604 may include memory and/or non-volatile data storage.

The mobile device 130a includes input/output (I/O) devices 610, such as keyboard, touch screen display, speaker, etc. The I/O devices 610 may provide audio, visual and/or tactile output to indicate whether a user has been validated or results of a validation check. The mobile device 130a also includes motion sensors 620. Examples of motion sensors 620 may include accelerometer, gyroscope, and/or a motion co-processor. Information from the motion sensors 620 may indicate information or measurements of the motion of the mobile device 130a. This information may be used to determine whether the mobile device 130a is in a settled state.

The zone computer 150a includes a processor 612 and a data storage 613. The processor 612 is an integrated circuit. The processor may execute software or firmware or comprise custom processing circuits, such as an application-specific integrated circuit (ASIC) or field-programmable gate array (FPGA). The data storage 613 may include memory and/or non-volatile data storage. The data storage 613 may store software or firmware including machine readable instructions and may store any information used by the zone computer 150a. The software or firmware may include subroutines or an application for detection 620, authentication 621 and validation 622, such as described with respect to figures 4-6. The zone computer 150a may include I/O devices or be connected to an l/O device, such as a display, to provide indication to the user of whether they are validated.

The zone computer 150a also includes multiple interfaces 620, wired or wireless, for communicating with other devices. For example, interface 620a may be a Wi-Fi interface or a cellular interface or may include both interfaces. 620b may include a Bluetooth or Bluetooth 4.0 or BLE interface. In one example, message exchanges between the mobile device 130a and the zone computer 150a are done through a Bluetooth but other interfaces may be used. 620c may be a NFC interface, but the mobile device 130a may have both BLE and NFC interfaces. The interfaces 620b and 620c are short-distance communication interfaces. A short-distance communication interface may have a communication range of few meters (e.g., Bluetooth or BLE) or centimeters (e.g., NFC). The range is generally much shorter than Wi-Fi or cellular. The short-distance communication interface may cover a sub-location or a sub-location and its adjacent sub-location. The zone computer 150a may connect via a network interface of interfaces 620 to a server backend via the Internet or another wide area network or a local area network for validation, which may include fare payment.

If the zone computer 150a is used in a gated environment, such as shown in figure 3, it may include an actuator driver circuit 170 to control actuation of the physical barrier for the sub-location of the zone computer. In response to determining the user is validated, the zone computer 150a sends a signal to the actuator driver circuit 170 to invoke opening of the physical barrier, such as gate 160a for lane 110a. For example, the processor 612 validates a user associated with the mobile device 130a and sends a signal to the actuator driver circuit 170. The actuator driver circuit 170 drives an actuator of the gate 160a to open the gate 160a shown in figure 3. The processor 612 may also drive the circuit 170 to close the gate 160a. In one example, the global positioning system (GPS) sensor on the mobile device may be used to determine when the user enters and exits the mass transit system in order to determine the fare amount and open the gate 160a if the fare is paid when the user is exiting.

The enforcement computer 175 includes a processor 632 and a data storage 633. The enforcement computer 175 may be a mobile device or a stationary computer. The processor 632 is an integrated circuit. The processor may execute software or firmware or comprise custom processing circuits, such as an application-specific integrated circuit (ASIC) or field-programmable gate array (FPGA). The data storage 633 may include memory and/or non-volatile data storage. The data storage 633 may store software or firmware including machine readable instructions and may store any information used by the enforcement computer 175. The software or firmware may include the inspection application 172 that performs the functions described above with respect to figure 7.

The enforcement computer 175 also includes multiple interfaces 630, wired or wireless, for communicating with other devices. For example, interface 630a may be a Wi-Fi interface or a cellular interface or may include both interfaces. The interface 630a for example is a network interface that can communicate with a backend server via a network. 630b may include a Bluetooth interface and 630c may be a BLE or NFC interface or some other type of short-distance interface, but the enforcement computer 175 may have both BLE and NFC interfaces.

The enforcement computer 175 may include the inspection beacon 176 that broadcasts the inspection signal or the inspection beacon 176 may be a separate device from the enforcement computer 175. The beacons 140 are also shown. As stand-alone devices, the beacons 140 and/or the inspection beacon 176 may include circuits that may be programmed with a UUID and an interface for broadcasting their signals. In one example, the inspection beacon 176 and the beacons 140 may broadcast their signals using Bluetooth. If the beacons 140 and/or the inspection beacon 176 are incorporated in the zone computer 150a or the enforcement computer 175, they may use the interface of the computer for their broadcasts. Also, exchange of messages between the mobile device 130a, the zone computer 150a and the enforcement computer 175 may be through Bluetooth.

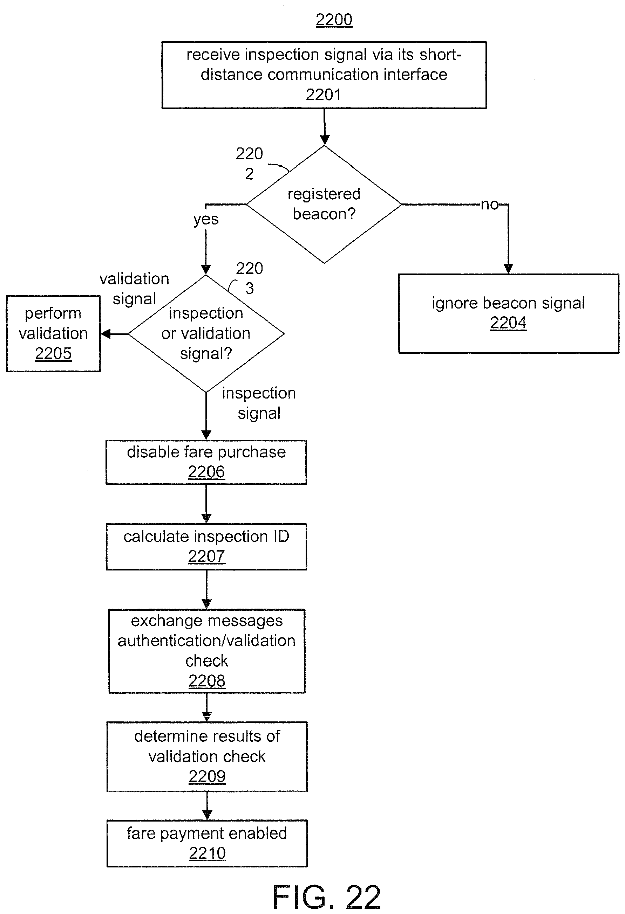

Figure 22 shows a flowchart of a method 2200 that may be performed by a mobile device, such as the mobile device 130a in the system 2000, for checking validation. The method 2200 is described by way of example with respect to the system 2000 shown in figure 1 but may be performed in other systems. At 2201, the mobile device 130a receives a signal from a beacon via its short-distance communication interface, such as via BLE or NFC. For example, the inspection beacon 176 broadcasts an inspection signal and it is received by the mobile device 130a.

At 2202, the mobile device 130a determines whether the received beacon signal is from a registered beacon. For example, the OS 603 running on the mobile device 130a determines whether the UUID or major ID in the received beacon signal is from a registered UUID or major ID. If the received beacon signal is from a registered beacon, the information for the beacon signal is sent to the validation and enforcement application 132a. If the validation and enforcement application 132a is not running, the OS 603 launches the validation and enforcement application 132a and sends the inspection signal information to the validation and enforcement application 132a. The mobile device 130a stores the registered beacon IDs (e.g., the major IDs) for the beacons 140 and the inspection beacon 176 so the OS 603 recognizes their beacon signals. At 2204, if the beacon signal is not recognized it is ignored.

At 2203, the validation and enforcement application 132a determines whether the received beacon signal is a validation signal or an inspection signal. A code in the beacon signal may identify it as a validation signal or an inspection signal. The validation signal is a beacon signal sent by one or more of the beacons 140, and may be used to invoke validation, such as described in figures 4-6. If the beacon signal is a validation signal, at 2205, validation is performed such as described with respect to figures 4-6. For example, a unique mobile device ID is calculated based on information in the beacon signal and is used to deduct the fare.

If the beacon signal is an inspection signal, such as from the inspection beacon 176, then a validation check is performed, such as described with respect to figure 7. For example, at 2206, fare purchase is disabled. For example, the validation and enforcement application 132a may include a fare payment feature that allows the user 131a to pay a fare by logging into their account. This feature is disabled. Also, the buying of fare products is disabled so the user cannot enable payment through another means during inspection.

At 2207, an inspection ID is calculated based on information received from the inspection signal. The inspection ID may be unique to the mobile device 130a and the current location of the mobile device 130a when the inspection ID is calculated. At 2208, messages are exchanged with the enforcement computer 175 using the inspection ID and one or more encryption keys via a short-distance communication interface (e.g., Bluetooth) to authenticate the mobile device 130a and to determine whether the user 131a was validated. As discussed with respect to figure 7, this may include determining whether the user 131a paid the fare. Results of the validation check are determined at 2209. The enforcement computer 175 may determine the results of the validation check and display them on the enforcement computer 175 and send the results to the mobile device 130a.

At 2210, after the validation results are received by the validation and enforcement application 132a, the fare payment is enabled. If the user 131a was determined to not have paid the fare, the user 131a may now pay the fare through the validation and enforcement application 132a.

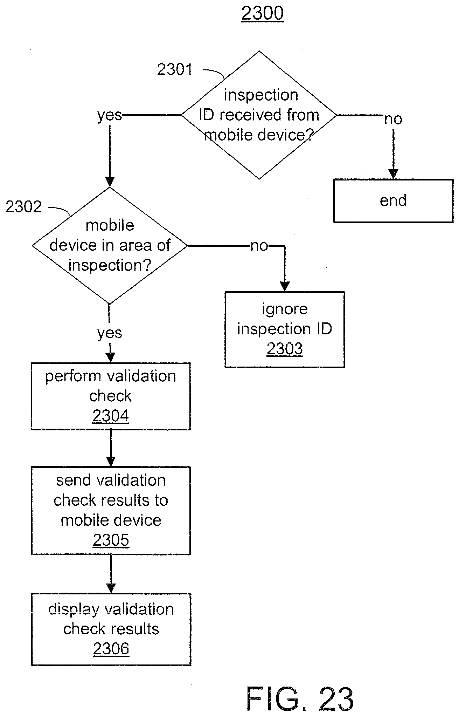

Figure 23 shows a flowchart of a method 2300 that may be performed by an enforcement computer, such as the enforcement computer 175, in the system 2000. At 2301, the enforcement computer 175 determines whether an inspection ID is received from the mobile device 130a via a short-distance communication interface of the enforcement computer 175. If the inspection ID is received, the enforcement computer 175 determines whether the mobile device 130a is in an area of inspection for the enforcement computer 175 at 2302. If tap-based detection was used, the enforcement computer 175 can determine whether the user tapped or came within close proximity (e.g., within 4-5 cm) of the enforcement computer 175. Alternatively, the enforcement computer 175 may scan for all Bluetooth mobile devices in range looking for devices which expose certain services/characteristics, and determines a mobile device is in the area of inspection based on signal strength, dwell angle, etc.

At 2303, if the mobile device 130a is not in the area of inspection, the inspection ID is ignored. If the mobile device 130a is in the area of inspection, the enforcement computer 175 determines whether the user 131a associated with the mobile device 130a was validated at 2304. At 2304, the validation is checked for example to determine whether the user 131a paid the fare.

At 2305, the enforcement computer 175 sends a message to the mobile device 130a with the validation check results. that the user is validated if the user is determined to be validated. Otherwise, at 2306, a message is sent indicating validation failure. Validation results may also be displayed on display.

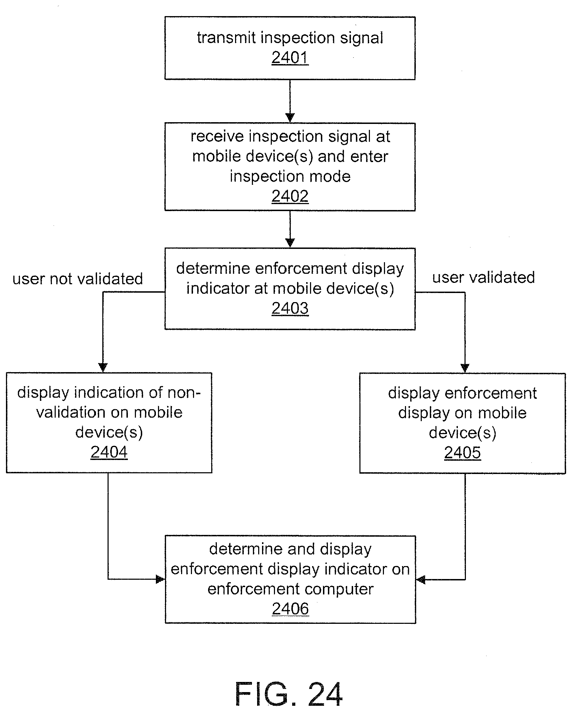

Figure 24 illustrates another method for enforcement. At 2401, an inspection signal is transmitted by at least one inspection beacon. The inspection signal includes an enforcement variable for calculating an enforcement ID. The enforcement variable may be changed periodically. For example, the enforcement variable may be changed at predetermined intervals and/or at different locations (e.g., at different stops if the inspection area is mobile, such as in a vehicle).

At 2402, the mobile devices 130 within range of the inspection signal receive the inspection signal and enter inspection mode whereby fare buying via the validation and enforcement applications 132 is disabled.

At 2403, the mobile devices 130 that received the inspection signal and that are in inspection mode each calculate an enforcement display indicator based on the enforcement variable in the inspection signal and a determination of whether the user associated with the mobile device has been validated. For example, the validation and enforcement application on a mobile device determines whether the mobile device stores an indication of whether the fare has been paid for the current validation and enforcement area. A recent transaction summary stored on the mobile device may be checked to determine whether the user is currently validated. The mobile device stores a function for calculating the enforcement display indicator from the enforcement variable in the inspection signal and a determination of whether the user associated with the mobile device has been validated. In a simple example, the function may be modulo(enforcement variable * validation determination), whereby the enforcement variable is an integer greater than or equal to 1 and the validation determination is 0 or 1 depending on whether the user is validated. If the validation determination is 0 (e.g., meaning the user is not validated), the function returns "undefined" or an error, and an indication of non-validation is displayed on a display of the mobile device at 2404. If the validation determination is 1 (e.g., meaning that the user is validated), the enforcement display indicator is displayed on the mobile device at 2405. Of course, other functions may be used. The output of the function may be the enforcement display indicator or the enforcement display indicator may be derived from the output of the function.

The enforcement computer 175 stores the same function as the mobile device, e.g., modulo(enforcement variable * validation determination). The enforcement computer 175 also stores the current enforcement variable. At 2406, the enforcement computer 175 also calculates the output of the function assuming the user is validated (e.g., the validation determination is 1) and displays the enforcement display indicator (which may be the output of the function or may be derived from the output of the function) on a display of the enforcement computer 175. Then, the enforcement individual can ask each user that is in a predetermined proximity to the enforcement computer 175 to show their mobile device that is displaying the enforcement display indicator. If the mobile device is displaying the same value as the display on the enforcement computer 175, the enforcement individual can quickly determine the user is validated; otherwise the user may not be validated. Instead of displaying a value, a specific picture may be determined according to the inputs of the enforcement variable and the validation determination is determined and displayed.

As discussed above and shown in figure 19, the enforcement computer 175 may be a mobile device that may be carried by an inspector or some other individual, e.g., enforcement person 177, to validate people in the validation and enforcement area 101. For example, the enforcement computer 175 is in close proximity to the mobile device 130a as shown in figure 1 and communicates with the mobile device 130a to check the validation of the user 131a. The enforcement computer 175 for example runs an inspection application 172 to check the validation of the users 131. The inspection beacon 176 can transmit an inspection signal to facilitate the checking of the validation of the users 131. For example, when the enforcement person 177 wants to request proof of payment of the users 131, the enforcement person 177 triggers the broadcasting of an inspection signal from the inspection beacon 176 via Bluetooth or via some other short-distance wireless communication interface, and the mobile device of each user receiving the inspection signal may generate a visual indication based on the inspection signal of whether the user paid the fare or is otherwise authorized to be in the validation and enforcement area 101. The visual indication is displayed on the mobile device and may be shown to the enforcement person 177. As discussed in further detail below with respect to figure 11, the visual indication may be customized by the enforcement person 177 or another individual.

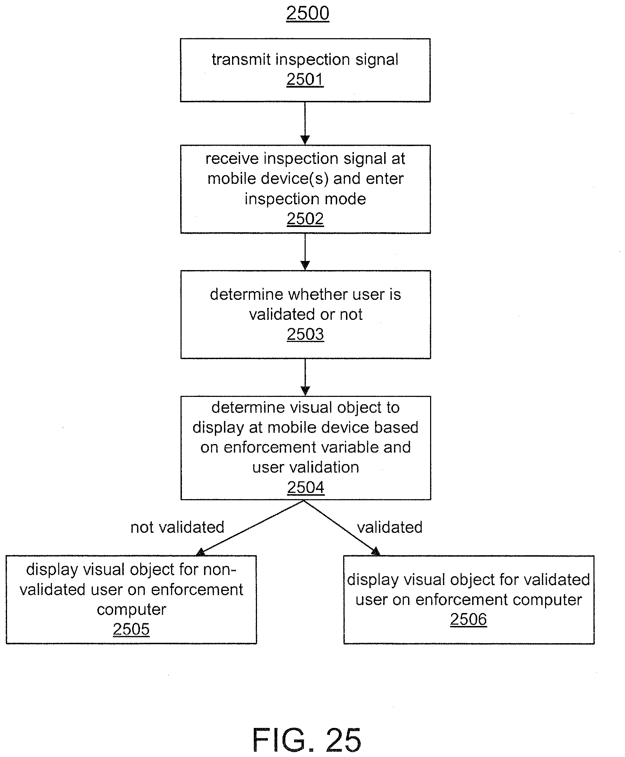

Figure 25 illustrates a method 2500 for enforcement based on generation of a visual object. The method of figure 25 is described by way of example with respect to the system shown in figure 19 but the method may be used in other systems. Steps of the method 2500 may be performed by the enforcement computer 175 and/or the mobile devices 130. For example, one or more steps may be performed by the inspection application 172 running on the enforcement computer and the validation and enforcement applications 132 running on the mobile devices 130.

As indicated above, the method of figure 25 shows a method 2500 for enforcement based on generation of a visual object. A visual object is information that can be displayed on an electronic display. In an example, the electronic display may be a display of any of the mobile devices 130, the enforcement computer 175 and/or another display. Examples of a visual object include an image, animation, video, text, symbol, shape, picture, bar code, etc.

At 2501, an inspection signal is transmitted by at least one inspection beacon, such as the inspection beacon 176. The inspection signal includes an enforcement variable for determining a visual object to display, for example on the mobile devices 130, to validate that the users 131 paid the fare or are otherwise authorized to be in the validation and enforcement area 101. The enforcement variable may be an integer, a string or some other variable type. The inspection beacon 176 may be part of the enforcement computer 175 or may be provided as a separate device or may be incorporated in another computer other than the enforcement computer 175.

The enforcement person 177 may selectively trigger the transmission of the inspection signal from the inspection beacon 176 at step 2501. For example, the inspection application 172 running on the enforcement computer 175 receives user input from the enforcement person 177 via an input/output device of the enforcement computer 175 to start transmitting the inspection signal, such as when the enforcement person 177 wants to verify that a user or set of users in proximity to the inspection beacon 176 are validated. In another example, the transmission of the inspection signal may be triggered by movement, such as when the vehicle moves or when the enforcement computer 175 moves. For example, the enforcement computer 175 may be a mobile device that includes a sensor that detects movement of the enforcement computer 175. An amount of movement or rate of speed of movement of the enforcement computer 175 may be measured to trigger the broadcast of the inspection signal. According to an example, movement of the enforcement computer 175 at a high rate of speed, such as an intentional shaking of the mobile enforcement computer 175 may trigger transmission of the inspection signal. For example, instead of pressing a button on a display of the enforcement computer 175 which is generated by the inspection application 172, the enforcement person 177 shakes the mobile enforcement computer 175 to trigger transmission of the inspection signal. In another example, the inspection signal is broadcasted periodically (e.g., time-based) or at different locations (e.g., location-based), such at each but stop or train stop.

The visual object that indicates whether a user is validated may be changed periodically to prevent fraud. For example, if the same visual object is always used to indicate that a user is validated, the visual object may be copied and displayed on the mobile device of a user to represent that the user has paid even when the user did not. The enforcement variable, which is included in the inspection signal transmitted from the inspection beacon 176, may be changed to invoke generation of different visual objects to indicate whether a user is validated or not. A different enforcement variable may be used for a different visual object, or a different enforcement variable may be used for a different set of visual objects if multiple visual objects are used, such as a different visual object for each fare category as discussed below. The enforcement variable may be changed to invoke generation of a different visual object created or selected by a user, such as the enforcement person 177 via the enforcement computer 175. Also, different visual objects may be selected or created for different categories of users or fares (e.g., adult, child, senior, peak hours, non-peak hours, daily pass, weekly pass, etc.) and for different indications, such as to indicate paid or not paid.

A determination of when to change the visual object may be based on received user input, and/or may be based on conditions that are detected or measured to automatically trigger changing of the visual object. The received user input to change the visual object may be provided from the enforcement person 177 via the enforcement computer 175. For example, the inspection application 172 running on the enforcement computer 175 may generate a display that allows a user to provide input to change the visual object. The user may select visual objects to display to indicate a validated user, a non-validated user, different categories of users, etc. A different enforcement variable may be used for each set of visual objects. Instead of or in addition to the enforcement person 177 selecting the visual objects for display, the visual objects can also be selected by another person, such as another transit agency employee. This person may be tasked with curating the visual objects. The visual objects may be selected periodically for routes, stops, durations, times, user profiles, fare types, etc.

By way of example, the conditions to trigger changing of the visual objects automatically may be based on time, location, movement or other factors. For example, a different visual object or a set of different visual objects may be used for different days, hours, or other time periods. Different visual objects may be used for different vehicles, or different vehicle stops or different vehicle routes. In another example, movement of the enforcement person 177 and/or the mobile enforcement computer 175 may be measured to trigger changing the visual objects. For example, after a predetermined number of steps are taken by the enforcement person 177, the visual objects are changed. In another example, changing of the visual objects may be randomized.

At 2502, the mobile devices 130 within range of the inspection signal receive the inspection signal and enter inspection mode whereby fare buying via the validation and enforcement applications 132 is disabled.

At 2503, the mobile devices 130 that received the inspection signal and that are in inspection mode each determines whether the user associated with the mobile device is validated for the validation and enforcement area 101. For example, to determine whether the user is validated, the mobile device accesses validation or fare payment information that is stored locally in the mobile device or may request the information from a remote server or any type of remote computer. In an example, the mobile device may store a recent transaction summary for fare payment, and the transaction summary is parsed to determine whether it is valid for the current location and the current time.

At 2504, each of the mobile devices 130 that received the inspection signal determines a visual object to display based at least on the enforcement variable in the inspection signal and the validation determination from 2503. For example, the mobile device stores a function for calculating the visual object to display from the enforcement variable in the inspection signal. In a simple example, the function may be modulo(enforcement variable * validation determination), whereby the enforcement variable is an integer greater than or equal to 1 and the validation determination is 0 or 1 depending on whether the user is validated. If the validation determination is 0 (e.g., meaning the user is not validated), the function returns "undefined" or an error, and a visual object indicating that the user is not validated is displayed on a display of the mobile device at 2505. If the validation determination is 1 (e.g., meaning that the user is validated), a visual object indicating that the user is validated is displayed on the mobile device at 2506. In another example, a function for determining the visual object based on a category associated with a user may include (enforcement variable * validation determination * category). The category may be a numeric value representing a particular category. For example, 1 is assigned to an adult, non-peak fare; 2 is assigned to adult, peak fare, etc. Accordingly, the output of the function may be used to identify a visual object representing the category of the user and whether the user is validated or not. Of course, other functions may be used, and the output of the function may be a value for determining the visual object.

To determine the visual object to display at the mobile devices 130 of the users 131 based on the output of the function, different mechanisms may be used. In an example, a mobile device stores a library of visual objects and an associated function output value for each visual object. For example, if the output of the function is "undefined" (e.g., meaning the user is not validated), a lookup in the library is performed to retrieve the visual object for "undefined", and the mobile device 130 displays the visual object.

The library of visual objects may include a visual object for each category of user or fare and for an indication of validated or not validated. For example, if the user is under a child fare, the visual object may be a child with a green background if the user is validated, and if the user is under an adult fare, the visual object may be a businessman with a green background if the user is validated. A non-validated user of any category may be a flashing red star. A lookup in the library is performed based on the output of the function (i.e., function output value) to determine and retrieve the visual object from the library to display that represents the category of the user and whether the user is validated or not.

As discussed above with respect to step 2501, the visual objects may be changed periodically, such as to prevent fraud. The enforcement variable is included in the inspection signal, and a different enforcement variable may be included depending on the visual objects that are to represent whether a user is validated or not, category of user, etc. Table 1 below shows how an enforcement variable is related to a visual object and a function output, and how changing a visual object based on the enforcement variable may be performed.

**Table 1**

| **Enforcement Variable** | **Visual Object** | **Indication Represented by Visual Object** | **Function Output Value (lookup value)** |
|---|---|---|---|
| 256 | Green Square | Validated User | 3010 |
| 256 | Red Square | Non-Validated User | undefined |
| 277 | Blue Sky | Validated User | 2012 |
| ... | ... | ... | ... |

Table 1 includes columns for enforcement variable, visual object, indication represented by visual object, and function output value. According to an example, assume that initially the enforcement person 177 selects through the inspection application 172 that a green square is to represent a validated user and a red square is represented by a non-validated user. For these selections, enforcement variable value 256 is transmitted in the inspection signal. A mobile device of the mobile devices 130 receives the inspection signal and calculates a function output value according to the enforcement variable, a determination of whether the user is validated or not, and possibly other information, such as category. The library of visual objects stored in the mobile device may include the columns for visual object and associated function output values, which are the lookup values for the library of visual objects. The mobile device calculates the function output value and performs a lookup with the function output value (e.g., 3010) in the library of visual objects to determine the visual object to display (e.g., green square). A green square is displayed if the user is validated. Subsequently, the enforcement person 177 selects a blue sky image to represent a validated user. The enforcement variable value 257 is transmitted in the inspection signal. A mobile device receiving the inspection signal calculates a function output value (e.g., 2012) according to the enforcement variable, and a determination of whether the user is validated or not. The mobile device performs a lookup with the function output value (e.g., 2012) to determine the visual object to display is the blue sky for the validated user.

Multiple images that represent different categories of users and whether a user is validated or not may be associated with an enforcement variable and stored in the library of visual objects. Accordingly, different sets of images may be associated with different enforcement variables. Also, the library of visual objects may be periodically updated, for example, by downloading new libraries or updates to the library from a remote server.

Instead of using a locally stored library of visual objects, in another example, the mobile device sends the function output value to a remote server, and the remote server sends to the mobile device an image associated with the function output value to display.

In another example, the mobile device calculates a unique identifier based on information in the beacon, e.g., the unique identifier may be the function output value. The mobile device sends the unique identifier along with a user credential for the user of the mobile device to the server. The server validates the fare payment information according to the received information and sends back the correct visual object based on profile, location, etc., to the mobile device for display.

In yet another example, an image is stored in the mobile device, and based on the function output value, the mobile device modifies the image and displays the modified image. For example, the stored image may have a blue background. If the output of the function is "undefined" (e.g., meaning the user is not validated), the background color is changed to red. If the output of the function is a different value (e.g., meaning the user is validated), the background color is changed to green. In another example, if the image includes a shape, the shape is changed according to the function output value, or if the image includes text, the text may be changed according to the function output value. The mobile device may include programming or accessing a library that indicates the change to effect on the stored image based on the function output value.

In another example, the function output value may be a bite array that is converted to an image by the validation and enforcement application. For example, the bite array may be pixel locations and dots of a predetermined color and intensity are displayed at each location. In other examples, the bite array may specify vertices of a triangle or a square or another shape, or the bite array may include ASCII values that are converted to text or a string that can be displayed.

The visual object displayed based on the function output value may be selected and/or created by the enforcement person 177 or another individual. For example, the enforcement person 177 may select images that are associated with a validated user, a non-validated user, and different categories of users or fares. The selections may be stored in a remote server and downloaded to the mobile devices 130. For example, the mappings of function output values to images may be downloaded to the mobile devices 130 and used to determine the visual object to display based on the calculated function output value. Also, the enforcement person 177 may create visual objects and upload the created visual objects to be displayed.

The enforcement computer 175 stores the same function as the mobile device, e.g., modulo(enforcement variable * validation determination). The enforcement computer 175 also stores the current enforcement variable that is transmitted in the inspection signal. At 2505, the enforcement computer 175 also calculates the output of the function assuming the user is validated (e.g., the validation determination is 1) and displays the visual object associated with the current enforcement variable and representative of a validated user. If there are multiple categories of validated users and different visual objects associated with each category, then the enforcement computer 175 may display each of the visual objects representing the multiple categories of validated users and a description of the respective category for each visual object. Then, the enforcement person 177 can ask each user that is within a predetermined proximity to the enforcement computer 175, which includes the inspection beacon 176 transmitting the inspection signal, to show their mobile device that should be displaying a visual object. If the mobile device is displaying the same visual object as the enforcement computer 175, the enforcement individual can quickly determine the user is validated; otherwise the user may not be validated. The enforcement computer 175 may also display a visual object currently representing a non-validated user to compare against the visual object shown on the mobile device. In another embodiment, the mobile devices 130 may calculate an identifier according to information in the beacon and send the unique identifier to a remote computer server at 110.

The methods shown in figures 4 and 5 generally describe a mobile device communicating with a zone computer to validate a user. Examples are also described whereby the zone computer and/or the mobile device communicate with a backend server, which may be in a cloud. For example, in a "credential" system, the validation information is stored on a backend server (e.g., on the cloud), and the mobile device stores the user's credentials, such as user account number, password, etc. The user's credentials may be provided to the backend server for completing validation or enforcement of transactions in real-time.

According to another example of the present disclosure, validation is performed without the zone computer. For example, the mobile device communicates directly with the backend server to perform validation. The system 100 shown in figures 1-3 may be used in this example, except the zone computers 150 are excluded from the system 100, or one or more of the zone computers 150 remain in the system 100 but may be bypassed to validate a user. Excluding the zone computers 150 saves costs for the system 100 and can reduce latency by eliminating steps for message exchange between a mobile device and zone computer and message exchange between the zone computer and backend server.

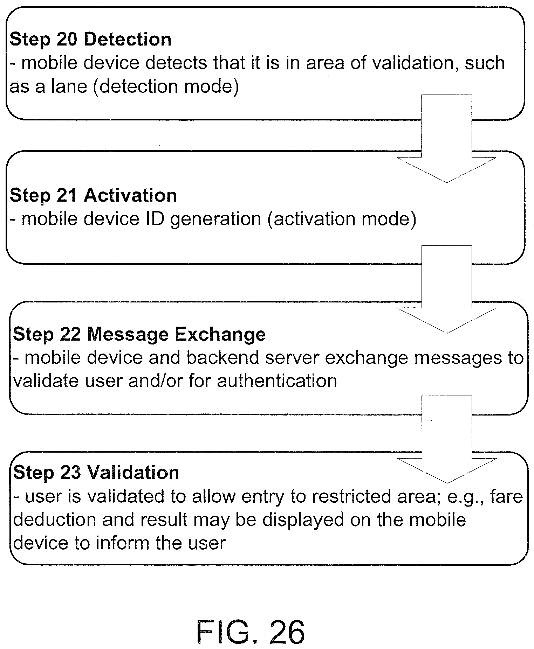

Figure 26 shows a method, similar to the method shown in figure 4, except the message exchange is performed between the mobile device and the backend server instead of between the mobile device and the zone computer. Referring to figure 4, steps are shown for detection at step 10, activation at step 11, exchange at step 12 and validation at step 13. Similarly, steps are shown in figure 26 for detection at step 20, activation at step 21, exchange at step 22 and validation at step 23. Similar to step 10 of figure 4, at step 20 of figure 26, for detection, a mobile device determines whether it is in an area of validation based on information received from beacons. However, at step 20, the mobile device is not determining whether it is in proximity to a zone computer, but instead determines whether it is in a predetermined sub-location of an access area of the restricted area, such as one of the lanes 110. Detection techniques discussed with respect to step 10 are applicable to step 20. For example, the mobile device 130a enters lane 110a, as shown in figures 1 and 2, and detects through triangulation or tap-based detection that it is in lane 110a. The access control application 132a for example enters detection mode in response to receiving a beacon signal to detect it is in lane 110a. The mobile device for example evaluates the proximity of beacons, performs a triangulation, and perform activations (step 21) if the mobile device determines it is in a predetermined sub-location of the access area based on the triangulation.

After the mobile device 130a detects it is in a sub-location of the access area (e.g., area of validation 300 or lane 110a), activation is performed at step 21. For example, the access control application 132a enters activation mode to calculate the unique ID or IDs based on information from the beacons, and a message with the unique ID or IDs may be sent to the backend server for validation at step 22. Examples of calculating the unique ID or IDs are described above with respect to figures 4 and 5.

The message exchange of the step 22 may include the mobile device 130a and the backend server exchanging information for validation. For example, the backend server determines whether a mobile device unique ID is received from the mobile device 130a and determines whether the mobile device 130a is in a sub-location of the access area, such as lane 110a. The backend server may receive the mobile device unique ID from the mobile device 130a and determines that the mobile device 130a is in one of the sub-locations, such as one of the lanes 110. Also, the backend server may determine the particular sub-location where the mobile device 130a is currently located, such as lane 110a, from the unique ID, or the mobile device 130a may send the particular sub-location with the message that includes the unique identifier. Also, as discussed above, the unique ID sent in the message may be used for secure message exchange, e.g., used as encryption keys, between the mobile device 130a and the backend server. In an example, the backend server may determine whether the mobile device unique ID is associated with the validation services provided by the backend server, and if so, the backend server may begin an authentication process, which may then be followed by the message exchange for validation.

Also at step 22, the mobile device 130a may send user credentials of the user 131a during the message exchange to validate the user 131a. The user credentials may include account information, password, or any information needed to validate the user 131a. Also, access control application 132a on the mobile device 130a, when accessing the backend server, may authenticate while sending the mobile device unique ID and/or other information to the backend server. In an example, authentication may be performed using an API access token. For example, OAuth, which is an open standard for authorization may be used to provide the access control application 132a with 'secure delegated access' to the backend server services. The access control application 132a may also send the authentication/user credentials along with the mobile device unique ID and/or other information to the backend server to reduce turnaround and perform authentication and validation in a single message exchange.

At step 23, the backend server performs validation of the user 131a. For example, the backend server makes a decision on whether the user 131a is validated based on data exchanged with the mobile device and data stored or available at the backend server. For example, the backend server deducts a fare from the user's account and sends a validation signal to facilitate access to the restricted area 101. In another example, the backend server communicates with a fare management system that may be hosted by another server to determine whether the user has an account for fare payment, whether the user has sufficient funds for payment, autopayment of the fare, etc. A validation signal may be sent to a fare gate actuator driver circuit of the lane 110a to open the gate 160a if the user 131a is validated. The fare gate actuator driver circuit for example is connected to a network interface to receive the validation signal from the backend server to open the gate. The validation process happens in real-time so as not to delay validated access to the restricted area. In another example, the validation signal may be sent from the backend server to the mobile device 130a, and the access control application 132a sends the validation signal to the fare gate actuator driver circuit to open the gate 160a.

By way of example, operation of the mobile device 130a is described above, but any of the mobile devices 130 located in any of the sub-locations (e.g., lanes 110) may perform the validation steps described above. The mobile device 130a may remain in the user's pocket or bag and enters into activation mode to facilitate payment at steps 20 and 21. In the activation mode, the access control application 132a may invoke fare payment by transmitting the unique ID, credential information, and sub-location information to the backend server over a network, such as the Internet. The information needed for the backend server to validate the user 131a may only be transmitted when the access control application 132a is in activation mode to minimize unauthorized access to the validation information.

After the backend server validates the user 131a and transmits the validation signal to open the gate 160a, the user 131a moves through the lane 110a into the restricted area 101. After the user 131a moves past the gate 160a, the gate 160a closes. One or more sensors may be provided at the gate 160a, e.g., motion sensors, ultrasonic sensors, video analytics, etc., that sense the user 131a passing through the gate 160a, and the gate 160a is closed in response to the sensor(s) detecting that the user 131a has passed through the gate 160a. In an example, entry beacons and exit beacons may be employed to determine whether a user has passed through the gate 160a. In another example, one or more sensors on the mobile device 130a may detect the user's motion and send a signal to the fare gate actuator driver circuit to close. For example, the mobile device 130a may estimate distance and direction traveled using output from a gyroscope, pedometer, or another suitable motion detector. In an example, the gate 160a may be opened in a special mode to allow the user 131a and another user, such as a caretaker, to pass through the gate 160a. For example, the access control application 132a sends information to the backend server during the message exchange at step 22 that indicates another user (e.g., caretaker) needs to enter the restricted area with the user 131a. For example, with the mobile device unique ID, a special request may be sent that includes a request to authenticate the user and the caretaker. This may be a special request for handicapped access. The backend server may validate the special request which may include validating both users, and sends a signal or special command to the gate 160a to open the gate 160a and allow both users to pass before closing the gate 160a. Validating the special request may include charging an additional fare for both users or charging a handicapped fare. The actuator driver circuit at the gate 160a may recognize the special command and maintain the gate 160a in an open position for an extended period to allow both users to pass and/or sensors at the gate 160a or in the mobile device 130a may detect two users passing through the gate 160a and then invoke closing the gate 160a.

The steps above are generally described with respect to user 110a moving into restricted area 101 via lane 110a. The steps of figure 26 are not limited to validating a user at a fare gate and may be performed for any validation area, including validation areas that may not have a physical barrier to control access thereto.

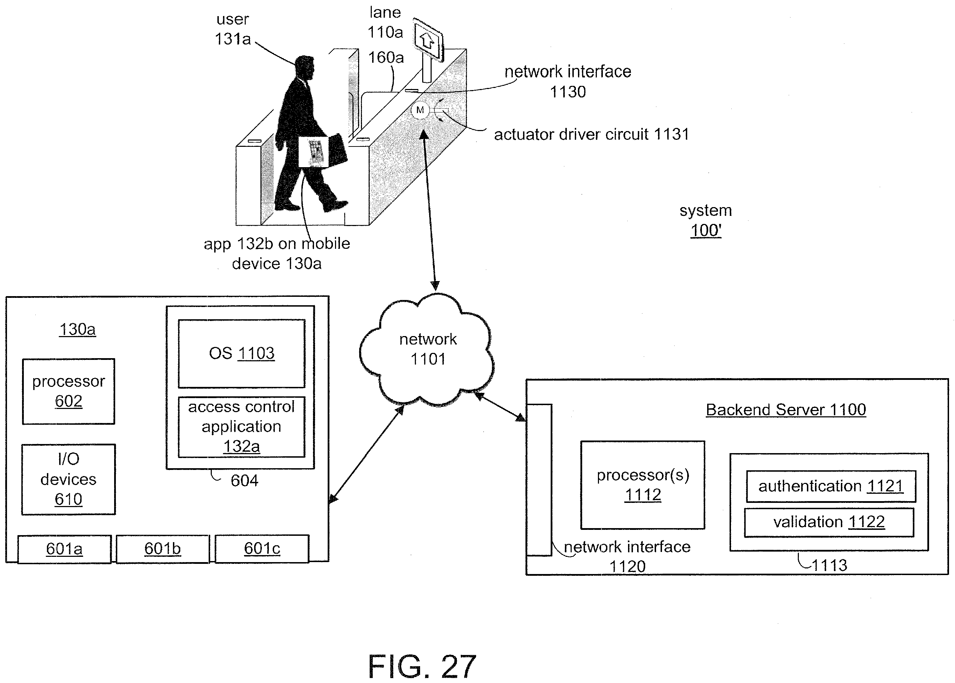

Figure 27 shows a block diagram of a system 100' including the mobile device 130a and the backend server 100. The system 100' is the same as the system 100 shown in figure 1 except the zone computers 150 may not be used. The method shown in figure 26 may be performed by the system 100'.

The mobile device 130a is described with respect to figure 6 and thus is not described again. The backend server 1100 may one or more processors 1112 and a data storage 1113. The processor 1112 is an integrated circuit. The processor 1112 may execute software or firmware or comprise custom processing circuits, such as an ASIC or and FPGA. The data storage 1113 includes software or firmware including machine readable instructions. The software or firmware may include subroutines or applications for authentication 1121 and validation 1122. Authentication 1121 may include authenticating the mobile device 130a such as described above. Also, a secure communication channel may be established between the mobile device 130a and the backend server 1100. Validation 1122 is described with respect to figure 26 and may include a message exchange with mobile device 130a to receive user credentials and validate the user 131a based on the credentials and send a validation decision back to the mobile device 130a, where it may be displayed on the mobile device 130a. Also, the backend server 1100 may send a signal to the actuator driver circuit 1131 via network interface 1130 to open the gate 160a. The actuator driver circuit 1131 drives an actuator of the gate 160a to open the gate 160a and may also drive the circuit 1131 to close the gate 160a. In one example, sensors on the mobile device 130a or beacons in proximity to the lane 110a may be used to determine when the user enters and exits the lane 110a to open and close the gate 160a. The backend server 1100 may be connected to the actuator circuit 1131 and the mobile device 130a via network interface 1120 and the network 1101. The network 1101 may include one or more of a local area network, wide area network, Internet, public or private networks, access network, etc.

What has been described and illustrated herein is an example along with some of its variations. The terms, descriptions and figures used herein are set forth by way of illustration only and are not meant as limitations. Many variations are possible within the scope of the subject matter, which is intended to be defined by the following claims and their equivalents in which all terms are meant in their broadest reasonable sense unless otherwise indicated.

## Claims

1. A secure short-distance-based communication and access control system (100) to control access to a restricted area (101), the system comprising:
a plurality of electronically-controlled movable physical barriers (160), wherein each electronically-controlled movable physical barrier (160) is located in a different sub-location of a plurality of sub-locations of an access control area (102) associated with the restricted area (101);
at least one beacon (140) for each sub-location, wherein each beacon (140) broadcasts a beacon ID, including one or more unique identifiers, in its sub-location, wherein the beacon ID includes at least a major ID and a minor ID, wherein the minor ID indicates a particular sub-location; and
a plurality of zone computers (150), wherein each zone computer (150) is locally associated with a different sub-location of the plurality of sub-locations and each zone computer (150) comprises:
an actuator driver circuit (170) to control actuation of the physical barrier for the sub-location of the zone computer (150);
a short-distance communication interface (620b-c) to communicate with a mobile device (130) if the mobile device (130) is in the sub-location of the zone computer (150); and
a processor (612) to determine whether the mobile device (130) is in the sub-location of the zone computer (150) and determine whether a mobile device unique identifier is received from the mobile device (130) via the short-distance communication interface (620b-c), wherein the mobile device unique identifier is calculated from the broadcasted beacon ID received from the at least one beacon (140) for the sub-location of the zone computer (150), wherein the mobile device unique identifier is unique to a current location and time of the mobile device, wherein the mobile device unique identifier is calculated based on at least the major ID and the minor ID;
in response to determining the mobile device (130) is in the sub-location of the zone computer (150) and in response to determining the mobile device identifier is received, the processor determines whether a user (131) associated with the mobile device (130) is validated to access the restricted area (101), wherein the zone computer and the mobile device store a same function for calculating the mobile device unique identifier, wherein the zone computer determines if the received mobile device unique identifier matches a mobile device ID calculated by the zone computer to determine whether to continue with the process for the validation, and
in response to determining the user (131) is validated, to send a signal to the actuator driver circuit (170) to invoke opening or closing of the physical barrier (160) for the sub-location of the zone computer (150).

2. The secure short-distance-based communication and access control system (100) of claim 1, wherein the mobile device identifier is unique to the current location of the mobile device (130) when it transmits the mobile device identifier to the zone computer (150) of the sub-location where the mobile device (130) is located;
wherein the processor (612) uses one or more encryption keys to securely transmit messages to the mobile device (130) in response to determining the mobile device (130) is in the sub-location of the zone computer (150); and wherein the securely transmitted messages authenticate the mobile device (130) and the zone computer (150); and if the mobile device (130) is authenticated, the securely transmitted messages include messages for validating the mobile device (130);
and/or
wherein a fare associated with accessing the restricted area (101) is paid from a user account to validate the user (131).

3. The secure short-distance-based communication and access control system (100) of claim 1 or claim 2, wherein the mobile device (130) comprises:
at least one short-distance communication interface (601 b-c) to receive a beacon identifier from at least one beacon;
a data storage storing an operating system (603) and an access control application (132);
a processor (602) executing the operating system (603), wherein the operating system (603) determines whether the received beacon ID is a registered beacon unique identifier, and in response to determining the received beacon ID is registered, launching the access control application (132) stored on the mobile device (130) if the access control application (132) is not already running, wherein
the access control application (132), in response to being launched, is executed by the processor (602), and the access control application (132) determines whether the mobile device (130) is at the sub-location,
in response to determining the mobile device (130) is at the sub-location, calculating the mobile device unique identifier based on the beacon ID, wherein the mobile device unique identifier is only valid for the sub-location where the mobile device (130) is currently located,
wherein the access control application (132) engages in secure communication with the zone computer (150) using one or more keys via the at least one short-distance communication interface (601 b-c) to validate the user (131) and to allow access to the restricted area (101) through the sub-location if the user (131) is validated, and
wherein the mobile device unique identifier is calculated based on signal strength of a received signal from the at least one beacon (140), the major ID of the beacon ID, and the minor ID of the beacon ID.

4. The system (2000) according to claim 1,
the system (2000) further comprising:
a plurality of inspection beacons in a validation and enforcement area (2010);
an enforcement computer (175) comprising:
at least one short-distance communication interface (630b-c); and
a processor (632) to invoke an inspection beacon (176) of the plurality of inspection beacons to broadcast an inspection signal via at least one short-distance communication interface (630b-c), wherein in response to a second mobile device (130) receiving the inspection signal, the second mobile device (130) enters an inspection mode and disables fare buying on the second mobile device for a fare associated with the validation and enforcement area (2010), wherein the disabling fare buying prevents a second user (131) from being able to only pay the fare when the second user is being inspected, and
the processor (632) of the enforcement computer (175) exchanges inspection messages with the second mobile device (130) via the at least one short-distance communication interface (630b-c) to determine whether the second user (131) has been validated when the second mobile device (130) is in inspection mode;
wherein the system (2000) determines through an inspection process whether the second user (131) in the validation and enforcement area (2010) has gone through validation and has been approved to be in the validation and enforcement area (2010).

5. The system (2000) of claim 4, wherein, to invoke the inspection beacon (176) to broadcast the inspection signal, the processor (632) in the enforcement computer (175) sends an inspection mode signal to the plurality of inspection beacons in the validation and enforcement area (2010), and the plurality of inspection beacons enter an inspection beacon mode and broadcast the inspection signal.

6. The system (2000) of claim 4 or claim 5, wherein in response to the second mobile device (130) receiving the inspection signal, the second mobile device (130) calculates an inspection ID from information in the inspection signal, wherein the inspection ID is unique to the second mobile device (130), and sends the inspection ID to the enforcement computer (175), and
wherein the enforcement computer (175) is to receive the inspection ID via the at least one short-distance communication interface (630b-c), and the processor (632) of the enforcement computer (175) is to determine whether the second mobile device (130) is in an area of inspection of the enforcement computer (175), and in response to determining the second mobile device (130) is in the area of inspection, engage in the exchange of the inspection messages with the second mobile device (130) using the inspection ID to determine whether the second user (131) is validated,
and/or
wherein the enforcement computer (175) comprises a network interface to communicate with a backend server via at least one of a local area network and a wide area network, and the processor (632) sends a validation request to the back-end server to determine whether the second user (131) paid the fare,
and/or
wherein the enforcement computer (175) comprises a display, and the processor (632) of the enforcement computer (175) displays an indication of whether the second user (131) is validated on the display, and the processor (632) of the enforcement computer (175) sends a message to the second mobile device (130) with an indication of whether the second user (131) is validated, and the second mobile device (130) is to exit the inspection mode and allow fare payment through the second mobile device (131) after receiving the message with the indication of whether the second user (131) is validated.

7. An access control system (100) to validate access to a restricted area, the system comprising:
a plurality of electronically-controlled movable physical barriers (160), wherein each electronically-controlled movable physical barrier (160) is located in a different sub-location of a plurality of sub-locations of an access control area (102) associated with the restricted area (101);
an actuator driver circuit (1131) for each electronically-controlled movable physical barrier to control actuation of the physical barrier (160);
at least one beacon (140) for each sub-location, wherein each beacon (140) broadcasts signals in its sub-location and the broadcasted signals include a beacon ID comprised of one or more unique identifiers, wherein the beacon ID includes at least a major ID and a minor ID, wherein the minor ID indicates a particular sub-location;
a backend server (1100) including at least one processor (1112) to:
determine whether a mobile device (130) unique identifier is received from the mobile device (130), wherein the mobile device (130) determines whether the mobile device (130) is in a sub-location of the access area (102) of the restricted area and calculates a mobile device unique identifier, wherein the mobile device unique identifier is calculated from the broadcasted signals received from the at least one beacon for the sub-location, wherein the mobile device unique identifier is unique to a current location and time of the mobile device, wherein the mobile device unique identifier is calculated based on at least the major ID and the minor ID; and
determine whether the mobile device (130) is in the sub-location of the plurality of sub-locations from mobile device unique identifier, wherein the backend server and the mobile device store a same function for calculating the mobile device unique identifier, wherein the backend server determines if the received mobile device unique identifier matches a mobile device ID calculated by the backend server to determine whether to continue with the process for the validation,
in response to determining the mobile device identifier is received and the mobile device (130) is in the sub-location, determine whether a user associated with the mobile device is validated to access the restricted area (101), and
in response to determining the user (131) is validated, send a validation signal to at least one of the actuator driver circuit (1131) and the mobile device (130) to invoke opening the physical barrier (160) for the sub-location;
wherein the backend server (1100) is connected to the actuator circuit (1131) and the mobile device /130) via a network (1101).

8. The access control system (100) of claim 7, wherein the mobile device (130) detects when it is in the sub-location and enters into an activation mode to send location information for the sub-location and user validation information to the backend server (1100);
wherein the mobile device only sends the user validation information to the backend server (1100) when the mobile device (130) is in the activation mode;
wherein the backend server (1100) sends the validation signal to the mobile device (130) to invoke opening of the physical barrier (160), and the mobile device (130) sends a signal to the actuator driver circuit (1131) to open the physical barrier (160); and
wherein the mobile device identifier is unique to the sub-location when compared to identifiers for other sub-locations of the plurality of sub-locations;
and/or
wherein the at least one processor (1112) is to authenticate the mobile device (130) based on a token received from the mobile device (130) before validating the user (131);
wherein the mobile device (130) sends the token for authentication, user credentials for the user (131), and the mobile device unique identifier to the backend server (1100) in a single message, and the at least one processor (1112) is to authenticate the mobile device (130) and validate the user (131) in a single message exchange with the mobile device (130);
and/or
wherein to determine whether a user (131) associated with the mobile device (130) is validated, the at least one processor (1112) is to determine whether a special request is received to validate the user (131) and another user associated with the user (131), and in response to validating the special request, including a special command in the validation signal to invoke opening the physical barrier (160) to allow both users to pass together through the sub-location into the restricted area (101).

## Patentansprüche

1. System (100) für sichere kurzdistanzbasierte Kommunikation und Zugangskontrolle zum Kontrollieren eines Zugangs zu einem beschränkten Bereich (101), das System umfassend:
eine Vielzahl von elektronisch gesteuerten bzw. geregelten beweglichen physischen Barrieren (160), wobei jede elektronisch gesteuerte bzw. geregelte bewegliche physische Barriere (160) an einem anderen Substandort einer Vielzahl von Substandorten eines Zugangskontrollbereichs (102), der dem beschränkten Bereich (101) zugeordnet ist, angeordnet ist;
mindestens ein Beacon (140) für jeden Substandort, wobei jedes Beacon (140) eine Beacon-ID, die eine oder mehrere eindeutige Kennungen umfasst, an seinem Substandort aussendet, wobei die Beacon-ID mindestens eine Major-ID und eine Minor-ID umfasst, wobei die Minor-ID einen bestimmten Substandort angibt; und
eine Vielzahl von Zonenrechnern (150), wobei jeder Zonenrechner (150) einem anderen Substandort der Vielzahl von Substandorten örtlich zugeordnet ist und jeder Zonenrechner (150) umfasst:
eine Aktuator-Treiberschaltung (170) zum Steuern bzw. Regeln einer Aktivierung der physischen Barriere für den Substandort des Zonenrechners (150);
eine Kurzdistanz-Kommunikationsschnittstelle (620b-c) zum Kommunizieren mit einer Mobilvorrichtung (130), wenn sich die Mobilvorrichtung (130) an dem Substandort des Zonenrechners (150) befindet; und
einen Prozessor (612) zum Ermitteln, ob sich die Mobilvorrichtung (130) an dem Substandort des Zonenrechners (150) befindet, und zum Ermitteln, ob eine eindeutige Kennung der Mobilvorrichtung über die Kurzdistanz-Kommunikationsschnittstelle (620b-c) von der Mobilvorrichtung (130) empfangen wird, wobei die eindeutige Kennung der Mobilvorrichtung anhand der ausgesendeten Beacon-ID berechnet wird, die ausgehend von dem mindestens einen Beacon (140) für den Substandort des Zonenrechners (150) empfangen wird, wobei die eindeutige Kennung der Mobilvorrichtung für einen aktuellen Standort und eine Uhrzeit der Mobilvorrichtung eindeutig ist, wobei die eindeutige Kennung der Mobilvorrichtung zumindest basierend auf der Major-ID und der Minor-ID berechnet wird;
wobei der Prozessor, als Reaktion auf ein Ermitteln, dass sich die Mobilvorrichtung (130) an dem Substandort des Zonenrechners (150) befindet, und als Reaktion auf ein Ermitteln, dass die Kennung der Mobilvorrichtung empfangen wird, ermittelt, ob ein Benutzer (131), der der Mobilvorrichtung (130) zugeordnet ist, zum Zugang zu dem beschränkten Bereich (101) validiert ist, wobei der Zonenrechner und die Mobilvorrichtung eine gleiche Funktion zum Berechnen der eindeutigen Kennung der Mobilvorrichtung speichern, wobei der Zonenrechner ermittelt, ob die empfangene eindeutige Kennung der Mobilvorrichtung mit einer von dem Zonenrechner berechneten Mobilvorrichtungs-ID übereinstimmt, um zu ermitteln, ob der Prozess für die Validierung fortgesetzt werden soll, und
als Reaktion auf ein Ermitteln, dass der Benutzer (131) validiert ist, ein Signal an die Aktuator-Treiberschaltung (170) zu senden, um ein Öffnen oder Schließen der physischen Barriere (160) für den Substandort des Zonenrechners (150) zu veranlassen.

2. System (100) für sichere kurzdistanzbasierte Kommunikation und Zugangskontrolle nach Anspruch 1, wobei die Kennung der Mobilvorrichtung für den aktuellen Standort der Mobilvorrichtung (130) eindeutig ist, wenn diese die Kennung der Mobilvorrichtung an den Zonenrechner (150) des Substandorts übermittelt, an dem sich die Mobilvorrichtung (130) befindet;
wobei der Prozessor (612), als Reaktion auf ein Ermitteln, das sich die Mobilvorrichtung (130) an dem Substandort des Zonenrechners (150) befindet, einen oder mehrere Verschlüsselungsschlüssel verwendet, um Nachrichten sicher an die Mobilvorrichtung (130) zu übermitteln; und wobei die sicher übermittelten Nachrichten die Mobilvorrichtung (130) und den Zonenrechner (150) authentifizieren; und wobei, wenn die Mobilvorrichtung (130) authentifiziert ist, die sicher übermittelten Nachrichten Nachrichten zum Validieren der Mobilvorrichtung (130) umfassen;
und/oder
wobei ein Entgelt in Verbindung mit einem Zugang zu dem beschränkten Bereich (101) von einem Benutzerkonto gezahlt wird, um den Benutzer (131) zu validieren.

3. System (100) für sichere kurzdistanzbasierte Kommunikation und Zugangskontrolle nach Anspruch 1 oder Anspruch 2, wobei die Mobilvorrichtung (130) umfasst:
mindestens eine Kurzdistanz-Kommunikationsschnittstelle (601b-c) zum Empfangen einer Beacon-Kennung von mindestens einem Beacon;
einen Datenspeicher, der ein Betriebssystem (603) und eine Zugangskontrollanwendung (132) speichert;
einen Prozessor (602), der das Betriebssystem (603) ausführt, wobei das Betriebssystem (603) ermittelt, ob die empfangene Beacon-ID eine registrierte eindeutige Beacon-Kennung ist, und der als Reaktion auf ein Ermitteln, dass die empfangene Beacon-ID registriert ist, die auf der Mobilvorrichtung (130) gespeicherte Zugangskontrollanwendung (132) startet, sofern die Zugangskontrollanwendung (132) nicht bereits läuft, wobei
die Zugangskontrollanwendung (132), als Reaktion darauf, dass sie gestartet wird, durch den Prozessor (602) ausgeführt wird, und die Zugangskontrollanwendung (132) ermittelt, ob sich die Mobilvorrichtung (130) an dem Substandort befindet,
als Reaktion auf ein Ermitteln, dass sich die Mobilvorrichtung (130) an dem Substandort befindet, die eindeutige Kennung der Mobilvorrichtung basierend auf der Beacon-ID berechnet wird, wobei die eindeutige Kennung der Mobilvorrichtung nur für den Substandort gültig ist, an dem sich die Mobilvorrichtung (130) aktuell befindet,
wobei sich die Zugangskontrollanwendung (132) an einer sicheren Kommunikation mit dem Zonenrechner (150) unter Verwendung eines oder mehrerer Schlüssel über die mindestens eine Kurzdistanz-Kommunikationsschnittstelle (601b-c) beteiligt, um den Benutzer (131) zu validieren und einen Zugang zu dem beschränkten Bereich (101) über den Substandort zuzulassen, sofern der Benutzer (131) validiert ist, und
wobei die eindeutige Kennung der Mobilvorrichtung basierend auf einer Signalstärke eines ausgehend von dem mindestens einen Beacon (140) empfangenen Signals, der Major-ID der Beacon-ID und der Minor-ID der Beacon-ID berechnet wird.

4. System (2000) nach Anspruch 1,
das System (2000) ferner umfassend:
eine Vielzahl von Inspektions-Beacons in einem Validierungs- und Durchsetzungsbereich (2010);
einen Durchsetzungsrechner (175), umfassend:
mindestens eine Kurzdistanz-Kommunikationsschnittstelle (630b-c); und
einen Prozessor (632) zum Veranlassen eines Inspektions-Beacons (176) der Vielzahl von Inspektions-Beacons, ein Inspektionssignal über mindestens eine Kurzdistanz-Kommunikationsschnittstelle (630b-c) auszusenden, wobei, als Reaktion darauf, dass eine zweite Mobilvorrichtung (130) das Inspektionssignal empfängt, die zweite Mobilvorrichtung (130) in einen Inspektionsmodus eintritt und eine Entgeltbezahlung auf der zweiten Mobilvorrichtung für ein Entgelt in Verbindung mit dem Validierungs- und Durchsetzungsbereich (2010) deaktiviert, wobei das Deaktivieren einer Entgeltzahlung verhindert, dass ein zweiter Benutzer (131) das Entgelt nur dann zahlen kann, wenn der zweite Benutzer inspiziert wird, und
wobei der Prozessor (632) des Durchsetzungsrechners (175) Inspektionsnachrichten mit der zweiten Mobilvorrichtung (130) über die mindestens eine Kurzdistanz-Kommunikationsschnittstelle (630b-c) austauscht, um zu ermitteln, ob der zweite Benutzer (131) validiert wurde, wenn sich die zweite Mobilvorrichtung (130) im Inspektionsmodus befindet;
wobei das System (2000) mittels eines Inspektionsprozesses ermittelt, ob der zweite Benutzer (131) in dem Validierungs- und Durchsetzungsbereich (2010) eine Validierung durchlaufen hat und für einen Aufenthalt in dem Validierungs- und Durchsetzungsbereich (2010) zugelassen wurde.

5. System (2000) nach Anspruch 4, wobei, um den Inspektions-Beacon (176) zu veranlassen, das Inspektionssignal auszusenden, der Prozessor (632) in dem Durchsetzungsrechner (175) ein Inspektionsmodussignal an die Vielzahl von Inspektions-Beacons in dem Validierungs- und Durchsetzungsbereich (2010) sendet, und die Vielzahl von Inspektions-Beacons in einen Inspektions-Beacon-Modus eintreten und das Inspektionssignal aussenden.

6. System (2000) nach Anspruch 4 oder Anspruch 5, wobei, als Reaktion darauf, dass die zweite Mobilvorrichtung (130) das Inspektionssignal empfängt, die zweite Mobilvorrichtung (130) eine Inspektions-ID anhand von Informationen in dem Inspektionssignal berechnet, wobei die Inspektions-ID für die zweite Mobilvorrichtung (130) eindeutig ist, und die Inspektions-ID an den Durchsetzungsrechner (175) sendet, und
wobei der Durchsetzungsrechner (175) die Inspektions-ID über die mindestens eine Kurzdistanz-Kommunikationsschnittstelle (630b-c) empfangen soll, und der Prozessor (632) des Durchsetzungsrechners (175) ermitteln soll, ob sich die zweite Mobilvorrichtung (130) in einem Inspektionsbereich des Durchsetzungsrechners (175) befindet, und sich, als Reaktion auf ein Ermitteln, dass sich die zweite Mobilvorrichtung (130) in dem Inspektionsbereich befindet, am Austausch der Inspektionsnachrichten mit der zweiten Mobilvorrichtung (130) unter Verwendung der Inspektions-ID beteiligen soll, um zu ermitteln, ob der zweite Benutzer (131) validiert ist,
und/oder
wobei der Durchsetzungsrechner (175) eine Netzwerkschnittstelle zum Kommunizieren mit einem Backend-Server über mindestens eines, ein Local Area Network und/oder ein Wide Area Network umfasst, und der Prozessor (632) eine Validierungsanforderung an den Backend-Server sendet, um zu ermitteln, ob der zweite Benutzer (131) das Entgelt gezahlt hat,
und/oder
wobei der Durchsetzungsrechner (175) eine Anzeige umfasst, und der Prozessor (632) des Durchsetzungsrechners (175) eine Angabe darüber, ob der zweite Benutzer (131) validiert ist, auf der Anzeige anzeigt, und der Prozessor (632) des Durchsetzungsrechners (175) eine Nachricht an die zweite Mobilvorrichtung (130) mit einer Angabe darüber, ob der zweite Benutzer (131) validiert ist, sendet, und die zweite Mobilvorrichtung (130) den Inspektionsmodus verlassen und eine Entgeltzahlung mittels der zweiten Mobilvorrichtung (131) zulassen soll, nachdem sie die Nachricht mit der Angabe darüber, ob der zweite Benutzer (131) validiert ist, empfangen hat.

7. Zugangskontrollsystem (100) zum Validieren eines Zugangs zu einem beschränkten Bereich, das System umfassend:
eine Vielzahl von elektronisch gesteuerten bzw. geregelten beweglichen physischen Barrieren (160), wobei jede elektronisch gesteuerte bzw. geregelte bewegliche physische Barriere (160) an einem anderen Substandort einer Vielzahl von Substandorten eines Zugangskontrollbereichs (102), der dem beschränkten Bereich (101) zugeordnet ist, angeordnet ist;
eine Aktuator-Treiberschaltung (1131) für jede elektronisch gesteuerte bzw. geregelte bewegliche physische Barriere zum Steuern bzw. Regeln einer Aktivierung der physischen Barriere (160);
mindestens ein Beacon (140) für jeden Substandort, wobei jedes Beacon (140) Signale an seinem Substandort aussendet und die ausgesendeten Signale eine Beacon-ID umfassen, die aus einer oder mehreren eindeutigen Kennungen besteht, wobei die Beacon-ID mindestens eine Major-ID und eine Minor-ID umfasst, wobei die Minor-ID einen bestimmten Substandort angibt;
einen Backend-Server (1100), der mindestens einen Prozessor (1112) umfasst, um:
zu ermitteln, ob eine eindeutige Kennung der Mobilvorrichtung (130) von der Mobilvorrichtung (130) empfangen wird, wobei die Mobilvorrichtung (130) ermittelt, ob sich die Mobilvorrichtung (130) an einem Substandort des Zugangsbereichs (102) des beschränkten Bereichs befindet, und eine eindeutige Kennung der Mobilvorrichtung berechnet, wobei die eindeutige Kennung der Mobilvorrichtung anhand der ausgesendeten Signale, die ausgehend von dem mindestens einen Beacon für den Substandort empfangen werden, berechnet wird, wobei die eindeutige Kennung der Mobilvorrichtung für einen aktuellen Standort und eine Uhrzeit der Mobilvorrichtung eindeutig ist, wobei die eindeutige Kennung der Mobilvorrichtung zumindest basierend auf der Major-ID und der Minor-ID berechnet wird; und
anhand der eindeutigen Kennung der Mobilvorrichtung zu ermitteln, ob sich die Mobilvorrichtung (130) an dem Substandort der Vielzahl von Substandorten befindet, wobei der Backend-Server und die Mobilvorrichtung eine gleiche Funktion zum Berechnen der eindeutigen Kennung der Mobilvorrichtung speichern, wobei der Backend-Server ermittelt, ob die empfangene eindeutige Kennung der Mobilvorrichtung mit einer von dem Backend-Server berechneten Mobilvorrichtungs-ID übereinstimmt, um zu ermitteln, ob der Prozess für die Validierung fortgesetzt werden soll,
als Reaktion auf ein Ermitteln, dass die Kennung der Mobilvorrichtung empfangen wurde und sich die Mobilvorrichtung (130) an dem Substandort befindet, zu ermitteln, ob ein Benutzer, der der Mobilvorrichtung zugeordnet ist, zum Zugang zu dem beschränkten Bereich (101) validiert ist, und
als Reaktion auf ein Ermitteln, dass der Benutzer (131) validiert ist, ein Validierungssignal an mindestens eine, die Aktuator-Treiberschaltung (1131) und/oder die Mobilvorrichtung (130) zu senden, um ein Öffnen der physischen Barriere (160) für den Substandort zu veranlassen;
wobei der Backend-Server (1100) mit der Aktuatorschaltung (1131) und der Mobilvorrichtung (130) über ein Netzwerk (1101) verbunden ist.

8. Zugangskontrollsystem (100) nach Anspruch 7, wobei die Mobilvorrichtung (130) erkennt, wenn sie sich an dem Substandort befindet, und in einen Aktivierungsmodus eintritt, um Standortinformationen für den Substandort und Benutzervalidierungsinformationen an den Backend-Server (1100) zu senden;
wobei die Mobilvorrichtung die Benutzervalidierungsinformationen nur dann an den Backend-Server (1100) sendet, wenn sich die Mobilvorrichtung (130) in dem Aktivierungsmodus befindet;
wobei der Backend-Server (1100) das Validierungssignal an die Mobilvorrichtung (130) sendet, um ein Öffnen der physischen Barriere (160) zu veranlassen, und die Mobilvorrichtung (130) ein Signal an die Aktuator-Treiberschaltung (1131) sendet, um die physische Barriere (160) zu öffnen; und
wobei die Kennung der Mobilvorrichtung, verglichen mit Kennungen für andere Substandorte der Vielzahl von Substandorten, für den Substandort eindeutig ist;
und/oder
wobei der mindestens eine Prozessor (1112) die Mobilvorrichtung (130) basierend auf einem Token authentifizieren soll, das ausgehend von der Mobilvorrichtung (130) empfangen wird, bevor der Benutzer (131) validiert wird;
wobei die Mobilvorrichtung (130) das Token zur Authentifizierung, Benutzerzugangsdaten für den Benutzer (131) und die eindeutige Kennung der Mobilvorrichtung in einer einzigen Nachricht an den Backend-Server (1100) sendet, und der mindestens eine Prozessor (1112) in einem einzigen Nachrichtenaustausch mit der Mobilvorrichtung (130) die Mobilvorrichtung (130) authentifizieren und den Benutzer (131) validieren soll;
und/oder
wobei der mindestens eine Prozessor (1112), um zu ermitteln, ob ein Benutzer (131), der der Mobilvorrichtung (130) zugeordnet ist, validiert ist, ermitteln soll, ob eine spezielle Anforderung zum Validieren des Benutzers (131) und eines anderen Benutzers, der dem Benutzer (131) zugeordnet ist, empfangen wird, und, als Reaktion auf das Validieren der speziellen Anforderung, einen speziellen Befehl in das Validierungssignal aufnehmen soll, um ein Öffnen der physischen Barriere (160) zu veranlassen, um zuzulassen, dass sich beide Benutzer gemeinsam durch den Substandort in den beschränkten Bereich (101) begeben.

## Revendications

1. Système de contrôle d'accès et de communication à base de distance courte sécurisée (100) pour contrôler un accès à une zone restreinte (101), le système comportant :
une pluralité de barrières physiques mobiles contrôlées électroniquement (160), dans lequel chaque barrière physique mobile contrôlée électroniquement (160) est située dans un emplacement secondaire différent parmi une pluralité d'emplacements secondaires d'une zone de contrôle d'accès (102) associée à la zone restreinte (101) ;
au moins une balise (140) pour chaque emplacement secondaire, dans lequel chaque balise (140) diffuse un identifiant de balise, incluant un ou plusieurs identifiants uniques, dans son emplacement secondaire, dans lequel l'identifiant de balise inclut au moins un identifiant majeur et un identifiant mineur, dans lequel l'identifiant mineur indique un emplacement secondaire particulier ; et
une pluralité d'ordinateurs de zone (150), dans lequel chaque ordinateur de zone (150) est associé localement à un emplacement secondaire différent parmi la pluralité d'emplacements secondaires et chaque ordinateur de zone (150) comporte :
un circuit d'attaque d'actionneur (170) pour contrôler l'actionnement de la barrière physique pour l'emplacement secondaire de l'ordinateur de zone (150) ;
une interface de communication à distance courte (620b-c) pour communiquer avec un dispositif mobile (130) si le dispositif mobile (130) est dans l'emplacement secondaire de l'ordinateur de zone (150) ; et
un processeur (612) pour déterminer si le dispositif mobile (130) est dans l'emplacement secondaire de l'ordinateur de zone (150) et déterminer si un identifiant unique de dispositif mobile est reçu de la part du dispositif mobile (130) via l'interface de communication à distance courte (620b-c), dans lequel l'identifiant unique de dispositif mobile est calculé à partir de l'identifiant de balise diffusé, reçu de la part de la au moins une balise (140) pour l'emplacement secondaire de l'ordinateur de zone (150), dans lequel l'identifiant unique de dispositif mobile est unique à un emplacement et un temps actuels du dispositif mobile, dans lequel l'identifiant unique de dispositif mobile est calculé sur la base d'au moins l'identifiant majeur et l'identifiant mineur ;
en réponse à la détermination que le dispositif mobile (130) est dans l'emplacement secondaire de l'ordinateur de zone (150) et en réponse à la détermination que l'identifiant de dispositif mobile est reçu, le processeur détermine si un utilisateur (131) associé au dispositif mobile (130) est validé pour accéder à la zone restreinte (101), dans lequel l'ordinateur de zone et le dispositif mobile stockent une même fonction pour calculer l'identifiant unique de dispositif mobile, dans lequel l'ordinateur de zone détermine si l'identifiant unique de dispositif mobile reçu correspond à un identifiant de dispositif mobile calculé par l'ordinateur de zone pour déterminer s'il convient de continuer le processus pour la validation et
en réponse à la détermination que l'utilisateur (131) est validé, envoyer un signal au circuit d'attaque d'actionneur (170) pour invoquer une ouverture ou une fermeture de la barrière physique (160) pour l'emplacement secondaire de l'ordinateur de zone (150).

2. Système de contrôle d'accès et de communication à base de distance courte sécurisée (100) selon la revendication 1, dans lequel l'identifiant de dispositif mobile est unique à l'emplacement actuel du dispositif mobile (130) lorsqu'il transmet l'identifiant de dispositif mobile à l'ordinateur de zone (150) de l'emplacement secondaire où est situé le dispositif mobile (130) ;
dans lequel le processeur (612) utilise une ou plusieurs clés de cryptage pour transmettre des messages de façon sécurisée au dispositif mobile (130), en réponse à la détermination que le dispositif mobile (130) est dans l'emplacement secondaire de l'ordinateur de zone (150) ; et dans lequel les messages transmis de façon sécurisée authentifient le dispositif mobile (130) et l'ordinateur de zone (150) ; et si le dispositif mobile (130) est authentifié, les messages transmis de façon sécurisée incluent des messages pour valider le dispositif mobile (130) ;
et/ou
dans lequel un prix associé à l'accès à la zone restreinte (101) est payé à partir d'un compte utilisateur pour valider l'utilisateur (131).

3. Système de contrôle d'accès et de communication à base de distance courte sécurisée (100) selon la revendication 1 ou la revendication 2, dans lequel le dispositif mobile (130) comporte :
au moins une interface de communication à distance courte (601b-c) pour recevoir un identifiant de balise à partir d'au moins une balise ;
un stockage de données stockant un système d'exploitation (603) et une application de contrôle d'accès (132) ;
un processeur (602) exécutant le système d'exploitation (603), dans lequel le système d'exploitation (603) détermine si l'identifiant de balise reçu est un identifiant unique de balise enregistré et, en réponse à la détermination que l'identifiant de balise reçu est enregistré, lançant l'application de contrôle d'accès (132) stockée sur le dispositif mobile (130) si l'application de contrôle d'accès (132) n'est pas déjà en train de s'exécuter, dans lequel
l'application de contrôle d'accès (132), en réponse au fait qu'elle est lancée, est exécutée par le processeur (602) et l'application de contrôle d'accès (132) détermine si le dispositif mobile (130) est à l'emplacement secondaire,
en réponse à la détermination que le dispositif mobile (130) est à l'emplacement secondaire, le calcul de l'identifiant unique de dispositif mobile sur la base de l'identifiant de balise, dans lequel l'identifiant unique de dispositif mobile est uniquement valide pour l'emplacement secondaire où est actuellement situé le dispositif mobile (130),
dans lequel l'application de contrôle d'accès (132) s'engage dans une communication sécurisée avec l'ordinateur de zone (150) à l'aide d'une ou de plusieurs clés via la au moins une interface de communication à distance courte (601b-c) pour valider l'utilisateur (131) et autoriser l'accès à la zone restreinte (101) à travers l'emplacement secondaire si l'utilisateur (131) est validé et
dans lequel l'identifiant unique de dispositif mobile est calculé sur la base de l'intensité de signal d'un signal reçu à partir de la au moins une balise (140), de l'identifiant majeur de l'identifiant de balise et de l'identifiant mineur de l'identifiant de balise.

4. Système (2000) selon la revendication 1,
le système (2000) comportant en outre :
une pluralité de balises d'inspection dans une zone de validation et de mise en application (2010) ;
un ordinateur de mise en application (175) comportant :
au moins une interface de communication à distance courte (630b-c) ; et
un processeur (632) pour invoquer une balise d'inspection (176) parmi la pluralité de balises d'inspection afin de diffuser un signal d'inspection via au moins une interface de communication à distance courte (630b-c), dans lequel, en réponse au fait qu'un second dispositif mobile (130) reçoit le signal d'inspection, le second dispositif mobile (130) entre dans un mode d'inspection et désactive l'achat de prix sur le second dispositif mobile pour un prix associé à la zone de validation et de mise en application (2010), dans lequel la désactivation de l'achat de prix empêche un second utilisateur (131) de pouvoir payer le prix uniquement lorsque le second utilisateur est en cours d'inspection et
le processeur (632) de l'ordinateur de mise en application (175) échange des messages d'inspection avec le second dispositif mobile (130) via la au moins une interface de communication à distance courte (630b-c) pour déterminer si le second utilisateur (131) a été validé lorsque le second dispositif mobile (130) est en mode d'inspection ;
dans lequel le système (2000) détermine, à travers un processus d'inspection, si le second utilisateur (131) dans la zone de validation et de mise en application (2010) est passé par la validation et a été approuvé pour être dans la zone de validation et de mise en application (2010).

5. Système (2000) selon la revendication 4, dans lequel, pour invoquer la balise d'inspection (176) pour diffuser le signal d'inspection, le processeur (632) dans l'ordinateur de mise en application (175) envoie un signal de mode d'inspection à la pluralité de balises d'inspection dans la zone de validation et de mise en application (2010) et la pluralité de balises d'inspection entrent dans un mode de balise d'inspection et diffusent le signal d'inspection.

6. Système (2000) selon la revendication 4 ou la revendication 5, dans lequel, en réponse au fait que le second dispositif mobile (130) reçoit le signal d'inspection, le second dispositif mobile (130) calcule un identifiant d'inspection à partir d'informations dans le signal d'inspection, dans lequel l'identifiant d'inspection est unique au second dispositif mobile (130), et envoie l'identifiant d'inspection à l'ordinateur de mise en application (175) et
dans lequel l'ordinateur de mise en application (175) doit recevoir l'identifiant d'inspection via la au moins une interface de communication à distance courte (630b-c) et le processeur (632) de l'ordinateur de mise en application (175) doit déterminer si le second dispositif mobile (130) est dans une zone d'inspection de l'ordinateur de mise en application (175) et, en réponse à la détermination que le second dispositif mobile (130) est dans la zone d'inspection, s'engager dans l'échange des messages d'inspection avec le second dispositif mobile (130) à l'aide de l'identifiant d'inspection pour déterminer si le second utilisateur (131) est validé
et/ou
dans lequel l'ordinateur de mise en application (175) comporte une interface réseau pour communiquer avec un serveur d'arrière-plan via au moins un élément parmi un réseau local et un réseau étendu et le processeur (632) envoie une requête de validation au serveur d'arrière-plan pour déterminer si le second utilisateur (131) a payé le prix
et/ou
dans lequel l'ordinateur de mise en application (175) comporte un affichage et le processeur (632) de l'ordinateur de mise en application (175) affiche une indication consistant à savoir si le second utilisateur (131) est validé sur l'affichage et le processeur (632) de l'ordinateur de mise en application (175) envoie un message au second dispositif mobile (130) avec une indication consistant à savoir si le second utilisateur (131) est validé et le second dispositif mobile (130) doit quitter le mode d'inspection et permettre le paiement du prix à travers le second dispositif mobile (131) après réception du message avec l'indication consistant à savoir si le second utilisateur (131) est validé.

7. Système de contrôle d'accès (100) pour valider l'accès à une zone restreinte, le système comportant :
une pluralité de barrières physiques mobiles contrôlées électroniquement (160), dans lequel chaque barrière physique mobile contrôlée électroniquement (160) est située dans un emplacement secondaire différent parmi une pluralité d'emplacements secondaires d'une zone de contrôle d'accès (102) associée à la zone restreinte (101) ;
un circuit d'attaque d'actionneur (1131) pour chaque barrière physique mobile contrôlée électroniquement pour contrôler l'actionnement de la barrière physique (160) ;
au moins une balise (140) pour chaque emplacement secondaire, dans lequel chaque balise (140) diffuse des signaux dans son emplacement secondaire et les signaux diffusés incluent un identifiant de balise composé d'un ou de plusieurs identifiants uniques, dans lequel l'identifiant de balise inclut au moins un identifiant majeur et un identifiant mineur, dans lequel l'identifiant mineur indique un emplacement secondaire particulier ;
un serveur d'arrière-plan (1100) incluant au moins un processeur (1112) pour :
déterminer si un identifiant unique de dispositif mobile (130) est reçu à partir du dispositif mobile (130), dans lequel le dispositif mobile (130) détermine si le dispositif mobile (130) est dans un emplacement secondaire de la zone d'accès (102) de la zone restreinte et calcule un identifiant unique de dispositif mobile, dans lequel l'identifiant unique de dispositif mobile est calculé à partir des signaux diffusés, reçus à partir de la au moins une balise pour l'emplacement secondaire, dans lequel l'identifiant unique de dispositif mobile est unique à un emplacement et un temps actuels du dispositif mobile, dans lequel l'identifiant unique de dispositif mobile est calculé sur la base d'au moins l'identifiant majeur et l'identifiant mineur ; et
déterminer si le dispositif mobile (130) est dans l'emplacement secondaire parmi la pluralité d'emplacements secondaires à partir d'un identifiant unique de dispositif mobile, dans lequel le serveur d'arrière-plan et le dispositif mobile stockent une même fonction pour calculer l'identifiant unique de dispositif mobile, dans lequel le serveur d'arrière-plan détermine si l'identifiant unique de dispositif mobile reçu correspond à un identifiant de dispositif mobile calculé par le serveur d'arrière-plan pour déterminer s'il faut continuer le processus pour la validation,
en réponse à la détermination que l'identifiant de dispositif mobile est reçu et que le dispositif mobile (130) est dans l'emplacement secondaire, déterminer si un utilisateur associé au dispositif mobile est validé pour accéder à la zone restreinte (101) et
en réponse à la détermination que l'utilisateur (131) est validé, envoyer un signal de validation à au moins un élément parmi le circuit d'attaque d'actionneur (1131) et le dispositif mobile (130) pour invoquer une ouverture de la barrière physique (160) pour l'emplacement secondaire ;
dans lequel le serveur d'arrière-plan (1100) est connecté au circuit d'actionneur (1131) et au dispositif mobile (130) via un réseau (1101).

8. Système de contrôle d'accès (100) selon la revendication 7, dans lequel le dispositif mobile (130) détecte le moment où il est dans l'emplacement secondaire et entre dans un mode d'activation pour envoyer des informations de localisation pour l'emplacement secondaire et des informations de validation d'utilisateur au serveur d'arrière-plan (1100) ;
dans lequel le dispositif mobile n'envoie les informations de validation d'utilisateur au serveur d'arrière-plan (1100) que lorsque le dispositif mobile (130) est dans le mode d'activation ;
dans lequel le serveur d'arrière-plan (1100) envoie le signal de validation au dispositif mobile (130) pour invoquer une ouverture de la barrière physique (160) et le dispositif mobile (130) envoie un signal au circuit d'attaque d'actionneur (1131) pour ouvrir la barrière physique (160) ; et
dans lequel l'identifiant de dispositif mobile est unique à l'emplacement secondaire lors d'une comparaison avec des identifiants pour d'autres emplacements secondaires parmi la pluralité d'emplacements secondaires ;
et/ou
dans lequel le au moins un processeur (1112) doit authentifier le dispositif mobile (130) sur la base d'un jeton reçu de la part du dispositif mobile (130) avant de valider l'utilisateur (131) ;
dans lequel le dispositif mobile (130) envoie le jeton pour authentification, des références d'utilisateur pour l'utilisateur (131) et l'identifiant unique de dispositif mobile au serveur d'arrière-plan (1100) dans un seul message et le au moins un processeur (1112) doit authentifier le dispositif mobile (130) et valider l'utilisateur (131) dans un échange de message unique avec le dispositif mobile (130) ;
et/ou
dans lequel, pour déterminer si un utilisateur (131) associé au dispositif mobile (130) est validé, le au moins un processeur (1112) doit déterminer si une requête spéciale est reçue pour valider l'utilisateur (131) et un autre utilisateur associé à l'utilisateur (131) et, en réponse à la validation de la requête spéciale, l'inclusion d'une instruction spéciale dans le signal de validation pour invoquer l'ouverture de la barrière physique (160) pour permettre aux deux utilisateurs de passer ensemble à travers l'emplacement secondaire jusque dans la zone restreinte (101).
